# FASCICULE DE BREVET EUROPEEN

(11) **EP 1 907 875 B1**
(45) Date de publication et mention de la délivrance du brevet: **03.11.2010**
(21) Numéro de dépôt: 06764251.2
(22) Date de dépôt: 21.07.2006
(51) Int. Cl.: G01S 1/68, G01S 1/00, G01S 5/14

(54) **PROCEDE, DISPOSITIF ET SYSTEME DE POSITIONNEMENT PAR RELAIS PULSE MULTI SYNCHRONE MULTI-SOURCE**
POSITIONSBESTIMMUNGSVERFAHREN, -EINRICHTUNG UND -SYSTEM MIT SYNCHRON GEPULSTEM MEHRQUELLEN-RELAIS
POSITIONING METHOD, DEVICE AND SYSTEM USING MULTI-SOURCE SYNCHRONOUS PULSED RELAY

(30) Priorité: 22.07.2005 FR 0507824
(43) Date de publication de la demande: 09.04.2008
(73) Titulaire: Pole Star, 31100 Toulouse (FR)
(72) Inventeur: PONCELET, Michèle, F-31470 Fonsorbes (FR); CARLE, Christian, F-31840 Seilh (FR)
(74) Mandataire: Ilgart, Jean-Christophe
(86) Numéro de dépôt international: PCT/EP2006/064541
(87) Numéro de publication internationale: WO 2007/010047

(56) Documents cités:
- WO-A-95/00821
- US-B1- 6 449 558
- US-B1- 6 771 625
- US-B1- 6 813 500

## Description

La présente invention concerne un procédé, un dispositif et un système de positionnement d'un mobile par relais pulsé multi synchrone et multi-source. L'invention vise à augmenter la couverture et les performances d'un système de positionnement fournissant une pluralité de sources émettrices de signaux de télémétries générés à partir d'horloges stables ou de sources auto synchronisées. Les sources sont géométriquement réparties dans l'espace, et on peut connaître par ailleurs leur positionnement dans un référentiel spatial donné. En particulier, l'invention s'applique aux domaines d'utilisation des systèmes globaux de radio navigation par satellites, sans que cela soit une limite de l'invention. L'invention permet de relayer, par une nouvelle source unique, des informations temporelles transmises par la pluralité des sources telles qu'elles ont été reçues ensembles au niveau de la position du relais. Le relais des informations se fait, selon la présente invention sous la forme d'un signal pulsé multi synchrone des instants de réception des marqueurs de temps spécifiques détectés sur les codes de télémétrie des sources.

On connaît différents systèmes de télémétrie basés sur des mesures de temps de propagation, et utilisant la constance de la vitesse de la lumière pour passer du domaine temporel au domaine spatial. Ils utilisent des marqueurs temporels, sous forme d'un code de télémétrie, qui sont émis dans le canal de propagation et peuvent être reconnus en réception après un trajet simple, ou double si un réflecteur ou transpondeur est utilisé. Les datations sur une même échelle de temps local des instants d'émission et de réception de ces marqueurs permettent d'atteindre la distance séparant l'émetteur du récepteur, ou le double de la distance émetteur-récepteur et réflecteur. La précision de la distance obtenue grâce à ces systèmes dépend en particulier de la raideur impulsionnelle du marqueur temporel dans le code de télémétrie, donc de la largeur de bande utilisée tout au long de la chaîne de transmission, de l'émetteur au récepteur en passant par le canal de propagation. L'intégrité de la télémétrie dépend de la qualité de ligne directe du canal de propagation, en visibilité géométrique plutôt que multi trajet, réfraction ou diffraction et de l'absence d'erreur dans la reconnaissance du code de télémétrie. La disponibilité de la télémétrie dépend de l'absence de masquage, d'atténuation ou d'absorption totale du signal sur le chemin géométrique.

On connaît également différents systèmes de positionnement et/ou de navigation qui utilisent des opérations de trilatération ou triangulation à partir d'une pluralité de mesures de télémétrie émanant d'une pluralité de sources bien réparties dans l'espace géométrique à considérer. La précision du positionnement obtenu grâce à ces systèmes de positionnement dépend de la diversité géométrique des sources, de la précision de télémétrie de chacune des mesures à partir de ces sources, et finalement de la précision de positionnement des sources elles-mêmes. L'intégrité du positionnement obtenu au final par l'utilisateur du système dépend de l'intégrité de chacune des mesures de télémétrie et de leur redondance dans l'observabilité spatiale (ou géométrique). La disponibilité du positionnement, pour l'utilisateur, dépend évidemment de la disponibilité d'une pluralité de sources de télémétrie bien réparties géométriquement, en tout point de la couverture du lieu où l'utilisateur a à se positionner, et de la disponibilité de leurs signaux, en visibilité directe et avec une puissance suffisante à la réception.

Parmi ces systèmes de positionnement, on retient à titre d'exemples préférentiels les plus globaux et les plus restreints d'entre eux en terme de couverture, à savoir les systèmes globaux de navigation par satellites (acronyme GNSS) d'une part pour une couverture mondiale, et les réseaux d'émetteurs récepteurs ultra large bande, d'autre part, typiquement utilisés pour la couverture d'un bâtiment.

D'autres systèmes et en particulier les systèmes et réseaux cellulaires de téléphonie, ou autres réseaux de télécommunication, Wi-Fi Bluetooth offrent aussi un potentiel pour le positionnement télémétrique du fait du nombre de sources émettrices et de la largeur de bande de leurs signaux. Cependant, la fonction de télémétrie n'est pas leur fonction principale, et leurs signaux utilisent le potentiel de cette ressource fréquentielle pour passer un débit de données informatives qui va à l'encontre de la précision de télémétrie. Dans ces conditions ils n'offrent pas les performances optimales en positionnement à puissance de signal équivalente.

La couverture mondiale des systèmes de positionnement à précision métrique est obtenue grâce aux systèmes globaux de navigation par satellites, dits GNSS, comme GPS (acronyme de Global Positioning system pour système global de positionnement), GLONASS , et les futurs systèmes comme Galileo , Beidou , Compass , QZSS ... Ils offrent une pluralité redondante de sources de mesures télémétriques en orbite autour de la terre, apportant ainsi, pour le besoin de positionnement, une diversité géométrique favorable sur l'ensemble du globe. La qualité de leurs modèles orbitaux, la stabilité de leurs horloges, et la raideur impulsionnelle des marqueurs temporels de leurs signaux télémétriques, émis spécifiquement par leurs satellites, dits signaux de navigation, en font des systèmes majeurs dans la résolution du problème de positionnement géographique sur la terre, base du problème antique de la navigation ou encore du problème actuel de la mobilité. Les performances de précision et de disponibilité de positionnement obtenues grâce à ces systèmes sont de l'ordre de 5 à 10 m en 3 dimensions à 99% partout dans le monde en ciel ouvert. La simplicité d'utilisation de ces signaux, pour un utilisateur muni d'un simple récepteur GNSS de ces signaux, a autorisé un déploiement phénoménal des applications basées sur l'utilisation de ces sources de télémétries, que ce soit pour le positionnement et la localisation d'équipements ou d'êtres humains dans un même référentiel spatiotemporel, de la navigation et du guidage de véhicules, de la synchronisation d'équipements distants, de la détermination d'attitude d'engins, du géo référencement précis de toute sorte de phénomènes ou infrastructures, et d'autres applications encore.

Cependant, les systèmes GNSS émettent des signaux de faibles puissances lorsqu'ils atteignent la terre, et du fait de l'étalement du spectre utilisé, ils sont noyés dans le bruit. La technique de désétalement du spectre, par corrélation avec une réplique du code de télémétrie, dans le traitement de signal du récepteur, apporte un gain de traitement, dit gain d'étalement, qui permet de ramener un rapport signal sur bruit favorable à la reconnaissance des fronts de modulation du signal, ces derniers étant à l'origine de la lecture du temps d'émission. Mais il existe peu de marge entre le gain d'étalement disponible et celui qui est nécessaire, si bien que ces systèmes sont peu disponibles dans des environnements difficiles tels que les canyons urbains ou à l'intérieur de bâtiments où les signaux utilisés, d'une vingtaine de MHz en bande L ou C, sont très atténués par l'environnement du récepteur. De plus, la présence dans ces lieux des multi trajets, liés aux phénomènes de réflexion et de diffraction, que subissent séparément les signaux satellites, altère la précision et l'intégrité du positionnement.

Ces défauts réduisent nettement les performances du positionnement GNSS en regard des performances obtenues en ciel clair, que ce soit en terme de précision, de disponibilité, d'intégrité ou de continuité de service, et en conséquence complexifie largement les méthodes à mettre en oeuvre dans le grand nombre d'applications qui veulent offrir leurs services en tout environnement, de l'environnement rural, à l'environnement souterrain, en passant par le centre d'une vieille ville, ou un bâtiment quelconque.

Le document US 6,054,950 décrit un système de positionnement local, de grande précision, basé sur la trilatération de signaux télémétriques à partir d'une pluralité de sources fixes émettant des signaux de télémétrie pulsés en ultra large bande vers un récepteur capable de la résolution de position. Ce document annonce une couverture de plusieurs kilomètres et peut fonctionner dans des zones construites compte tenu des propriétés de propagation des signaux ultra large bande utilisés. Le système décrit ne nécessite pas d'horloges stables mais utilise un signal pulsé de synchronisation émis par l'une des sources, pouvant servir à synchroniser les autres sources et/ou servir de pivot sur des calculs de différences de temps d'arrivée.

Le document US 6,707,424 décrit un système qui intègre les deux systèmes de positionnement et de navigation dans une seule unité qui peut être utilisée en ciel clair ou hors de la visibilité des satellites. Dans ce document, le récepteur GNSS est intégré à un récepteur TM-UWB (Time Modulated Ultra Wide Band pour Ultra Large Bande modulée en temps) qui travaille avec une pluralité de balises fixes de position connues. Le document décrit une méthode et une logique de passage d'un des systèmes de positionnement à l'autre.

Ces deux méthodes permettent des positionnements dans des zones mal couvertes par GNSS et la deuxième permet d'atteindre une augmentation de la couverture des GNSS vers des zones couvertes, mais demande une infrastructure conséquente, avec la nécessité de déployer au moins quatre balises pour couvrir n'importe quelle zone, un grand nombre de nouveaux signaux et n'offre pas une transparence adéquate entre les deux systèmes.

D'autres méthodes vont être citées rapidement, qui tentent d'augmenter la couverture et la disponibilité de la fonction de positionnement par satellite. On parlera en premier lieu des pseudolites. Ce sont des générateurs de signaux de même type que les satellites, en ce sens qu'ils ont une source horloge de très haute qualité, synchronisée au temps système GNSS, et une structure de signal équivalente en porteuse code et données, respectant les mêmes proportionnalités. Ils apportent de nouvelles sources de mesures et ont l'avantage de ne pas nécessiter de modifications (ou peu) au niveau du récepteur. Mais, ils demandent une infrastructure chère, en particulier à cause du besoin d'horloge, ne sont pas adaptés pour résoudre le besoin d'une ville ou d'un bâtiment sauf à en multiplier leur nombre, et surtout ils causent des problèmes d'effets « proche-lointain » dans la réception qui causent aux récepteurs GNSS de nouveaux problèmes de réception pour les signaux satellites directs. Pour réduire ces effets « proche-lointain » au niveau du récepteur, ils sont rendus pulsés, mais en conservant la mise en forme code porteuse, de telle sorte que la propagation n'en est pas réellement améliorée.

On parlera en deuxième lieu des relais de signaux GNSS. Dans ce cas, les signaux satellites passent par un système transparent, c'es-à-dire sont reçus et amplifiés directement pour être retransmis, sans analyse des signaux. Ces systèmes ne posent pas le problème d'effet « proche lointain » s'ils sont placés dans un lieu confiné, dans la mesure où tous les signaux de satellites sont retransmis en même temps. Mais ils ne permettent pas la transition avec un ou plusieurs satellites reçus directement, donc n'offrent pas la transparence de la transition d'un système direct à un système relayé.

On classe dans une troisième catégorie tous les systèmes dits GNSS assistés (par exemple décrits dans les documents WO 9733382, ou WO2004/008170), qui supposent un transfert de données liées aux systèmes GNSS et qui, liées à une très nette augmentation des ressources de calcul intégrables dans le récepteur, permettent une très nette amélioration de la sensibilité du récepteur GNSS, jusqu'à un gain de presque 30 dB. Ces techniques sont basées sur l'utilisation d'un moyen de télécommunications numériques. Les techniques dérivées sont très nombreuses, et elles ne sont pas déclinées ici. L'augmentation de sensibilité du récepteur améliore la disponibilité en ville et dans les bâtiments, réduisant en particulier les temps d'acquisition, mais ne traite pas les problèmes de multi trajets donc de précision et d'intégrité. Leurs défauts tiennent aussi à la dépendance d'un réseau de communications numériques, et le plus souvent à un lien personnalisé entre le réseau et l'utilisateur, donc un lien saturable, gourmand en débit de données, et qui peut être trop latent pour un grand nombre d'utilisateurs mobiles de dynamique moyenne à forte.

Enfin dans un autre registre, on connaît les applications GNSS qui utilisent l'hybridation des mesures des satellites en visibilité directe avec des mesures provenant d'autres systèmes radio (LORAN, TV..), ou inertielles ou altimétriques dans des algorithme plus ou moins complexes d'hybridation. Le défaut de ces solutions est de ramener autant de défauts inconnus de senseurs que de mesures et, sauf à utiliser des capteurs de très haut- qualité donc très chers, ils augmentent le rang du système d'inconnues à résoudre. En effet les mesures combinées ne sont pas homogènes (mesures radio non synchronisées, mesures de vitesse et cap au lieu de mesures de distances, ou encore mesures barométriques) et ne répondent pas au même type de propagations d'erreurs, ce qui complexifie nettement la problématique. De plus, toutes ces solutions posent des problèmes d'installation et de maintenance, et quelque fois de sérieux sauts de positions entre le positionnement pur GNSS et le positionnement hybride.

Le document US-B-6813500 décrit un système de positionnement utilisant des satellites GPS et des pseudolites. Les pseudolites transmettent des signaux de navigation sous forme de codes de télémétrie synchronisés avec le temps GPS et découpés par des fenêtres temporelles.

La présente invention vise à remédier à ces inconvénients.

Les inconvénients que la présente invention permet de pallier, concernent plus généralement les défauts de disponibilité, de précision et d'intégrité d'une solution de positionnement, basée sur des signaux de positionnement provenant d'une pluralité de sources, dans un environnement où des atténuations, masquages et multi trajets peuvent intervenir sur les chemins géométriques.

A cet effet, selon un premier aspect, la présente invention vise un procédé de relais pulsé multi synchrone multi-source, **caractérisé en ce que** ledit relais met en oeuvre les étapes suivantes:
- une étape de réception sur au moins un capteur de réception solidaire dudit relais d'au moins un signal de positionnement,
- une étape de traitement d'au moins un signal de positionnement sur au moins un canal dit de réception,
- pour au moins un canal de réception, une étape de génération de pulsations dites canal, synchronisées avec ledit signal de positionnement traité par ledit canal de réception, lesdites pulsations canal étant représentatives à la fois des instants d'émission dudit signal de positionnement et du positionnement dudit moyen de réception du relais,
- une étape de multiplexage et mise en forme temporelle des dites pulsations pour la génération d'un signal pulsé multi synchrone multi source, et
- une étape d'émission, par au moins un moyen d'émission, dudit signal pulsé multi synchrone multi source.

Grâce à ces dispositions, le relais génère un signal portant lui-même les informations de synchronisation du relais avec chacune des sources de signaux de positionnement, d'où le nom de signal multi synchrone et multi source. Ce signal permet de relayer localement l'essentiel de la partie informative du positionnement en conservant, sur un même signal, une information sur la diversité géométrique des sources. Le fait de relayer toutes les sources de télémétrie dans un même signal permet de porter dans un mode commun d'erreur le supplément de chemin géométrique, apporté par le relais vers la cible finale du positionnement. Ce mode commun est alors intégré dans la synchronisation de la cible finale par rapport au réseau de sources.

Selon des caractéristiques particulières, le signal pulsé multi synchrone multi-source est représentatif d'au moins une source parmi une pluralité de sources de signaux de positionnement en relayant au moins une partie des marqueurs temporels prédéterminés, choisis parmi les transitions de codes dits de télémétrie, lesdits codes de télémétrie étant générés et émis par ladite source grâce à une horloge dite de source.

Grâce à ces dispositions, le signal pulsé multi synchrone multi source permet de relayer localement l'essentiel de la partie informative de la télémétrie, relative à son horloge de source, telle qu'elle est reçue au niveau du relais, sans transmettre le support non informatif, déjà connu du récepteur tel que le code de télémétrie lui-même.

Selon des caractéristiques particulières, le signal pulsé multi synchrone multi source est représentatif d'au moins une source parmi une pluralité de sources de signaux de positionnement en relayant au moins une partie des marqueurs temporels prédéterminés sur des cycles de porteuse, lesdits cycles de porteuse ayant été marqués par une modulation spécifique au niveau de la source dans un but de télémétrie et étant alors représentatifs de ladite horloge de source.

Grâce à ces dispositions, des échelles de temps sources à unités de temps plus courtes sont prises en compte, pour une granularité spatiale en rapport avec des applications spécifiques telle la détermination d'attitude, par exemple, ou des corrections bi fréquences.

Selon des caractéristiques particulières, ladite étape de traitement comporte, pour au moins un canal, une étape de génération d'une horloge virtuelle, composite d'une multiplicité desdites horloges de sources.

Grâce à ces dispositions, la cible finale du positionnement peut se synchroniser directement avec l'horloge virtuelle composite du réseau de sources de télémétrie, ou échelle de temps système, et les sources elles-mêmes n'ont pas le besoin d'être physiquement synchronisées lorsqu'elles sont stables, comme c'est le cas des systèmes GNSS par exemple.

Selon des caractéristiques particulières, ladite étape de traitement comporte un contrôle d'intégrité dit canal, l'étape de génération et/ou l'étape de multiplexage dépendant du résultat dudit contrôle d'intégrité canal par exclusion dudit canal ou inclusion d'un indice de confiance.

Grâce à ces dispositions, le relais peut également servir, toujours dans le cas de GNSS, d'élément local d'intégrité, composante jugée fort utile dans le cas du système Galileo pour des utilisateurs civils fort demandeur de performances garanties. Les effets redoutés qui sont alors surveillés par le relais sont des effets locaux de multi trajet et/ou d'interférence locale intra systèmes ou inter systèmes. Dans un même temps, le relais peut également supprimer la retransmission des informations venant d'un satellite non intègre.

Selon des caractéristiques particulières, le contrôle d'intégrité canal détecte au moins l'une des conditions suivantes :
- détection d'un multi trajet dans l'étape de traitement,
- détection d'une interférence entre signaux de positionnement, et/ou entre le signal de positionnement et un signal interférant autre, en particulier une raie spectrale parasitaire et
- détection d'une alerte ou autre information représentative de la non intégrité des informations portées dans au moins un desdits signaux de positionnement.

Grâce à ces dispositions, le relais prend en compte la détection des événements redoutés caractéristiques des utilisations urbaines ou à l'intérieur des bâtiments pour une plus grande fiabilité.

Selon des caractéristiques particulières, le procédé met en oeuvre, en supplément sur un canal, une étape de contrôle d'intégrité dit relais, représentative de la cohérence de l'information reçue sur une pluralité de canaux, l'étape de génération et/ou l'étape de multiplexage dépendant du résultat dudit contrôle d'intégrité relais par exclusion d'un ou plusieurs canaux ou par inclusion d'un indice de confiance.

Grâce à ces dispositions, le relais contrôle lui-même l'intégrité des informations qu'il diffuse, et porte une information d'évaluation de performance de précision et d'intégrité locale du service de positionnement. Cette dernière valeur est présentée comme un indice de confiance, c'est-à-dire un pourcentage de réussite d'un positionnement dans une limite prédéterminée de précision, sur une durée prédéterminée de positionnement continu, ces deux dernières valeurs étant indiquées dans le document de standard d'interface dudit relais. Par exemple, un indice de confiance annoncé de 99,9 % d'un positionnement à 5 m sur une durée de 5 minutes garantit que le relais a vérifié lui même que les signaux qu'il transmet lui ont permis de réaliser localement cette performance.

Selon des caractéristiques particulières, ladite étape de contrôle d'intégrité relais utilise la redondance des canaux et signaux de positionnement pour détecter et isoler un traitement défectueux sur un canal.

Grâce à ces dispositions, l'estimation de performance est évaluée au plus juste. Selon des caractéristiques particulières, ladite étape de traitement comporte, pour au moins un canal, le calcul d'au moins une correction spatiotemporelle des informations intéressant ledit canal, calculée grâce à des informations traitées sur ledit canal ou sur au moins un des autres canaux.

Grâce à ces dispositions, le relais peut améliorer la précision de positionnement des utilisateurs qu'il fournit en signal de positionnement relayé.

Selon des caractéristiques particulières, ladite correction spatiotemporelle est représentative d'au moins une des informations suivantes :
- temps de propagation et calcul interne audit relais, par ailleurs calibré,
- biais d'horloge locale résolu par rapport à la synchronisation d'une pluralité de sources,
- délai de propagation non représentatif d'une distance géométrique, et en particulier ionosphérique ou troposphérique si la source du signal de positionnement est satellitaire,
- délai d'un multi trajet détecté,
- correction différentielle, en particulier si ledit relais est fixe et de position connue,
- correction d'une dégradation volontaire appliquée à au moins un des signaux de positionnement traités,
- bras de levier interne au relais représentatif d'un différentiel de positions entre lesdits capteurs de réception et/ou entre les capteurs de réception et le moyen d'émission et
- l'écart de temps entre une pulsation canal générée sur un canal traitant le signal venant d'un couple dit source - capteur pivot, avec une pulsation canal provenant d'un autre canal qui traite la même source sur un capteur différent et correspondant directement à des observables d'attitude.

Grâce à ces dispositions, les biais internes au relais peuvent être calibré à l'installation et être transmis pour une meilleure précision à l'utilisation. De plus, le relais peut servir de station de référence, type d'élément local d'augmentation du système de positionnement initial, en particulier dans le cas où les sources sont GNSS, et où le relais est fixe sur une position bien connue, pour une positionnement différentiel à la cible. Dans ce cas, la correction peut être directement appliquée à la pulsation canal ou bien transmise par un autre moyen dans la modulation, et peut supporter les corrections d'erreurs systématiques du système. En particulier, les mêmes corrections que celles des techniques DGPS peuvent être transmises par le relais, comprenant la dégradation volontaire de GPS le cas échéant, les délais ionosphériques et troposphériques pour tout système satellitaire.

Selon des caractéristiques particulières, pour au moins canal, ladite étape de génération des pulsations canal utilise au moins une correction spatiotemporelle, l'instant de génération de la pulsation dépendant de cette correction.

Grâce à ces dispositions, les biais internes au relais, ou d'autres corrections peuvent être corrigés avant émission, pour une plus grande simplicité d'utilisation.

Selon des caractéristiques particulières, l'étape de multiplexage et mise en forme temporelle respecte temporellement la séquence de pulsations canal telle qu'elle a été générée par tout ou partie de la pluralité de canaux.

Grâce à ces dispositions, la position du relais est implicitement passée dans les horloges de sources transmises à travers le signal pulsé multi synchrone multi-source et ne nécessite pas un transfert numérique de l'information.

Selon des caractéristiques particulières, ladite étape de multiplexage et mise en forme temporelle exploite au moins une correction spatiotemporelle, la séquence de pulsations canal à l'origine du signal pulsé multi synchrone multi source dépendant de ladite exploitation de corrections.

Grâce à ces dispositions, la position précise réduite du relais, avec des erreurs de principe réduites, est implicitement passée dans les horloges de sources transmises à travers le signal pulsé multi synchrone multi-source.

Selon des caractéristiques particulières, au cours de ladite étape de génération de pulsation canal et/ou au cours de ladite étape de multiplexage et mise en forme temporelle, on utilise, sur au moins un canal, au moins un codage source pour une modulation d'impulsion ou de train d'impulsions dans le signal pulsé multi synchrone multi source.

Grâce à ces dispositions, le relais peut intégrer aux informations temporelles des données informatives à un débit qui reste faible, afin de conserver au mieux les propriétés nécessaires à la synchronisation.

Selon des caractéristiques particulières, ledit codage source est représentatif dudit relais et/ou d'une donnée fournie par ailleurs audit relais pouvant être représentative d'au moins un des paramètres suivants :
- code d'accès au relais,
- signature du relais,
- code de multiplex si plusieurs relais doivent partager un même canal de transmission en accès multiple, et
- identificateur du capteur utilisé dans le cas d'un relais multi-capteur.

Grâce à ces dispositions, un accès sécurisé aux informations du relais, ou un accès d'abonnés peut être initialisé autour du service fourni par le relais, ou encore un utilisateur peut recevoir plusieurs relais et les distinguer par une technique d'accès multiple à répartition de code, ou encore deux services provenant de deux capteurs différents peuvent être multiplexés sur la même émission du relais.

Selon des caractéristiques particulières, ledit codage source est représentatif d'un récepteur destinataire du signal pulsé multi synchrone multi source à émettre par ledit relais et intègre un code d'accès à celui-ci.

Grâce à ces dispositions, un relais peut émettre des signaux spécifiquement destinés à des utilisateurs particuliers, pour offrir un service différentié ou transmettre des données supplémentaires confidentielles.

Selon des caractéristiques particulières, ledit codage source est représentatif d'un motif de synchronisation.

Grâce à ces dispositions, l'utilisateur acquière plus facilement le signal pulsé multi synchrone multi source, et se synchronise plus facilement sur chaque échelle de source. Dans ces conditions, la sensibilité du récepteur s'en trouve améliorée.

Selon des caractéristiques particulières, ledit codage source est représentatif d'un compteur de pulsation.

Grâce à ces dispositions, le lever des ambiguïtés de temps est facilité à l'utilisateur.

Selon des caractéristiques particulières, ledit codage source est représentatif d'un identificateur de ladite source dudit signal de positionnement.

Grâce à ces dispositions, l'identification de sources est facilitée à l'utilisateur.

Selon des caractéristiques particulières, ledit codage source est représentatif d'une donnée contenue dans la modulation propre dudit signal de positionnement.

Grâce à ces dispositions, et en particulier dans le cas d'une utilisation avec des signaux GNSS, le positionnement des sources est facilité à l'utilisateur.

Selon des caractéristiques particulières, ledit codage source est représentatif dudit indice de confiance évalué par ladite étape de contrôle d'intégrité.

Grâce à ces dispositions, l'indice de confiance déterminé par le relais en regard de sa propre évaluation de performance de précision et/ou d'intégrité est transmis à l'utilisateur, ce qui est très utile aux applications mettant en jeu la sécurité de la vie.

Selon des caractéristiques particulières, ledit codage source est représentatif d'une correction spatiotemporelle.

Grâce à ces dispositions, des corrections sont possibles selon le choix de l'utilisateur.

Selon des caractéristiques particulières, ladite étape de multiplexage et mise en forme ne fonctionne que sur certains slots de temps.

Grâce à ces dispositions, le relais peut économiser l'énergie consommée, et n'émettre que dans des événements particuliers.

Selon des caractéristiques particulières, l'étape de multiplexage et mise en forme temporelle traite les collisions potentielles desdites pulsations canal sur l'échelle des temps.

Grâce à ces dispositions, des sources non physiquement synchronisées peuvent être relayées, et un grand nombre de ces sources non synchronisées peuvent être relayées dans un même signal, ce qui peut être un avantage compte tenu du nombre de satellites et services de positionnement envisagés dans les années futures.

Selon des caractéristiques particulières, l'étape de multiplexage et mise en forme temporelle alterne des slots de multiplexage et mise en forme temporelle des pulsations canal et des slots de multiplexage et mise en forme de données fournies au relais par un moyen de communication externe, comprenant en particulier les données d'un service basé sur la localisation.

Grâce à ces dispositions, le relais peut aussi servir des données à l'équipement cible du système de positionnement avec un débit supérieur, en particulier dans les applications LBS (acronyme de Location Based Services pour services basés sur la localisation).

Selon des caractéristiques particulières, l'étape d'émission utilise la technologie Ultra Large Bande.

Grâce à ces dispositions, la précision de synchronisation est très élevée, le discernement du trajet direct aux multi trajets est plus aisé, et les signaux pénètrent davantage les matériaux.

Selon des caractéristiques particulières, l'étape d'émission utilise la technologie optique.

Grâce à ces dispositions, la précision de synchronisation est très élevée, sans utiliser de ressources spectrales spécifiques.

Selon des caractéristiques particulières, l'étape d'émission utilise une bande de fréquence très large, typiquement 100 MHz dans des bandes réglementairement allouées aux services de radionavigation par satellite, services de radionavigation aéronautiques ou bien de radiolocalisation.

Grâce à ces dispositions, le procédé peut être appliqué aux signaux de positionnement GNSS dans les applications aéronautiques pour une augmentation de la disponibilité du positionnement sur les aéroports, par exemple. La transmission utilise alors des bandes assez larges pour la résolution temporelle et est protégée pour des services liés à la sécurité de la vie.

Selon des caractéristiques particulières, ladite étape de traitement est représentative de la poursuite du signal de positionnement d'un système global de navigation par satellites ou de ses compléments et **caractérisée en ce que** ladite pulsation canal est synchrone de la détection d'une époque du code de télémétrie datant l'émission dans le signal de positionnement.

Grâce à ces dispositions, le relais permet une extension de couverture des systèmes GNSS des zones à ciel ouvert vers des zones à couverture limitée, pour l'équipement terminal du positionnement, tout en gardant une grande simplicité et cohérence de mesures pour une grande transparence dans les transitions.

Selon un deuxième aspect, la présente invention vise un dispositif de relais multi synchrone multi source de signaux de positionnement, **caractérisé en ce qu**'il comporte:
- au moins un moyen de réception pour la réception d'au moins un signal de positionnement,
- un moyen de traitement d'au moins un signal de positionnement sur au moins un canal dit de réception,
- pour au moins un canal de réception, un moyen de génération de pulsations dites canal, synchronisées avec ledit signal de positionnement traité par ledit canal de réception, lesdites pulsations canal étant représentatives à la fois des instants d'émission dudit signal de positionnement et du positionnement dudit capteur de réception du relais,
- un moyen de multiplexage et mise en forme temporelle des dites pulsations pour la génération d'un signal multi synchrone pulsé, et
- au moins un moyen d'émission dudit signal multi synchrone pulsé.

Les avantages, buts et caractéristiques de ce dispositif étant similaires à ceux du procédé tel que succinctement exposé ci-dessus, ils ne sont pas rappelés ici.

Selon un troisième aspect, l'invention vise un procédé de localisation d'un équipement solidaire d'un relais pulsé multi synchrone multi source, mobile ou non, par un équipement distant, mobile ou non, **caractérisé en ce que** ledit équipement distant met en oeuvre:
- une étape de réception, par un moyen de réception dudit équipement distant, d'un signal pulsé multi synchrone multi-source émis par ledit équipement relais,
- une étape de détection et datation des impulsions ou trains d'impulsions dites élémentaires composant ledit signal pulsé multi synchrone multi-source,
- une étape de démultiplexage et démodulation desdites impulsions ou trains d'impulsions élémentaires en canaux dits d'observables relais, lesdits canaux d'observables relais étant représentatifs d'au plus une des sources, dites relayées pour avoir participé à la génération dudit signal pulsé multi synchrone multi-source,
- une étape d'identification et de positionnement desdites sources relayées,
- pour chaque canal d'observables relais, une étape de restitution d'observables relais et
- une étape de filtrage de navigation agissant sur lesdits observables relais et réalisant le calcul d'une estimation de la position, de la vitesse, dudit équipement relais dès lors que le nombre de dites sources relayées dépasse d'au moins un le nombre de degrés de liberté du centre de gravité du dit équipement relais et, le cas échéant, de l'attitude dudit relais, dès lors que le nombre de capteurs de réception des sources, au niveau dudit relais, a dépassé d'au moins un le nombre de degrés de liberté en rotation du dit équipement relais.

Grâce à ces dispositions, le relais peut être localisé, même s'il est mobile, par un équipement distant qui peut lui-même être mobile. Cette propriété est liée au fait que les informations nécessaires ont été incluses au moment de la génération du signal multi synchrone et multi-source, le déplacement du relais et du récepteur distant ayant alors un effet de mode commun qui se traduit entièrement dans un décalage temporel et non spatial.

Selon des caractéristiques particulières, ladite étape de détection et datation utilise au moins l'une des techniques suivantes :
- mesure ou calcul d'énergie du signal reçu et déclenchement d'un trigger sur dépassement d'un seuil associé au bruit ambiant,
- corrélation avec un motif de synchronisation,
- corrélation avec un identificateur dudit équipement relais, et
- corrélation avec une réplique crée à partir d'un traitement de prévision des instants d'arrivée des impulsions ou trains d'impulsions élémentaires.

Grâce à ces dispositions, on peut améliorer la sensibilité de la détection des impulsions dans le signal pulsé multi synchrone et multi source et filtrer le bruit de réception. De ce fait la puissance à émettre par le relais est réduite.

Selon des caractéristiques particulières, ladite étape de détection et datation comporte un traitement d'isolation du trajet direct des impulsions ou trains d'impulsions élémentaires.

Grâce à ces dispositions, la précision de la localisation est améliorée.

Selon des caractéristiques particulières, ladite étape de démultiplexage et démodulation classe lesdites impulsions élémentaires ou train d'impulsions élémentaires détectées et datées, chaque classe, dit canal d'observables relais, étant représentative d'une unique source.

Grâce à ces dispositions, l'équipement distant peut reconstituer les observables du relais tout en favorisant la réception du signal multi synchrone multi-source à faible niveau de puissance.

Selon des caractéristiques particulières, ladite étape de démultiplexage et démodulation classe lesdites impulsions élémentaires ou trains d'impulsions élémentaires détectées et datées, chaque classe, dit canal d'observables relais, étant représentative d'un unique couple source - capteur dudit relais.

Grâce à ces dispositions, l'équipement distant peut reconstituer les observables d'un relais d'attitude.

Selon des caractéristiques particulières, ladite étape de démultiplexage et démodulation utilise, pour son dit classement, un traitement de prévision des écarts temporels et/ou fréquentiels attendus entre lesdites impulsions ou trains d'impulsions élémentaires, selon une connaissance a priori des dites sources, et/ou du dit relais, et/ou d'un choix prédéterminé d'une unité sur lesdites horloges de source, et un traitement de corrélation et/ou de filtrage adapté entre le résultat de ladite prévision et le résultat de ladite étape de détection et datation.

Grâce à ces dispositions, la restitution des échelles de temps de chaque source est permise à plus faible rapport signal sur bruit.

Selon des caractéristiques particulières, ladite étape de démultiplexage et démodulation utilise l'un des moyens suivants pour réaliser son dit classement :
- des tests d'hypothèses et vraisemblance sur des choix exhaustifs de sources et capteurs, à travers une grille de recherche temps fréquence,
- des tests d'hypothèses et vraisemblance sur des choix réduits de sources et capteurs, à travers une liste de cellules temps fréquence utilisant une connaissance approximative des coordonnées, déplacements et caractéristiques des dites sources et du dit relais,
- la démodulation d'au moins un des trains d'impulsions élémentaires pour identifier au moins une des dites sources relayées,
- la démodulation d'au moins un des trains d'impulsions élémentaires pour identifier au moins une des dits capteurs utilisés, et
- le type de modulation utilisée pour les trains d'impulsions.

Grâce à ces dispositions, le récepteur du relais pulsé multi synchrone multi-source s'adapte à tous les standards utilisés par les relais, du plus simple au plus complexe.

Selon des caractéristiques particulières, ladite étape de démultiplexage et démodulation utilise la démodulation d'au moins un des trains d'impulsions élémentaires pour restituer une correction spatiotemporelle et corriger au moins un des résultats de ladite étape de détection et datation.

Grâce à ces dispositions, la restitution des observables est plus précise.

Selon des caractéristiques particulières, ladite étape de démultiplexage et démodulation restitue la datation sur l'échelle de temps de la source d'au moins une des impulsions d'au moins un des canaux d'observables relais.

Grâce à ces dispositions, au moins une mesure en technique TOA est possible, et permet une synchronisation.

Selon des caractéristiques particulières, ladite étape de démultiplexage et démodulation utilise la démodulation d'un compteur d'époque pour restituer une datation en échelle de temps de source.

Grâce à ces dispositions, le lever d'ambiguïté de la mesure temporelle est facilité.

Selon des caractéristiques particulières, ladite étape de démultiplexage et démodulation utilise la démodulation d'au moins un des trains d'impulsions élémentaires pour restituer une correction spatiotemporelle représentative d'une différence de temps d'arrivée d'un signal de positionnement venant d'une même source entre deux capteurs dudit relais, le résultat de ladite étape de restitution d'observables relais dépendant de ladite correction spatiotemporelle.

Grâce à ces dispositions, la restitution des observables est plus précise.

Selon des caractéristiques particulières, ladite étape de démultiplexage et démodulation utilise un filtrage des datations des impulsions élémentaires reconnues comme appartenant à une même dite source relayée, le traitement de ladite étape de détection et datation dépendant du résultat de ce filtrage.

Grâce à ces dispositions, la puissance de calcul nécessaire au récepteur est diminuée et/ou la sensibilité du récepteur est plus grande.

Selon des caractéristiques particulières, l'étape de démultiplexage et démodulation exploite des informations d'horloge virtuelle composite, le cas échéant, ladite étape de détection et datation mettant en oeuvre des traitements spécifiques pour utiliser le résultat de cette exploitation.

Grâce à ces dispositions, l'équipement distant peut être synchronisé avec les sources et /ou avec le relais, et la restitution des temps sources peut être facilitée.

Selon des caractéristiques particulières, l'étape de démultiplexage et démodulation exploite des informations d'horloge virtuelle composite, le cas échéant, ladite étape de filtrage de navigation mettant en oeuvre des traitements spécifiques pour utiliser le résultat de cette exploitation.

Grâce à ces dispositions, la résolution du temps ou de la distance de séparation relais, dispositif de localisation est possible.

Selon des caractéristiques particulières, pour au moins un dit canal d'observable relais, ladite étape de démultiplexage et démodulation intègre un contrôle récurrent d'intégrité dit datation relais, résultant dans l'invalidation de ladite datation attachée aux récurrences d'impulsions classées dans ledit canal d'observable et/ou l'attribution d'un facteur de qualité dit datation calculé selon un indice de confiance prédéterminé.

Grâce à ces dispositions, la localisation du relais est plus fiable.

Selon des caractéristiques particulières, ledit contrôle d'intégrité datation relais détecte au moins l'une des conditions suivantes :
- une anomalie dans la séquence des impulsions élémentaires,
- la présence identifiée et non contrôlée d'un multi trajet entre ladite source relayée et ledit équipement relais et/ou entre ledit équipement relais et ledit équipement mobile,
- un taux d'erreur de bit anormalement élevé ou des anomalies dans des contrôles de parité au cours du traitement de démodulation,
- une interférence entre signaux provenant de relais multiples, entre signal relayé et signaux de positionnement directs et/ou entre le signal de relais et un signal interférant autre, en particulier une raie spectrale parasitaire, et
- une alerte ou autre information représentative de la non intégrité des informations portées dans le signal pulsé multi synchrone multi source.

Grâce à ces dispositions, le contrôle d'intégrité prend en compte les aléas de l'environnement du relais et/ou du récepteur et donne une évaluation réelle de l'intégrité du positionnement dont il est capable.

Selon des caractéristiques particulières, ladite étape d'identification et de positionnement des sources relayées réalise une étape d'acquisition et/ou une mémorisation de messages, lesdits messages étant représentatifs de modèles de trajectoires desdites sources relayées et/ou de modèles d'évolutions de leurs dites horloges sources.

Grâce à ces dispositions, la localisation peut être réalisée même avec des sources mobiles ou nouvelles.

Selon des caractéristiques particulières, les messages à acquérir et/ou mémoriser dans ladite étape d'acquisition et/ou de mémorisation de messages proviennent d'au moins un des résultats suivants :
- résultats d'une initialisation et/ou mémorisation d'une base de données dans l'équipement distant,
- résultats de l'étape de démultiplexage et démodulation desdites impulsions ou trains d'impulsions élémentaires détectées,
- résultats de la réception d'une télécommunication filaire ou sans fil d'un serveur de tels messages, cette télécommunication pouvant être périodique ou sur requête et
- dans le cas où les sources relayées appartiennent à la classe des systèmes globaux de navigation par satellites, résultats de la démodulation des signaux eux-mêmes grâce à un récepteur adapté.

Grâce à ces dispositions, l'équipement localisant est capable de s'adapter à plusieurs configurations pour acquérir une connaissances sur de nouvelles sources et /ou des sources défilantes telles que les satellites des systèmes globaux de navigation par satellite.

Selon des caractéristiques particulières, ladite étape de restitution d'observables relais calcule, pour au moins un dit capteur relayé dudit relais, à partir des données d'au moins un des ensembles des dits canaux d'observables relais représentatifs dudit capteur et d'un nombre de sources relayées suffisant en regard du nombre de degrés de liberté du centre de gravité dudit équipement relais, l'un au moins des observables suivants :
- pour chaque source, la pseudo distance source - relais, calculée grâce aux résultats de la datation d'au moins une des impulsions en échelle de temps locale et sa restitution en échelle de temps source,
- pour chaque source, la différence de datation d'au moins une des impulsions à au moins une des suivantes,
- à partir d'une source pivot, et pour chaque autre source, la différence de datation d'au moins une des impulsions à celle de ladite source pivot, représentative d'un même marqueur de temps, et
- à partir d'une source pivot, et pour chaque autre source, les doubles différences de datation d'au moins des impulsions à au moins une des suivantes à la même quantité évaluée pour ladite source pivot, pour des impulsions représentatives des mêmes marqueurs de temps.

Grâce à ces dispositions, différentes techniques de mesures sont possibles en position et en vitesse moyenne de déplacement du relais.

Selon des caractéristiques particulières, ladite étape de restitution d'observables relais calcule, pour au moins une des sources relayées par ledit relais, à partir des données d'au moins un des ensembles des dits canaux d'observables relais représentatifs de ladite source et d'un nombre de capteurs relayés suffisant en regard du nombre de degrés de liberté en rotation dudit équipement relais autour de son centre de gravité, l'un au moins des observables suivants :
- pour chaque capteur et pour chaque source, la pseudo distance source - capteur du relais, calculée grâce aux résultats de la datation d'au moins une des impulsions du couple capteur - source en échelle de temps locale et sa restitution en échelle de temps source,
- pour chaque capteur, et pour chaque source, la différence de datation d'au moins une des impulsions à au moins une des suivantes,
- pour chaque source, à partir d'un capteur pivot, et pour chaque autre capteur, la différence de datation d'au moins une des impulsions liée à ladite source et au dit capteur à celle liée à la même dite source par l'intermédiaire du dit capteur pivot, lesdites impulsions étant représentatives d'un même marqueur de temps de ladite source, et
- à partir d'un capteur pivot et d'une source pivot, et pour chaque autre couple source - capteur, les différences d'une source à la source pivot des différences de datation d'au moins une des impulsions liée, pour ladite source, au dit capteur à celle liée à la même source et au dit capteur pivot, lesdites impulsions étant représentatives d'un même marqueur de temps de ladite source.

Grâce à ces dispositions, différentes techniques de mesures sont possibles en attitude et vitesse de rotation de l'équipement relais.

Selon des caractéristiques particulières" pour au moins un canal d'observables relais, ladite étape de restitution des observables relais intègre un contrôle d'intégrité dit mesures relais résultant dans l'invalidation ou non de l'observable calculé et/ou l'adjonction d'un facteur de qualité dit observable relais calculé selon un indice de confiance prédéterminé.

Grâce à ces dispositions, le traitement de l'information est plus fiable.

Selon des caractéristiques particulières, ledit contrôle d'intégrité mesures relais utilise au moins l'un des paramètres suivants dans son évaluation de facteur de qualité observable relais et/ou son invalidation d'observables :
- le facteur de qualité datation
- la disponibilité d'un positionnement précis de la source en regard de la performance attendue
- un indice de qualité ou d'exclusion de source provenant du signal relayé
- la présence ou non de corrections spatiotemporelles adéquates, et
- un taux d'erreurs de bits anormalement élevé dans l'acquisition et ou la démodulation des messages le cas échéant

Grâce à ces dispositions, le contrôle d'intégrité prend en compte les aléas de l'environnement du relais et/ou de l'équipement localisant et donne une évaluation réelle de l'intégrité du positionnement dont il est capable.

Selon des caractéristiques particulières, ladite étape de filtrage de navigation utilise une pondération des observables relais, le résultat en terme de précision et intégrité de l'estimée de position, et vitesse et le cas échéant de l'attitude de l'équipement relais dépendant de cette pondération.

Selon des caractéristiques particulières, ladite étape de filtrage de navigation utilise ledit facteur de qualité observable relais calculé par ladite étape de restitution des observables relais pour pondérer les observables, et l'exclusion des observables relais invalidés par ledit contrôle d'intégrité mesures relais dans l'estimation de la position, vitesse et le cas échéant de l'attitude dudit relais.

Grâce à ces dispositions, le positionnement de l'équipement relais est plus précis et plus fiable et tient compte des évaluations d'intégrité réalisé au niveau de chaque mesure.

Selon des caractéristiques particulières, ladite étape de filtrage de navigation réalise une évaluation de la précision et de l'intégrité de position et vitesse consistant à calculer un volume de protection dudit positionnement selon un indice de confiance prédéterminé.

Grâce à ces dispositions, l'équipement localisant est capable d'annoncer à l'utilisateur une garantie du service qu'il lui rend.

Selon des caractéristiques particulières, ladite évaluation de la précision et de l'intégrité utilise la redondance des observables pour mettre en oeuvre un traitement de détection et isolation d'observables indésirables, le résultat de ladite étape de filtrage de navigation et/ou le résultat de l'étape de démultiplexage et démodulation dépendant du résultat de ce traitement.

Grâce à ces dispositions, l'équipement localisant est capable d'utiliser un maximum d'informations pour offrir une garantie de service.

Selon un quatrième aspect, la présente invention vise un dispositif de localisation d'un équipement solidaire d'un relais multi synchrone multi source, mobile ou non, par un équipement distant, mobile ou non, **caractérisé en ce que** ledit équipement distant comporte:
- un moyen de réception d'un signal pulsé multi synchrone multi-source émis par ledit équipement relais,
- un moyen de détection et datation des impulsions ou trains d'impulsions dites élémentaires composant ledit signal pulsé multi synchrone multi-source,
- un moyen de démultiplexage et démodulation desdites impulsions ou trains d'impulsions élémentaires en canaux dits d'observables relais, lesdits canaux d'observables relais étant représentatifs d'au plus une des sources, dites relayées pour avoir participé à la génération dudit signal pulsé multi synchrone multi-source,
- un moyen d'identification et de positionnement desdites sources relayées,
- pour chaque canal d'observables relais, un moyen de restitution d'observables relais et
- un moyen de filtrage de navigation agissant sur lesdits observables relais et réalisant le calcul de la position, de la vitesse, dudit équipement relais et, le cas échéant, de l'attitude dudit relais.

Les avantages, buts et caractéristiques de ce dispositif étant similaires à ceux du procédé tel que succinctement exposé ci-dessus, ils ne sont pas rappelés ici.

Selon un cinquième aspect, la présente invention vise un système comportant au moins un dispositif relais mettant en oeuvre un procédé de relais pulsé multi synchrone multi-source diffusant vers au moins un dispositif distant adapté à mettre en oeuvre un procédé de localisation à distance d'un tel relais et permettant des accès point à multi point et/ou multi point à point et/ou multi point à multi point.

Grâce à ces dispositions, un même équipement peut localiser une pluralité de relais, ou inversement un même relais peut être localisé par une pluralité d'équipement, autorisant des systèmes étendus et distribués de gestion de flotte d'équipements.

Selon un sixième aspect, la présente invention vise un procédé de positionnement hybride d'un équipement mobile, aidé par un relais pulsé multi synchrone multi source, **caractérisé en ce qu**'il comporte les étapes suivantes :
- une étape de réception dite relais, par un capteur de réception, solidaire dudit équipement mobile, pour la réception d'un dit signal pulsé multi synchrone multi-source émis par ledit relais pour au moins une source parmi une pluralité de signaux de positionnement dite relayée,
- une étape de réception dite directe, par un capteur de réception solidaire dudit équipement mobile, pour la réception de signaux de positionnement provenant d'au moins une source dite directe parmi une pluralité de sources de signaux de positionnement,
- une étape de traitement hybride multicanal d'au moins un signal de positionnement sur au moins un canal dit de réception directe, et d'au moins un signal pulsé multi synchrone multi-source sur au moins un canal dit d'observable relais, lesdits canaux de réception directe et d'observables relais travaillant en parallèle,

- une étape d'identification et de positionnement des dites sources directes et relayées,
- une étape de restitution d'observables dits relais et dits directs dépendant respectivement des résultats de traitement des dits canaux d'observables relais et des résultats de traitement des dits canaux de réception directe,
- une étape de filtrage hybride de navigation utilisant conjointement lesdits observables directs et lesdits observables relais; et réalisant une estimation de la position, de la vitesse et du temps local dudit équipement mobile.

Grâce à ces dispositions, l'équipement mobile qui implémente le procédé d'hybridation a un gain important en disponibilité de positionnement dans les zones urbaines ou bien à l'intérieur des bâtiments, ou plus généralement chaque fois qu'il reçoit des signaux faibles ou certains absents dès lors qu'il est en visibilité d'au moins un relais.

Selon des caractéristiques particulières, dans ladite étape de traitement hybride multicanal, le traitement des dits signaux pulsés multi synchrones multi-source sur les canaux d'observables relais et le traitement des dits signaux de positionnement sur les canaux de réception directe utilisent une même échelle de temps local et/ou un même oscillateur local comme base de temps.

Grâce à ces dispositions, les mesures sont plus homogènes.

Selon des caractéristiques particulières, ledit traitement de détection et datation des impulsions élémentaires ou trains d'impulsions élémentaires contenues dans lesdits signaux pulsés multi synchrones multi-source utilise une échelle de temps local ou un oscillateur local qui dépend des résultats de l'estimation du temps local réalisé dans ladite étape de filtrage hybride de navigation.

Grâce à ces dispositions, la linéarisation des équations d'état du filtrage de navigation est simplifiée.

Selon des caractéristiques particulières" pour chaque canal de traitement, qu'il soit de réception directe ou d'observable relais, ladite étape de traitement hybride multicanal intègre un contrôle d'intégrité dit canal, résultant dans une invalidation des résultats du traitement sur le canal et/ou l'attribution d'un facteur de qualité dit canal calculé selon un indice de confiance prédéterminé et s'appliquant à une datation en échelle de temps local d'un événement connu du signal traité.

Grâce à ces dispositions, le positionnement est plus fiable.

Selon des caractéristiques particulières, ledit contrôle d'intégrité canal détecte sur les canaux de réception directe au moins l'une des conditions suivantes :
- un ou plusieurs multi trajets dans l'étape de traitement direct,
- une interférence entre signaux de positionnement, et/ou entre le signal de positionnement directe et le signal pulsé multi synchrone multi source et/ou entre le signal de positionnement direct et un signal interférant autre, en particulier une raie spectrale parasitaire, et
- une alerte ou autre information représentative de la non intégrité des informations portées dans au moins un desdits signaux de positionnement.

Grâce à ces dispositions, le contrôle d'intégrité prend en compte les aléas de l'environnement des sources et/ou de l'équipement mobile et donne une évaluation réelle de l'intégrité du positionnement dont il est capable.

Selon des caractéristiques particulières, ledit contrôle d'intégrité canal détecte sur les canaux d'observables relais au moins l'une des conditions suivantes :
- un ou plusieurs multi trajets entre ladite source relayée et ledit équipement relais et/ou entre ledit équipement relais et ledit équipement mobile,
- un taux d'erreur de bit anormalement élevé ou des anomalies dans des contrôles de parité dans le résultat ladite étape de démodulation,
- une interférence entre signaux provenant de relais multiples, entre signal relayé et signaux de positionnement directs et/ou entre le signal de relais et un signal interférant autre, en particulier une raie spectrale parasitaire, et
- une alerte ou autre information représentative de la non intégrité des informations portées dans le signal pulsé multi synchrone multi source.

Grâce à ces dispositions, le contrôle d'intégrité prend en compte les aléas de l'environnement du relais et/ou de l'équipement mobile et donne une évaluation réelle de l'intégrité du positionnement dont il est capable.

Selon des caractéristiques particulières, ladite étape d'identification et de positionnement des sources utilise les résultats des estimations de position vitesse et temps de ladite étape de filtrage hybride de navigation et calcule des prévisions de positionnement des dites sources relayées et des dites sources directes, les traitements de ladite étape de traitement hybride multicanal dépendant du résultat des dites prévisions.

Grâce à ces dispositions, le procédé de positionnement hybride est plus réactif à l'acquisition et à la réacquisition.

Selon des caractéristiques particulières, lesdites prévisions de positionnement des sources directes ou relayées utilise des corrections spatiotemporelles résultant du traitement d'au moins un signal pulsé multi synchrone multi-source, sur au moins un canal d'observable relais.

Grâce à ces dispositions, le procédé de positionnement hybride est encore plus réactif à l'acquisition et à la réacquisition

Selon des caractéristiques particulières, ladite étape de restitution des observables utilise pour les canaux de réception directe des corrections spatiotemporelles résultant du traitement d'au moins un signal pulsé multi synchrone multi-source sur au moins un canal d'observables relais.

Grâce à ces dispositions, les capacités de précisions du relais sont transférées à l'équipement mobile.

Selon des caractéristiques particulières, ladite étape d'identification et de positionnement des sources réalise l'identification des sources, dites communes, entre lesdites sources relayées et lesdites sources directes, réalise, lorsqu'il en existe, une association des dits canaux de réception directe et des dits canaux d'observable relais correspondants, et établit, pour lesdits canaux associés, une commande et un contrôle d'optimisations des traitements hybrides multicanal.

Grâce à ces dispositions, une hybridation serrée entre canaux de traitements des sources en directes et par l'intermédiaire du relais permet d'optimiser les traitements et d'apporter une réactivité plus forte aux aléas de l'environnement, afin d'augmenter la disponibilité d'un positionnement précis et fiable.

Selon des caractéristiques particulières, ledit contrôle des dites optimisations des traitements hybrides multicanal dépend de la comparaison sur chacun des dits canaux associés d'au moins un des critères de la liste suivante :
- le rapport signal sur bruit du traitement de signal,
- le taux d'échec des contrôles de parité ou de codes correcteurs d'erreur dans les traitements de démodulations,
- l'existence et la qualité des prévisions de positionnement des sources,
- les paramètres d'un modèle statistique de bruit et d'erreur affecté aux observables dudit canal,
- les résultats dudit contrôle d'intégrité canal, et en particulier ladite invalidation
   et
- les résultats d'un contrôle d'intégrité position et en particulier une exclusion d'observable.

Grâce à ces dispositions, le contrôle d'intégrité prend en compte les aléas de l'environnement du relais et/ou de l'équipement mobile et donne une évaluation réelle de l'intégrité du positionnement dont il est capable.

Selon des caractéristiques particulières, pour au moins une paire de dits canaux associés, ladite commande des dites optimisations des traitements hybrides multicanal, crée au moins une des dépendances de la liste suivante entre les traitements du signal pulsé multi synchrone multi-source et les traitements des signaux de positionnement:
- le traitement du signal pulsé multi synchrone multi-source dépend des prévisions des positions des sources directes pour la détection des impulsions élémentaires ou trains d'impulsions élémentaires,
- le traitement du signal pulsé multi synchrone multi-source dépend des prévisions des positions des sources directes pour le démultiplexage et la démodulation,
- le traitement du signal de positionnement dépend des prévisions des positions des sources relayées,
- le traitement du signal pulsé multi synchrone multi-source dépend des résultats du traitement du signal de positionnement, et
- le traitement du signal de positionnement dépend des résultats du traitement du signal pulsé multi synchrone multi-source.

Grâce à ces dispositions, unehybridation serrée entre de traitement des sources en direct et traitement par l'intermédiaire du relais est bidirectionnelle, et peut servir à compenser les faiblesses de l'un ou de l'autre selon le besoin. Selon des caractéristiques particulières, pour au moins un dit canal de réception directe associé à un canal d'observable relais, ladite étape de traitement hybride multicanal utilise une corrélation temporelle avec une réplique du code de télémétrie pour l'acquisition et/ou la poursuite dudit signal de positionnement, et **caractérisé en ce que** les résultats du canal d'observables relais associé agissent directement sur la génération de ladite réplique en utilisant au moins l'une des actions suivantes :
- positionnement direct de ladite réplique sur une position proche de celle relevée sur ledit canal d'observables relais associé,
- réglage de la vitesse de balayage de ladite réplique en fonction des différences temporelles entre impulsions relevées sur ledit canal d'observable relais associé,
- réglage des durées, séquences et synchronisations des opérations d'intégrations cohérentes et d'intégrations non cohérentes en fonction des écarts de réplique relevés avec ledit canal d'observables relais associé,
- réglage des paramètres de filtrage et ordres de boucle d'asservissement des traitements de poursuite dudit signal de positionnement en fonction des écarts de réplique relevés sur ledit canal d'observables relais associé, et
- réglage des paramètres utilisés dans les calculs des énergies du signal résultantes de l'opération de désétalement et permettant la gestion globale des modes des dits traitements directs en fonction des écarts relevés sur ledit canal d'observables relais associé.

Grâce à ces dispositions, dans une implémentation matérielle des traitements de canaux à parallélisation massive de corrélateurs, une hybridation serrée et adaptative entre canaux de traitements des sources, en directes et par l'intermédiaire du relais, permet d'optimiser les traitements et d'apporter une réactivité plus forte aux aléas de l'environnement, afin d'augmenter la disponibilité d'un positionnement précis et fiable.

Selon des caractéristiques particulières, pour au moins un dit canal de réception directe associé à un canal d'observable relais, ladite étape de traitement hybride multicanal utilise une corrélation fréquentielle avec une réplique du code de télémétrie pour l'acquisition et/ou la poursuite dudit signal de positionnement, et **caractérisé en ce que** les résultats du canal d'observables relais associé agissent directement sur la génération du spectre de fréquence de ladite réplique en utilisant ses propres résultats dans la recherche des périodicités et séparations de source.

Grâce à ces dispositions, dans une implémentation logicielle des traitements de canaux à corrélation fréquentielle, une hybridation serrée et adaptative entre canaux de traitements des sources, en directes et par l'intermédiaire du relais, permet d'optimiser les traitements et d'apporter une réactivité plus forte aux aléas de l'environnement, afin d'augmenter la disponibilité d'un positionnement précis et fiable.

Selon des caractéristiques particulières, ladite étape d'identification et de positionnement des sources réalise une étape d'acquisition et/ou une mémorisation de messages, lesdits messages étant représentatifs de modèles de trajectoires desdites sources relayées et/ou de modèles d'évolutions de leurs dites horloges sources et proviennent indifféremment des démodulations des canaux d'observables relais ou des canaux de réception directe.

Selon des caractéristiques particulières, ladite étape de restitution d'observables utilise simultanément les résultats des dites étapes d'identification et de positionnement des sources et de traitement hybride multicanal pour calculer des pseudo distances et des pseudo vitesses entre sources et équipement mobile, pour les canaux d'observables relais comme pour les canaux de réception directe.

Grâce à ces dispositions, l'équipement mobile est capable de s'adapter à plusieurs configurations pour acquérir une connaissance sur de nouvelles sources, connues et utilisées par le relais sans l'être en direct.

Selon des caractéristiques particulières, pour chaque canal d'observables relais et chaque canal de réception directe, ladite étape de restitution des observables intègre un contrôle d'intégrité dit mesures résultant dans l'invalidation ou non de l'observable calculé et/ou l'adjonction d'un rayon de protection dit mesure selon un indice de confiance prédéterminé.

Selon des caractéristiques particulières, ledit contrôle d'intégrité mesures utilise au moins l'un des paramètres suivants dans son évaluation de rayon de protection mesure et/ou son invalidation d'observable :
- le facteur de qualité canal,
- la disponibilité d'un positionnement précis de la source en regard de la performance attendue,
- une information de qualité ou d'exclusion de source provenant du signal relayé ou du signal de positionnement,
- la présence de corrections spatiotemporelles, et
- un taux d'erreurs de bits anormalement élevé dans l'acquisition et ou la démodulation des messages le cas échéant.

Grâce à ces dispositions, le service de positionnement peut être garanti à l'utilisateur, y compris en prenant en compte les aléas des environnements rencontrés tout au long de la chaîne de l'instrument de mesure et positionnement.

Selon des caractéristiques particulières, ladite étape de filtrage hybride de navigation utilise l'invalidation des observables comme une exclusion de ceux-ci en entrée du filtrage hybride de navigation et le rayon de protection mesure comme une pondération de l'observable dans le filtrage hybride de navigation.

Grâce à ces dispositions, la position affichée à l'utilisateur est fiable.

Selon des caractéristiques particulières, ladite étape de filtrage hybride de navigation réalise une évaluation de la précision et de l'intégrité de l'estimation de position, vitesse et temps consistant à calculer un volume de protection dudit positionnement selon un indice de confiance prédéterminé.

Grâce à ces dispositions, la position affichée à l'utilisateur est fiable et garantie à un niveau annoncé.

Selon des caractéristiques particulières, ladite évaluation de la précision et de l'intégrité utilise la redondance des observables pour mettre en oeuvre un traitement de détection et isolation d'observables indésirables, le résultat de ladite étape de filtrage hybride de navigation et/ou le résultat de l'étape de traitement hybride multicanal dépendant du résultat de ce traitement.

Grâce à ces dispositions, l'équipement localisant est capable d'utiliser un maximum d'informations pour offrir une garantie de service.

Selon des caractéristiques particulières, au moins une des dites sources de signaux de positionnement appartient à l'un des systèmes globaux de navigation par satellites.

Grâce à ces dispositions, le service de positionnement hybride est gratuit au niveau des sources directes, disponible dans le monde entier sur des standards communs, et avec une simplicité à l'utilisateur maximale pour une précision et une fiabilité maximales.

Dispositif de positionnement hybride d'un équipement mobile, aidé par un relais pulsé multi synchrone multi source, **caractérisé en ce qu**'il comporte :
- un moyen de réception, solidaire dudit équipement mobile, capable de la réception d'un dit signal pulsé multi synchrone multi source émis par ledit équipement relais,
- un moyen de réception, solidaire dudit équipement mobile, capable de la réception de signaux de positionnement provenant d'une source parmi une pluralité de sources de signaux de positionnement,
- un moyen de traitement hybride multicanal d'au moins un signal de positionnement sur au moins un canal dit de réception directe, et d'au moins un signal pulsé multi synchrone multi-source sur au moins un canal dit d'observable relais, lesdits canaux de réception directe et d'observables relais travaillant en parallèle,
- un moyen d'identification et de positionnement des dites sources directes et relayées,
- un moyen de restitution d'observables dits relais et dits directs dépendant respectivement des résultats de traitement des dits canaux d'observables relais et des résultats de traitement des dits canaux de réception directe, et
- un moyen de filtrage hybride de navigation utilisant conjointement lesdits observables directs et lesdits observables relais, et réalisant une estimation de la position, de la vitesse et du temps local dudit équipement mobile.

Les avantages, buts et caractéristiques de ce dispositif étant similaires à ceux du procédé tel que succinctement exposé ci-dessus, ils ne sont pas rappelés ici.D'autres avantages, buts et caractéristiques de la présente invention ressortiront de la description qui va suivre, faite, dans un but explicatif et nullement limitatif, en regard des dessins annexés dans lesquels :
- la figure 1 représente, schématiquement et dans une vue globale, l'ensemble des modes de réalisations particuliers des procédés et des dispositifs mis en jeu selon l'invention,
- la figure 2 représente, schématiquement, des éléments mis en oeuvre dans un mode de réalisation particulier les équipements mobiles positionnés en réseau *ad hoc,*
- la figure 3 représente, schématiquement, les interfaces et les étapes du procédé relais pulsé multi synchrone multi-source
- la figure 4 est une alternative de la figure 3 et représente, schématiquement, les interfaces et les étapes du procédé relais avec intégration de données externes,
- la figure 5 représente, schématiquement, sous forme de chronogramme, la génération d'une pulsation canal, dans un mode particulier de réalisation,
- la figure 6 détaille, schématiquement, les fonctions d'un canal dans l'étape de traitement multicanal et dans un mode de réalisation particulier, avec cohérence code porteuse,
- la figure 7 illustre, schématiquement, la surimpression du message de navigation sur la génération de pulsation canal,
- la figure 8 illustre, schématiquement, la surimpression d'un motif de synchronisation pour une meilleure détection et synchronisation au niveau du destinataire,
- la figure 9 illustre, schématiquement, la surimpression d'un identificateur de source,
- la figure 10 montre le cas de surimpression d'un compteur d'époque qui peut faciliter la restitution d'un TOA ou TDOA au niveau du destinataire,
- la figure 11 illustre, schématiquement, la surimpression du message de navigation et/ou d'autres données externes,
- la figure 12 illustre le traitement parallèle multi source ou multi aérien,
- la figure 13 illustre le traitement multiplexé des canaux multi source ou multi aérien,
- la figure 14 identifie, schématiquement, les dispositifs de localisation à distance d'un relais pulsé multi synchrone et multi-source et/ou de détermination d'attitude,
- la figure 15 représente, schématiquement, les interfaces et les moyens du dispositif de localisation à distance d'un relais pulsé multi synchrone et multi-source,
- la figure 16 détaille la progression des étapes mises en oeuvre dans le procédé de localisation à distance d'un relais pulsé multi synchrone et multi-source,
- la figure 17 représente un exemple de système mis en oeuvre pour une gestion de flotte étendue d'un ensemble d'équipements à localiser,
- les figures 18 et 19 représentent des exemples d'utilisation opérationnelle du dispositif de positionnement hybride aidé par le relais pulsé multi synchrone multi-source, la figure 18 pour une utilisation à l'intérieur d'un bâtiment, la figure 19 en milieu urbain,
- la figure 20 représente schématiquement les moyens mis en oeuvre dans l'utilisation d'un dispositif de positionnement hybride aidé par relais pulsé multi synchrone multi-source,
- la figure 21 représente schématiquement les étapes mises en oeuvre par le procédé de positionnement hybride aidé par relais pulsé multi synchrone multi-source,
- la figure 22 représente schématiquement un mode de réalisation particulier des étapes de traitement hybride multicanal et d'identification et positionnement des sources,
- la figure 23 détaille un mode de réalisation particulier d'hybridation serrée dans l'étape de traitement hybride multicanal, pour le cas des sources communes
- la figure 24 représente les moyens mis en oeuvre dans le dispositif de positionnement en réseau *ad hoc* et
- la figure 25 représente schématiquement les étapes mises en oeuvre dans le procédé de positionnement en réseau *ad hoc.*

Dans la suite du présent document, on parle des « signaux de positionnement », ce terme étant préféré à celui de « signal de navigation » comme habituellement utilisé dans le domaine GNSS ou à celui de signal de télémétrie, dans la mesure où le positionnement est notre but final, plutôt que la seule distance entre deux points, ou la navigation d'un point à un autre.

Le « service de positionnement » est obtenu grâce à l'émission, par lesdites « sources », de signaux de positionnement. Dans le cas de GNSS, les sources sont évidemment les charges utiles des satellites. Une source GNSS peut combiner l'émission de plusieurs signaux GNSS, sur une même porteuse ou sur plusieurs porteuses, générés par une même horloge et émis au même centre de phase antenne. Certains de ces signaux de positionnement portent en plus de la modulation temporelle du code de télémétrie, une information, dite « message » ou « message de navigation » dans la présente invention, qui permet, entre autres informations, d'informer l'utilisateur des paramètres du modèle à utiliser pour synchroniser l'horloge génératrice d'un signal avec l'horloge virtuelle composite du système, et également des paramètres du modèle orbital qui permet de localiser les satellites, en l'occurrence les sources, et en particulier de calculer précisément leur position à un instant d'émission donné. Certains de ces messages portent aussi une information d'intégrité du signal de positionnement.

Chaque signal élémentaire émis par un satellite appartenant aux constellations GNSS répond à cette définition des signaux de positionnement. Le service de positionnement est, par exemple dans le cas de Galileo le service dit « Safety of Life » ou dans le cas de GPS (, acronyme de Global Positioning System pour système global de positionnement); le service SPS (acronyme de Standard Positioning Service). Dans ce dernier exemple, le signal de positionnement est ainsi le signal dit C/A fréquence L1 à 1575,42 MHz ( acronyme de Coarse Acquisition pour acquisition préliminaire). Chaque signal élémentaire de Galileo () répond également à cette définition, pareillement pour GLONASS, BEIDOU... et leurs augmentations EGNOS (acronyme de European Global Navigation Overlay System pour système européen de recouvrement de la navigation globale), WAAS (acronyme de Wide Area Augmentation System pour système d'augmentation à large échelle), MTSAT (acronyme de multi Transport satellite pour satellite multitransport), pseudolites.

Un système fournissant une télémétrie optique est également applicable à l'invention dans la mesure où des structures de signal de télémétrie numériques équivalentes en bande de base sont utilisées et où la principale différence entre transmission radio et optique tiendrait aux ressources fréquentielles utilisées pour le canal de transmission, et à la nature de l'émetteur et du récepteur. De ce fait, dans la suite du document, et en particulier dans les revendications, on nomme globalement « moyen d'émission », ou « émetteur » et « émission », l'ensemble des éléments de la chaîne d'émission et des procédés qui, partant d'un signal numérique donné en bande de base, l'amènent jusqu'au canal de propagation dans la chaîne d'émission, y compris antenne ou laser, ou tout autre moyen adéquate à faire propager l'information. On nomme globalement « capteur de réception » ou « récepteur » et « réception », l'ensemble des éléments de la chaîne de réception et leurs procédés qui, partant d'un signal ayant terminé sa propagation dans le canal est reçu, typiquement par une antenne ou une cellule optique dit « capteur » dans ce document, est prétraité en amplification et filtrage, converti en bande de base et finalement numérisé pour un futur traitement numérique du signal. Ce traitement numérique, dit traitement « canal » chaque fois qu'il ne traite que du signal émis, à l'origine, que par une seule source d'une constellation de sources reçues dans un unique canal de transmission, a pour rôle de réaliser la « détection » du signal visant à récupérer son énergie au-delà de l'énergie du bruit ambiant dans lequel il est reçu, à en extraire la « synchronisation » pour une minimisation des interférences inter bribes de code ou inter symbole et/ou une « datation » dans l'échelle locale de temps et finalement la « démodulation » visant à retrouver une information, la valeur du compteur transmis par exemple.

On appelle « signal numérique en bande de base », un signal qui possède une occupation spectrale élémentaire définie, grâce à une « mise en forme temporelle », correspondant à une caractéristique de combinaison front montant ou descendant, et une structure informative définie à la fois par une donnée en binaire et un codage élémentaire pour le 0 et pour le 1.

On suppose que le service de télémétrie est basé sur une séquence binaire pseudoaléatoire, nommé dans le document « code de télémétrie » connue de l'émetteur et du récepteur et reconnaissable par le récepteur pour une « datation » précise de sa réception dans une échelle de temps locale. On appelle « échelle de temps » un axe ordonné marqué d'une origine et d'un vecteur unitaire, ou « unité d'horloge », sur lequel on peut mesurer les durées entre deux événements, ou entre l'origine et un événement. On étend cette notion mathématique à une notion propre au monde de la mesure des temps où l'origine absolue a peu d'importance et où le vecteur unitaire est aussi variable que la fréquence de l'oscillateur, dit « horloge » qui permet de le matérialiser. On dit qu'une horloge est stable si, dans la durée moyenne de l'expérimentation considérée, le vecteur unitaire peut être considéré comme constant, à la tolérance de précision près de la mesure. On parle d'horloge virtuelle composite pour une échelle de temps, presque mathématique, générée à partir d'un filtrage de plusieurs mesures unitaires provenant de plusieurs horloges afin d'en moyenner les instabilités. On parle de « sources cohérentes » lorsqu'elles appartiennent à une même « constellation », c'est-à-dire quelles sont telles que l'utilisateur de ces sources peut atteindre, de façon physique (horloges synchronisées) ou bien après correction mathématique des mesures (horloges GNSS), une échelle de temps virtuelle composite stable. Les constellations GNSS sont de ce type puisque le temps système GNSS correspond à cette échelle de temps virtuelle composite, par rapport auquel toutes les instabilités d'horloges satellites sont calibrées, puis transférées à l'utilisateur sous la forme d'un modèle de correction modulé dans le signal de positionnement. La restitution physique par un récepteur GNSS de cette unité de temps virtuelle composite est appelée dans le document TMP (acronyme de Time Mark Pulse pour marqueur de temps pulsé).

Les transitions du code de télémétrie à l'émission, qu'on appelle aussi dans ce document les « marqueurs temporels » du signal, sont dits représentatifs de l'unité de temps, ou de l'horloge de la source, nom donné à l'oscillateur qui à travers divers facteurs multiplicatifs ou diviseurs a participé à la génération du code de télémétrie. Comme dans le cas de certains systèmes GNSS, cette séquence pseudo aléatoire a pu en même temps être utilisée pour la technique d'accès multiple, qui permet aux sources de partager un même canal de transmission, dans un multiplexage des sources radio à répartition de codes, à répartition de fréquence, ou encore de temps. A l'inverse, tout système utilisant cette technique autorise une télémétrie, bien que souvent imprécise ou non cohérente. Dans ce document, on parle d'accès multiple pour cette fonction spécifique. Au contraire, on utilise respectivement les termes de multiplexage et démultiplexage chaque fois qu'il s'agit des opérations de télémétrie, spécifiques à l'invention, qui vont permettre respectivement de combiner temporellement plusieurs échelles de temps, signaux télémétriques, chaque échelle de temps représentant respectivement les événements unités d'une source, pour une émission unique dans le même canal de transmission, et de séparer les différentes échelles de temps à la réception.

Lesdites sources sont déployées dans une diversité géométrique, réputée suffisante pour que ledit système de positionnement offre un service de positionnement avec une dilution de précision faible donc des performances satisfaisantes dans sa zone de couverture, dès lors que les visibilités directes sont possibles entre sources émettrices et réceptrices. Le besoin en termes de diversité géométrique dépend essentiellement de la mobilité de l'utilisateur final du positionnement et en particulier du nombre de ses degrés de liberté. On distingue, à cet effet, les degrés de liberté du positionnement du centre de gravité d'un solide, des degrés de liberté du positionnement d'un point quelconque du solide. Dans le premier cas, le besoin en diversité géométrique dépend du besoin en résolution, ou nombre d'états inconnus ou variables du système dans le domaine position : 1D+T (1 dimension + le temps) pour un véhicule assujetti à une ligne, un train par exemple, 2D+T pour un véhicule assujetti à un plan, un bateau, par exemple, 3D+T pour un véhicule non assujetti, un avion par exemple. Dans le second cas, le nombre de degrés de liberté va dépendre du nombre d'axes de rotations possibles, et le besoin en diversité géométrique doit correspondre au nombre d'angles d'Euler, états du système à définir dans la détermination d'attitude. Ce dernier nombre est lié également au nombre de capteurs nécessaires: deux capteurs pour un seul axe de rotation (par exemple le cap pour une automobile, ou une péniche sur un canal), trois capteurs pour deux axes de rotation, et quatre capteurs pour trois axes de rotation (un avion par exemple).

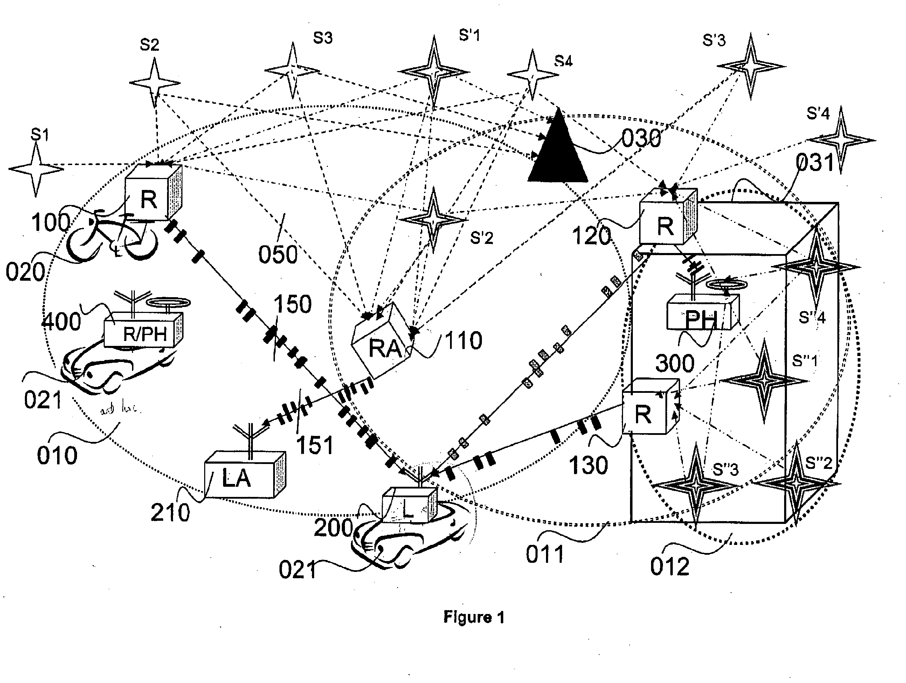

La figure 1 donne une vue d'ensemble des modes de réalisations particuliers des procédés et des dispositifs mis en jeu selon l'invention. La présente invention concerne l'ensemble des dispositifs 100, 200, 300, 400 et des variantes, à savoir 110, 120, 130, selon une variante du 100, et 210 selon une variante du 200, mettant en oeuvre les différents aspects du procédé de l'invention ou leurs variantes. Ils ont pour point commun que chacun de ces dispositifs, selon sa nature, émet et/ou reçoit un signal relais, qui transmet une partie des informations transmises par les signaux de positionnement émis depuis différentes sources de positionnement Si qui appartiennent à l'environnement des émetteurs, ledit signal relais est nommé dans l'invention un signal pulsé multi synchrone multi-source 150. Les dispositifs 100, 110, 120 et 130 émettent le signal relais, les dispositifs 200, 210 et 300 reçoivent les signaux relais, et le dispositif 400 émet et reçoit le signal relais selon l'environnement dans lequel il se trouve. Selon une variante , si la réception des signaux de positionnement a lieu sur plusieurs capteurs, comme c'est le cas du dispositif 110, à destination du dispositif 210, ledit signal relais est nommé signal pulsé multi synchrone multi-source multi-capteur 151.

On observe, en figure 1, les conditions de mise en oeuvre de l'invention à savoir la présence d'au moins un système de positionnement, ledit système de positionnement mettant en oeuvre une pluralité cohérente de sources émettrices de signaux de positionnement. Dans la pratique, cette condition est réalisée en tout point du monde grâce aux systèmes globaux de navigation par satellites, dit GNSS (, Global Navigation Satellite System).

La figure 1 montre l'exemple de la présence de trois systèmes de positionnement.

Le premier comprend les sources S1, S2, S3, S4 et a pour zone de couverture la zone délimitée en 010, où il fournit effectivement un service de positionnement en résolution 3D+T. A titre d'exemple, ce premier système est un système global de navigation par satellite, par exemple GPS ou, dans le futur, Galileo Le service de positionnement est obtenu grâce à l'émission par les sources des signaux de positionnement 050. Ces signaux de positionnement sont générés chacun à partir d'une horloge de source, et sont d'une résolution spatiotemporelle réputée suffisante pour la performance de télémétrie cherchée. Lesdites sources sont déployées dans une diversité géométrique réputée suffisante pour que ledit système de positionnement offre un service de positionnement avec des performances satisfaisantes dans sa zone de couverture dès lors que les visibilités directes sont possibles entre sources émettrices et réceptrices. La figure 1 montre un cas où un obstacle 030 limite cette visibilité entre source et récepteurs.

Le deuxième système de positionnement comprend les sources S'1, S'2, S'3 et S'4, est de même type que le premier, de zone de couverture 011, et est inter opérable avec le premier, en cela qu'il admet le même type de récepteur. Le service de positionnement de ces systèmes est respectivement assuré, dans leurs zones de couverture respectives, à la condition que des obstacles, du type de 030 ou 031 n'existent pas entre les sources et les récepteurs.

Le troisième système de positionnement, qui comprend les sources S"1, S"2, S"3 et S"4, est de nature différente, mais fournit également un service de positionnement dans sa zone locale de couverture 012 adaptée à un bâtiment 031 par exemple.

Le signal pulsé multi synchrone multi-source 150 est généré et émis à partir des dispositifs de relais 100, 110, 120 et 130, dits eux-mêmes relais pulsés multi synchrone multi-source. Le relais 110, ayant plusieurs capteurs pour recevoir les sources, émet un signal plus complexe, dit signal pulsé multi synchrone mufti-source multi-capteur 151, qui sera détaillé plus loin.

Chaque relais capte les signaux 050 émis par une pluralité de sources appartenant aux systèmes de positionnement, les traite séparément en acquisition et poursuite pour retrouver les marqueurs temporels de chacune des sources, les marque à son tour, dès réception, sur une échelle de temps local sous forme de pulsations, régénère un signal unique à partir des pulsations crées par chacune des sources, et émet finalement ce signal à destination d'autres utilisateurs. Le signal généré assemble des impulsions représentatives du temps de réception de tout ou partie des marqueurs temporels reçus grâce à ces sources, d'où le qualificatif de multi synchrone. Ce procédé permet de relayer par une nouvelle source unique des informations temporelles transmises par la pluralité des sources, telles qu'elles ont été reçues ensembles au niveau de la position du relais, d'où le qualificatif de relais multi-source. Enfin le relais n'utilise que des impulsions ou train d'impulsions à l'exclusion d'une porteuse, d'où le qualificatif de relais pulsé, cette caractéristique étant un des paramètres majeurs pour sa capacité à transmettre simultanément plusieurs sources. Le relais des informations temporelles se fait ainsi, selon le procédé de la présente invention, sous la forme d'un signal pulsé multi synchrone multi-source qui, respecte les instants de réception des marqueurs de temps spécifiques détectés sur les codes de télémétrie de chaque source séparément, et en particulier respecte leurs écarts inter sources.

Selon une variante les marqueurs temporels peuvent être captés sur les fréquences porteuses des signaux de positionnement, de manière similaire au Carrier-Phase GPS, quand ceux-ci sont des signaux RF. Pour cette variante, l'horloge source doit être à l'origine de la génération de porteuse, en ,plus d'être à l'origine de la génération du code de télémétrie, et préférablement avec une cohérence code porteuse (proportionnalité entre fréquence du code et fréquence porteuse), comme c'est le cas dans les signaux de positionnement GNSS. Cette variante est particulièrement utile lorsque plusieurs capteurs sont utilisés sur un même relais 110, et dans le cas où les capteurs sont trop peu éloignés en regard de la résolution spatiale du code de télémétrie.

Dans le cadre du procédé lié au relais, conforme au premier aspect de la présente invention, l'écart temporel n'est pas respecté, bien que maîtrisé. Au contraire, selon une variante, on y applique, source par source, donc canal de traitement par canal de traitement, des corrections qui visent à améliorer la précision ou l'intégrité, en respectant davantage le chemin géométrique direct sur les différents canaux de transmission. Ainsi les corrections à appliquer peuvent concerner tous les cas d'utilisation des corrections couramment nommées bi-fréquence et des corrections couramment nommées différentielles dans le domaine du GNSS. Ces corrections peuvent venir de la même source (cas bi-fréquence), par un deuxième signal reçu généré de la même horloge source, d'une autre source par un message modulé dans un signal de positionnement, comme avec l'utilisation d'un satellite SBAS (acronyme de Satellite Based Augmentation system pour système d'augmentation basé au satellite), ou bien encore d'une source de données externes, comme avec l'utilisation d'un GBAS (acronyme de Ground Based Augmentation System pour système d'augmentation basé au sol) ou autres stations de référence comme celles utilisées dans les techniques RTK (acronyme de Real Time Kinematik pour cinématique temps réel). Enfin, elles peuvent être calculées directement dans le relais à partir d'un écart entre une mesure réelle et une prévision de mesure, dès lors que le nombre d'inconnues d'états du système est réduit, cas d'un relais fixe sur position géodésique connue, par exemple.

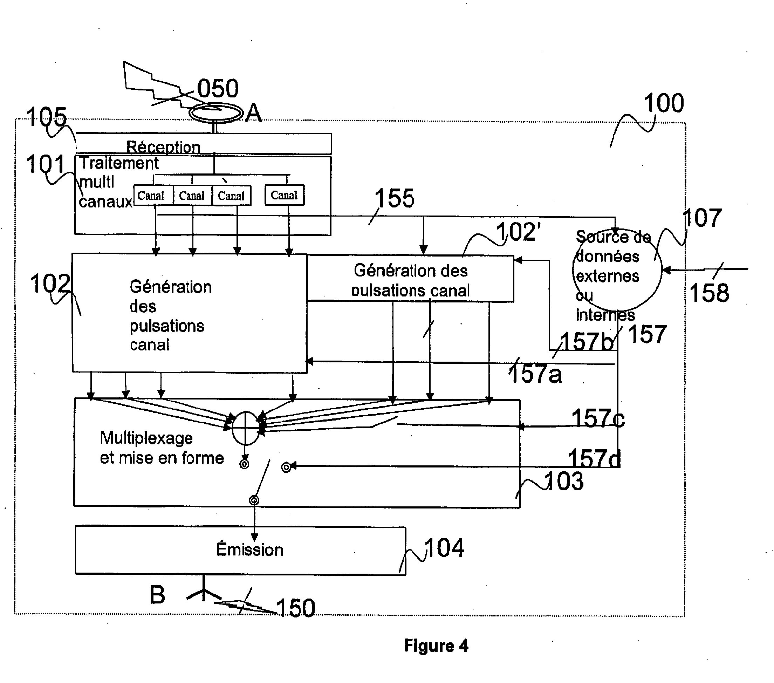

Selon une variante, pour le procédé lié au relais conforme au premier aspect de la présente invention, d'autres corrections spatiotemporelles pour l'amélioration de la précision et de l'intégrité peuvent également être mises en oeuvre. Les corrections et/ou contrôle d'intégrité profitent des techniques de détection et exclusion de multi trajets, par analyse des fonctions d'auto corrélation par exemple. Dans ce cas, le délai de multi trajet identifié est préférentiellement corrigé directement, mais dans un mode particulier de l'invention illustré en figure 4 il est transmis par message aux utilisateurs finaux, pour une application de la correction par eux mêmes. Pour tous les cas de corrections spatiotemporelles définies dans ce document, l'alternative entre appliquer une correction au niveau du relais pour une émission plus précise et intègre, ou transmission d'une correction pour une application finale par l'utilisateur reste possible et dépend largement de l'application et du potentiel du canal de transmission.

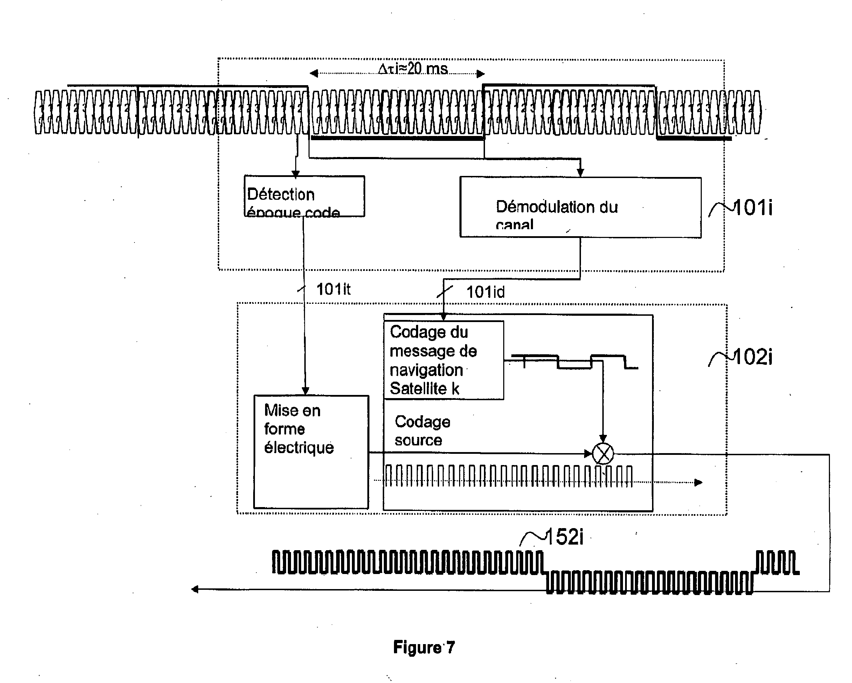

Les impulsions ou trains d'impulsions transmis par le relais marquent sur l'échelle de temps locale du récepteur, et au niveau de la position du relais, des instants d'émission particuliers des signaux émis par les sources. Ceux ci sont des événements particuliers de l'émission source, tels que des époques du code de télémétrie, matérialisés sur l'échelle de temps de l'horloge source. Par exemple, chaque début de séquence de code pseudo aléatoire, dit époque de code pour une source qui les émet périodiquement, correspond à ce type d'instant caractéristique. La figure 7 (détaillée plus loin) illustre une implémentation particulière applicable au cas du système GPS . Dans ce cas, les instants d'époques de code sont parfaitement datés, par un protocole partagé de la source à l'utilisateur, sur une échelle non ambiguë, c'est-à-dire une échelle d'origine connue, le 6 janvier 1980 à 0h00, et une durée parfaitement comptabilisée depuis cette origine sur chaque échelle de temps de source, grâce aux différentes séquences de code pseudo aléatoire qui structure le signal complet. Des principes analogues sont disponibles sur GLONASS , EGNOS et seront également disponibles sur le futur système européen Galileo .

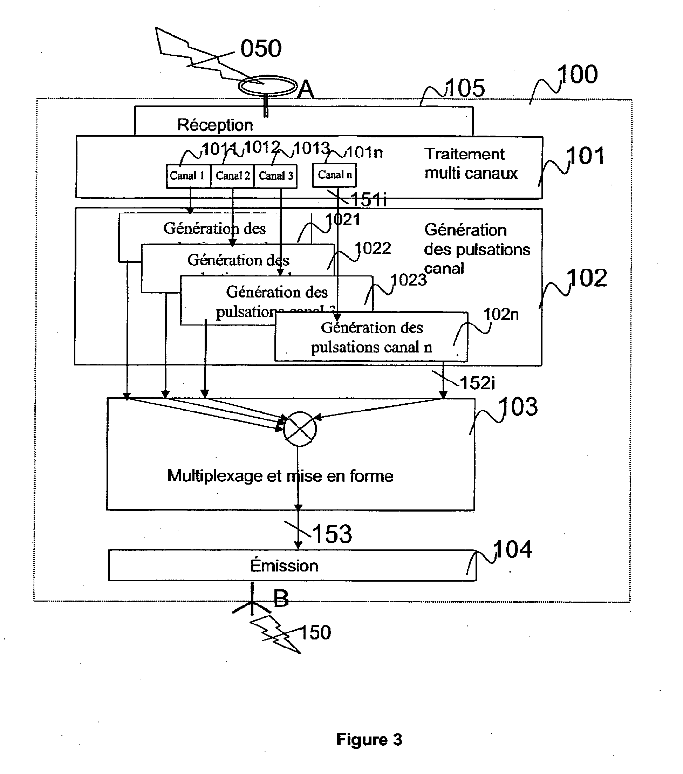

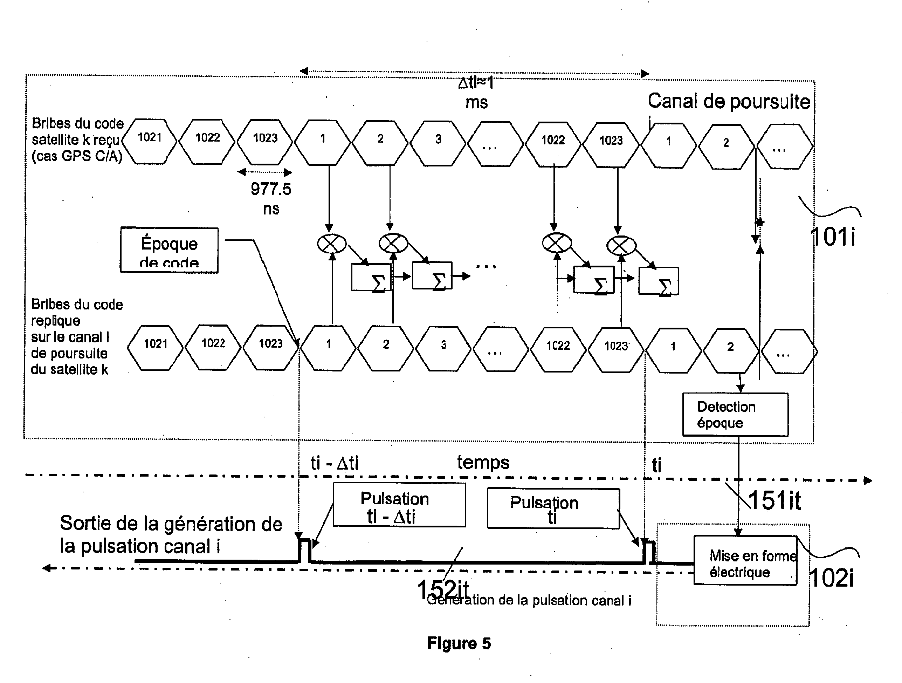

Dans la forme préférentielle de l'invention, représentée en figures 3 et 5, le relais 100 reçoit les signaux d'une constellation GNSS et détermine les temps d'arrivée des codes du signal spatial (époques de code) relatifs aux satellites en visibilité, suivant des méthodes correspondant à un état de l'art des récepteurs GNSS. Le relais 100 génère un signal pulsé, avantageusement un signal Ultra Large Bande (ULB) comprenant une série de pulsations synchronisées avec les époques de code , chaque pulsation se rapportant à une époque de code pour un satellite particulier ; ce signal constitue le signal multi-synchrone multi-source. Les pulsations peuvent être des impulsions ou bien des trains d'impulsions codées ou non. L'utilisation de trains d'impulsions permet d'améliorer le rapport signal à bruit par intégration incohérente au niveau du dispositif de réception 200. L'opération de génération des impulsions ou train d'impulsions à l'instant de détection d'une époque de code est désignée dans la suite « mise en forme électrique ». Le synchronisme entre l'émission des pulsations et les époques de code mesurées peut se faire à un décalage temporel près, convenu et connu de l'ensemble du système. Plus précisément ce décalage est prévu pour absorber la dispersion de temps de traitement entre les différents relais, le temps de traitement pour un relais donné étant défini comme l'écart temporel entre l'instant d'arrivée du code GNSS et l'instant d'émission de la pulsation correspondante au niveau de ce relais

Le signal multi synchrone multi-source est modulé par un message comprenant un préfixe permettant au dispositif de réception d'en identifier le début, par exemple un motif de synchronisation ou une séquence pilote, une information permettant d'identifier le satellite à l'origine de chaque pulsation et la position du code dans la structure de trame du message de navigation du satellite correspondant à cette pulsation. Typiquement, le message contient également des données issues du message de navigation des satellites représentés dans le signal multi-synchrone multi-source, par exemple les éphémérides de ces satellites. Le message peut aussi contenir des données de corrections spatio-temporelles supplémentaires, par exemple corrections ionosphériques, troposphériques, ou des corrections différentielles, ainsi que des informations d'intégrité. L'opération de modulation du signal multi synchrone multi-source par le message précité sera désignée dans la suite « codage source ». La modulation utilisée peut être par exemple de type bipolaire.

Si plusieurs relais sont présents dans le système, ceux-ci utilisent une technique d'accès multiple, par exemple un codage de type CDMA (non représenté) permettant aux dispositifs de réception 200, 210, 300, 400 de séparer les signaux provenant des différents relais. Les bits du code d'accès multiple peuvent moduler les pulsations successives du signal multi synchrone multi-source ou bien, si les pulsations sont des trains d'impulsions, les impulsions constitutives de chaque pulsation.

A la réception, le dispositif 200 isole le signal 150 d'intérêt parmi les signaux émis par les différents relais, suivant la technique d'accès multiple utilisée par le système, et mesure les temps d'arrivée des pulsations du signal multi synchrone multi-source. Les mesures sont groupées par source et traitées de manière analogue à celle des époques de code GNSS afin de déterminer la position du relais. Le dispositif de réception démodule également le message et en utilise le contenu dans les traitements de localisation de comme dans un récepteur GNSS classique.

La figure 1 montre quatre cas typiques d'applications des relais pulsés multi synchrones multi-source.

Le relais 100, le plus à gauche de la figure 1 est solidaire d'un véhicule 020. En effet, le relais peut fournir ses services tout en étant mobile. Le signal qu'il émet 150 est utilisé par le dispositif 200, dispositif de localisation d'un équipement distant (application de gestion de flotte par exemple), qui peut lui-même être mobile. Ce relais 100 est en visibilité directe de six sources en figure 1. Le trajet de propagation ajouté après construction du signal est commun dans l'évaluation des temps de propagation sources - équipement 200 - et peut donc être éliminé ou introduit dans l'inconnue temps d'une résolution 3D+T, de telle sorte qu'après application classique des principes de trilatération, l'équipement 200 retrouve la position 3D de l'équipement 100.

Un peu plus à droite sur la figure 1 on trouve l'équipement relais multi-capteur 110. Il s'agit aussi d'un relais, mais sa caractéristique particulière est qu'il possède plusieurs capteurs de signaux sources Si convenablement répartis sur l'équipement. Ce relais 110, pouvant être appelé relais « d'attitude », relaie à travers le signal pulsé multi synchrone multi-source multi-capteur 151, par des combinaisons d'impulsions, les instants de réception des marqueurs de temps d'une pluralité de sources comme il les a reçus respectivement sur chacun de ses capteurs. Afin de séparer les signaux issus des différents capteurs du relais d'attitude, on utilise une technique d'accès multiple, par exemple un codage de type CDMA. Comme précédemment, les bits du code d'accès multiple peuvent moduler les pulsations successives du signal multi synchrone multi-source ou bien, si les pulsations sont des trains d'impulsions, les impulsions constitutives de chaque pulsation.

Les écarts inter capteurs entre impulsions d'une même source sont représentatifs de l'attitude de l'équipement 110. La position de 110 peut être déterminée comme précédemment à partir d'un seul capteur. Après séparation des signaux issus des différents capteurs du relais d'attitude, le dispositif de réception 210 détermine les positions des capteurs et en déduit, de manière connue en soi, l'attitude du relais 110., Le dispositif 210 peut ainsi déterminer à distance, grâce au signal pulsé émis par le relais d'attitude, l'attitude du dispositif 110. Généralement, un nombre de quatre sources reçues sur quatre capteurs convenablement placés dans ou sur le relais est requis pour déterminer l'attitude (par exemple sous la forme des trois angles d'Euler). Toutefois, dans le cas où le relais a moins de degrés de liberté autour de son centre de gravité, le nombre des capteurs de réception peut être réduit.

On a vu le rôle de l'équipement 200 pour déterminer la localisation du véhicule 020. Ce même équipement peut localiser d'autres relais, comme les relais 120 et 130 de la figure 1 (les plus à droite de la figure 1), y compris des relais qui travaillent sur des systèmes de positionnement S"k différents, tel que en 130, dont la zone de couverture est telle que l'équipement 200 est hors de cette zone. Il est clair sur l'illustration de la figure 1 que les relais 120 et 130 étendent la disponibilité du système de positionnement composé des sources S"i et jouent un rôle important dans une transition entre des zones de couverture de différentes nature. Pour la variante 120 du relais, cette extension de couverture a lieu dans les deux sens, de l'intérieur du bâtiment 031 vers l'extérieur et inversement au prix d'un double capteur et récepteur en tête du relais pour le traitement de deux systèmes de positionnement de nature différentes, et un double système d'aériens à l'émission, le signal pulsé multi synchrone multi-source émis sur chaque aérien pouvant être le même.

Il est clair aussi que le relais 120 peut lui-même jouer le rôle de station de référence pour établir et transmettre, sous forme modulée, ou bien directement , des corrections différentielles, spatiotemporelles, pour une meilleure précision de la télémétrie de l'utilisateur final, incluant par exemple une correction ionosphérique ou troposphérique, si les sources sont satellitaires, une correction d'horloge ou de positionnement de source. Un relais fixe de type 120 a un fort potentiel de redondance s'il reçoit les signaux des systèmes globaux de navigation par satellite en pleine visibilité. Il a ainsi un rôle particulier à jouer pour surveiller l'intégrité locale de ces systèmes, en plus de son rôle de station différentielle, et en particulier pour surveiller les événements redoutés locaux qui peuvent introduire des erreurs de télémétrie néfastes pour la précision et l'intégrité finale des positionnements. Parmi ces événements redoutés, on liste sans chercher à être exhaustifs les multi trajets et/ou les collisions de séquences de code inter sources, qui posent des problèmes d'intégrité aux récepteurs, particulièrement dans les processus d'acquisition, et particulièrement dans la détection de signaux à faible puissance ou dans des effets proche-lointain. Ces collisions introduisent en effet des leurres de synchronisation en relevant le niveau des pics secondaires de la fonction d'auto corrélation relativement au pic principal. Ainsi, un relais du type de 120 est particulièrement bien placé pour introduire un maximum de contrôles d'intégrité au niveau du traitement des signaux 050, effectué canal par canal, un canal étant affecté à une source particulière et à son signal de télémétrie.

De ces contrôles d'intégrité, on peut déduire des données à transmettre avec plusieurs alternatives. La première alternative est une alarme transmise à l'utilisateur grâce à une donnée modulée et la source est directement exclue dans la retransmission. La deuxième alternative est une recommandation sur la confiance que l'utilisateur peut mettre dans l'utilisation de ladite source. Cette information peut être transmise sous forme d'un indice de confiance par rapport à un niveau de performance prédéterminé dans le protocole d'interface du relais, ou au contraire d'une information permettant d'évaluer le modèle statistique de bruit et d'erreur sur la mesure finale de l'échelle de temps source retransmise, dit rayon de protection de la mesure, à indice de confiance prédéterminé dans le protocole d'interface du relais. Le contrôle d'intégrité peut être mené de façon conventionnelle par calcul des résidus entre mesure de pseudo distance réalisée par le récepteur des signaux 050 du relais et une mesure prédite grâce à sa connaissance a priori de sa propre position et de la position des sources, et comparaison avec un test d'hypothèse sur un modèle statistique de bruit et d'erreur préétabli.

Les contrôles d'intégrité réalisés par le relais sont directement utilisés par un dispositif du type 200 ou du type 210, dans le procédé de localisation et, le cas échéant de détermination d'attitude à distance du relais, sous des caractéristiques particulières de l'invention, pour pondérer les mesures, appelées également observables, effectuées sur chaque canal ou pour exclure certaines de ces mesures jugées hors performances pour la fonction cherchée. Cette fonction particulière peut être conduite par l'évaluation des paramètres d'un modèle statistique des bruits et mesures, par exemple la variance d'un modèle de bruit blanc gaussien additif, qui sert à pondérer les observables dans le filtrage de localisation à un certain niveau de confiance près. Ces modèles sont par ailleurs complétés, dans des modes particuliers de réalisation du procédé objet de la présente invention, par des évaluations de perturbations, bruit et erreurs de principes, propres au récepteur du dispositif 200 et également, par des contrôles d'intégrité, propres à chaque canal de traitement, pour détecter les anomalies potentielles à ce stade du traitement, non attribuables à des phénomènes attendus. On retient à ce stade, comme événements redoutés, des erreurs dues aux multi trajets, des anomalies propres à la séparation des impulsions par sources (démultiplexage), des taux d'erreurs de bits anormalement élevés dans la démodulation, l'authentification.... Ces contrôles d'intégrité peuvent encore être complétés, dans des modes particuliers de réalisation du procédé objet de la présente invention, au niveau du dispositif 200, et du procédé de localisation à distance, chaque fois qu'une redondance est atteinte dans le nombre d'observables utiles au filtrage de navigation en regard du nombre de degré de libertés à résoudre pour le mouvement du relais et en regard de la dilution de précision sur des sous-ensembles d'observables. Il s'agit dans ces modes particuliers de réalisation du procédé, d'appliquer ces contrôles d'intégrité aux échelles de temps sources qui sont récupérées par un dispositif de type 200, ou ses variantes, après avoir été relayées par un dispositif de type 100, ou ses variantes.

En figure 1, le relais 120 émet également vers l'intérieur du bâtiment 031, à destination du dispositif 300, nommé dispositif de positionnement « hybride ». Le dispositif 300 est capable à la fois d'effectuer la réception directe des signaux de positionnement tels qu'ils sont émis par les sources, en l'occurrence les sources S", sans que cela soit limitatif, et d'effectuer la réception du signal pulsé multi synchrone multi source, provenant d'un relais, ici le dispositif 120. En l'occurrence ce dispositif 120 multiplexe les échelles de temps des sources S, S'et S", telles qu'elles sont reçues à la position du relais. Le dispositif 300 est capable également d'une double hybridation des mesures reçues par les deux moyens distincts, directs et relais. Il réalise une hybridation lâche, dans un filtrage hybride de navigation de l'état de l'art, filtre de Kalman typiquement, des mesures de télémétrie, dites observables du filtre, réalisées directement et de celles réalisées par le double chemin source vers relais et relais vers dispositif 300. Cette hybridation, ou procédé conforme au cinquième aspect de l'invention, doit toutefois prendre soin d'utiliser les corrections à appliquer par l'utilisateur selon la source des observables, et/ou de traiter des modèles d'erreurs et de bruit adéquates aux types de mesures effectuées, et en tenant compte de contrôles d'intégrité spécifiques à chaque type de mesures et ce particulièrement pour des mesures effectuées sur des sources différentes. Selon un mode particulier de réalisation du procédé d'hybridation conforme au cinquième aspect de l'invention, le dispositif 300 est capable de réaliser également une hybridation dite serrée, d'assistance directe au traitement du signal sur le traitement des sources que relais 120 et dispositif de positionnement hybride 300 reçoivent en commun, et qui ont été relayées, en terme d'échelle de temps source, par le relais 120. Cette hybridation serrée suppose une reconnaissance des sources communes et association des canaux de traitement correspondants entre réception du relais et traitement direct. Dans le mode de réalisation de l'hybridation serrée, le dispositif de positionnement hybride 300 reçoit le signal multi synchrone multi-source, détecte sur ce signal les temps d'arrivée des pulsations canal, et cherche les temps d'arrivée des codes des signaux spatiaux GNSS dans une fenêtre autour des mesures des temps d'arrivée des pulsations canal corrigées des délais de traitement du système, la taille de la fenêtre de recherche dépendant de divers paramètres dont la distance du dispositif de réception hybride 300 aux relais. Cette hybridation serrée, bien que connue au niveau des principes utilisés, et en particulier dans la commande des boucles de poursuite ou des prévisions en terme de domaines d'acquisition, est beaucoup plus efficace, car beaucoup plus réactive, adaptée, et cohérente, qu'une hybridation équivalente passant par un moyen de communication numérique ou « porteuse disciplinée », comme réalisées jusqu'ici dans les techniques de l'état de l'art d'A-GPS ou A-GNSS (acronymes de Assisted GPS ou GNSS). De plus elle apporte une implémentation différente, du fait de la nature impulsionnelle de la transmission, qui joue naturellement un rôle matériel de déclencheur sur les traitements de signaux.

Dans des conditions favorables de réalisation, si la portée des relais est de l'ordre de l'équivalent distance de la bribe de code GNSS (typiquement 293 mètres) ou si le système permet une pré-localisation du dispositif de positionnement hybride 300 avec une précision de cet ordre de grandeur, la réception GNSS hybridée peut directement commencer en mode de poursuite, offrant un temps de réponse, une précision et une sensibilité du dispositif de réception hybridée 300 optimaux dès son démarrage. Si par exemple les pulsations canal sont envoyées à un dispositif de réception hybride 300 proche du relais sans qu'aucune correction préalable des distorsions liées à la source et au trajet entre la source et le relais n'ait été apportée aux mesures des époques de code qui ont permis de générer les pulsations, les temps d'arrivée des pulsations dans le dispositif de réception hybride 300 constituent un estimateur précis du temps d'arrivée des époques de code des mêmes sources dans le récepteur. En effet, en l'absence de multi-trajet, les distorsions perçues par le relais et le dispositif de réception hybride sont quantitativement très semblables dans une zone restreinte. Si le dispositif de réception 300 subit un effet de multi-trajet sur le signal venant des sources, les pulsations canal permettent au récepteur de centrer la recherche autour du trajet direct, et de rejeter ainsi les trajets secondaires.

Comme on vient de le voir, l'efficacité de l'hybridation est d'autant plus grande que le relais est en proximité directe du dispositif de réception, et utilise pour sa transmission une résolution temporelle permettant la précision de mesure et la résolution des multi trajets. Cette condition est particulièrement remplie par un relais 120 qui émet en intérieur des bâtiments en courte portée sur une ressource de fréquence ultra large bande, ou en optique. En particulier, l'hybridation serrée réalisée par un relais situé dans un rayon inférieur à la longueur de propagation d'une demi-bribe de code de télémétrie empêche le décrochage d'une boucle de poursuite en cas d'affaiblissement des signaux au dessous du seuil de poursuite.

Dans l'autre sens, l'augmentation de disponibilité obtenue sur le positionnement du dispositif 300, grâce aux hybridations, facilite les traitements nécessaires dans la réception des signaux pulsés multi synchrone et multi-source que ce soit dans la détection des impulsions ou leur datation sur l'échelle locale de temps ou bien dans le traitement nécessaire à la séparation et à l'identification des sources.

Enfin, l'augmentation importante du nombre d'observables du filtre de navigation, acquis par les hybridations lâches et serrées, en même temps que la qualité des modèles statistiques de bruit et erreurs, mis en oeuvre dans des modes particuliers de réalisation du procédé conforme au cinquième aspect de l'invention, autorisent une nette amélioration des traitements d'intégrité dans le domaine position, connus de l'homme de l'art sous le nom de RAIM (acronyme de Receiver Autonomous Integrity Monitoring) et qui utilisent la redondance des mesures. La cohérence des types d'erreurs entre observables relais et observables directs, réalisée naturellement grâce aux principes utilisés, permet en effet de globaliser le nombre de degré de liberté dans le domaine des mesures en ajoutant simplement le nombre de mesures relais au nombre de mesures directes.

Tous les procédés d'amélioration de performances des systèmes de positionnements décrits dans les modes de réalisation particuliers des différents aspects du procédé de l'invention s'appliquent a *minima* à étendre les performances des systèmes GNSS dans leurs zones de couverture, à étendre cette couverture aux zones masquées avec des performances de précision et d'intégrité accrue. En conséquence, l'invention participe à améliorer toute application intégrant déjà des récepteurs GNSS, quels qu'ils soient conventionnels, ou SBAS, ou GBAS, ou assistés par des moyens de communication, selon les procédés de type A-GPS ou A-GNSS, RTK.L'invention peut s'appliquer également à étendre la couverture et les performances d'autres systèmes de positionnement comme les réseaux basés sur les émetteurs récepteurs ultra large bande, récemment développés ou d'autres systèmes de radio navigation plus conventionnels.

Finalement la figure 1 montre le dispositif 400, dit de positionnement en réseau *ad hoc.* Ce dispositif peut être décrit en première approximation comme l'intégration dans un même boîtier d'un dispositif capable du positionnement hybride, compatible en réception avec tous les relais de la figure 1, et d'un dispositif de relais capable d'émettre un signal pulsé multi synchrone multi-source. Il a la capacité de se mettre en réseau qu'on qualifie de réseau *ad hoc* de positionnement avec ses homologues pour un système de positionnement en réseau coopératif et en utilisant un procédé spécifique de positionnement en réseau *ad hoc.*

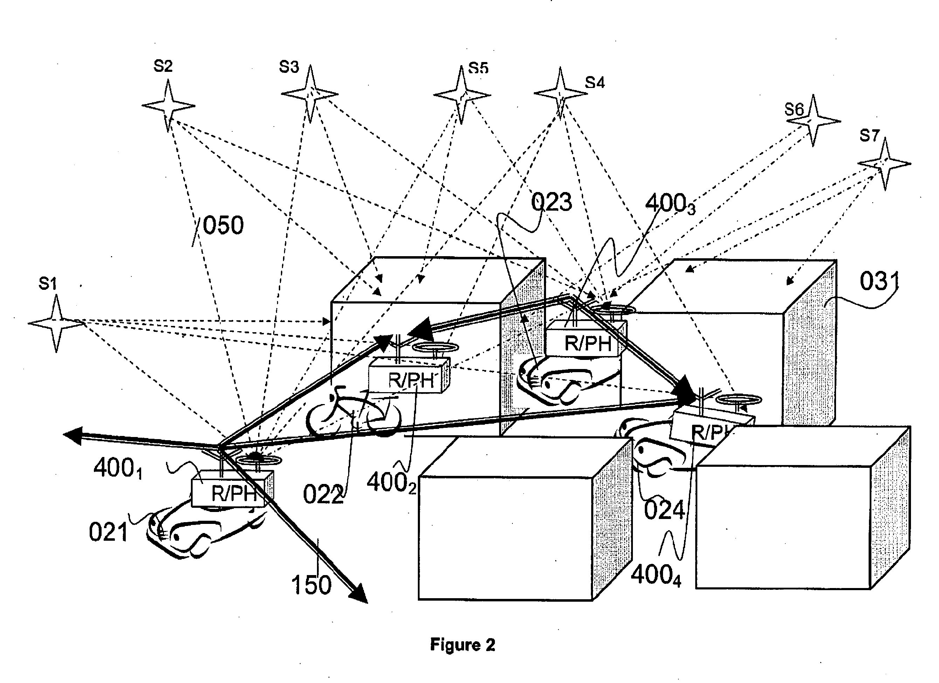

En figure 2, on observe une utilisation opérationnelle typique du dispositif 400. Dans un milieu urbain dense, où interviennent un nombre important de masquages des signaux de positionnement, dus aux immeubles 031, sont dispersés quatre des dispositifs de positionnement en réseau *ad hoc* référencés en 400₁, 400₂, 400₃ et 400₄ , respectivement solidaires des véhicules 021, 022, 023 et 024. Compte tenu de leurs positions à l'instant de l'image, ils profitent d'une diversité géométrique variable en regard des sources de signaux de positionnement appartenant à leur environnement et leur capacité de réception directe de ces sources. Les sources appartiennent tous à un système cohérent de sources, sont au nombre de 7 visibles en ciel ouvert. Le véhicule 400₁ est en visibilité directe de 6 sources, lui offrant une dilution de précision faible. Il réalise facilement son propre positionnement, car il bénéficie d'une bonne réception des signaux directs de positionnement. Il joue donc également le rôle de relais en diffusant autour de lui un signal pulsé multi synchrone multi source pour transmettre les échelles de temps des sources qu'il reçoit correctement, à savoir 7 sources. Le dispositif 400₃, solidaire du véhicule 023 bien que dans un canyon urbain, reçoit beaucoup de sources positionnées haut dans le ciel mais reçoit mal les signaux des sources à élévation faible S1 et S7. Sa dilution de précision va donc être élevée bien qu'il reçoive 5 sources. Dans ces conditions, le dispositif 400₃ reçoit sur certains slots temporels le signal pulsé multi synchrone multi-source émis par le dispositif 400₁, le traite et l'utilise en observables relais pour une hybridation lâche dans son filtrage hybride de navigation pour améliorer sa dilution de précision, et le retransmet après des contrôles d'intégrité sur les cinq sources vues en commun avec le dispositif 400₁ pour son environnement direct sur les autres slots de temps. Les dispositifs 400₂ et 400₄ sont eux momentanément en position où ils sont en visibilité d'un nombre insuffisant de sources pour réaliser un positionnement. Ils se mettent donc en position d'écoute des signaux pulsés multi synchrone multi-source de leur entourage et travaillent en mode pur de positionnement hybride. Grâce à la proximité des dispositifs analogues émettant dans le réseau *ad hoc,* ils profitent d'excellentes conditions d'hybridation serrée et vont procéder à une ré acquisition immédiate des signaux des sources non visible à l'instant de l'image, dès lors qu'après un déplacement, ils retrouvent le signal en visibilité directe. Les performances en disponibilité et continuité de service sont alors énormément accrues dans cet environnement difficile pour tous les dispositifs capables de procéder à ce positionnement en réseau. L'accroissement en précision et intégrité est également très net grâce à la réduction de la dilution de précision obtenue même en hybridation lâche, et ce facteur étant un paramètre important des faiblesses de performances en milieu urbain dense, en particulier pour les systèmes globaux de navigation par satellites.

On donne, ci-après, une description détaillée des premiers et deuxième aspects de la présente invention concernant les procédé et dispositif de relais pulsé multi synchrone multi-source, en regard des figures 3 à 13.

La figure 3 représente, schématiquement, les interfaces et les étapes du procédé mis en oeuvre par le dispositif 100, dans la progression où elles sont réalisées dans chaque mode de réalisation du procédé de relais conforme au premier aspect du procédé de l'invention. Au niveau des interfaces et dans un but de clarté, la figure distingue les aériens d'antenne A et B du reste des moyens de réception et d'émission. Le signal reçu 050 est un signal composite de toutes les sources des signaux de positionnement de l'environnement à traiter et le signal pulsé multi synchrone multi-source 150 est celui émis par le relais 100.

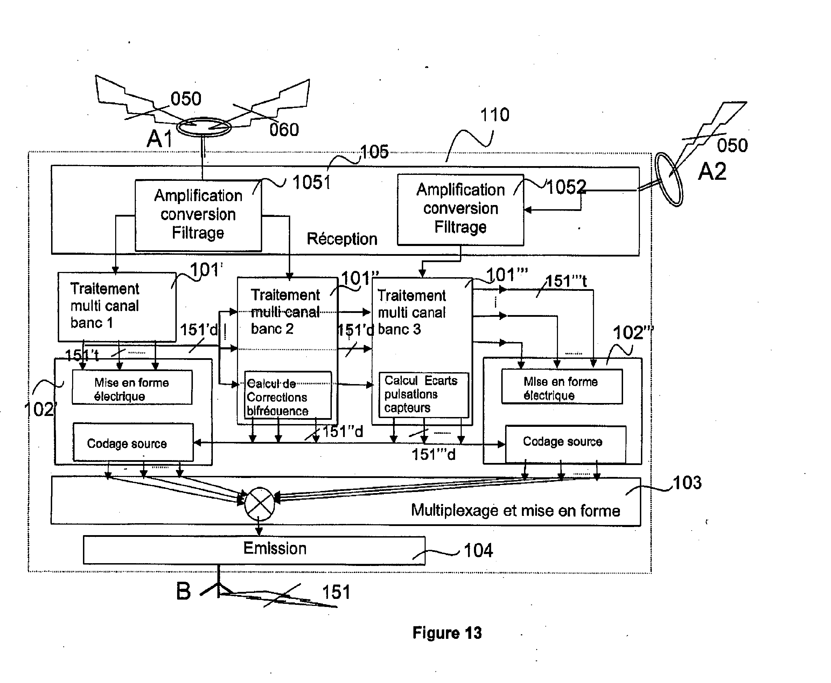

Dans la figure 3, après l'étape de réception utilisant l'antenne A, ou selon une variante un capteur de réception, arrive l'étape de séparation du signal composite venant des sources, en signal provenant d'une seule source, source par source dans une étape conventionnelle de traitements multi canaux 101 composée d'une pluralité de traitements canal 1011, 1012,...101i... 101n, conformes à l'état de l'art dans leur généralité, mais présentant une interface particulière 151 à décomposer par canal en 1511, 1512,.. 151i.. ,151n qui va être décrit dans les lignes qui suivent, mais dont on peut dire dès à présent qu'il est décomposé, pour chaque canal, en deux parties (référencées 151it et 151 id) pour distinguer l'aspect temporel, de l'aspect donnée. A la suite, chaque étape de traitement multicanal est suivie d'une étape de génération des pulsations canal 102, par canal 1021, 1022,...102i,... 102n, et donc par source et par signal, indépendamment l'un de l'autre dans certains cas (cas illustré en figure 3), et, selon une variante, pour certaines étapes de type 102 (voir les étapes 102' figure 4 et ou voir étapes 102" et 102"' figure 13), traités par groupement de canaux. Les buts des groupements de canaux sont multiples, et peuvent être représentatifs :
- de groupement de signaux d'une même source (par exemple signal pilote et signal données d'un service de Galileo, car l'horloge source est la même dans les deux cas, ou signal de la fréquence L1 et de la fréquence L2 sur GPS pour créer une correction bi-fréquence représentative d'un délai ionosphérique,...),
- de groupement de sources (par exemple restitution d'une horloge virtuelle composite, ou calcul de corrections différentielles),
- et/ou de groupement de capteurs (par exemple, calcul de différences de phases porteuses entre capteurs pour une future détermination d'attitude dans un relais d'attitude).

La liste des exemples donnés ici n'est nullement limitative, et est donnée à titre indicatif. Dans ces étapes de génération dé pulsations canal 102i sont générés des signaux électriques, dits pulsations canal, parce qu'ils sont générés, dans des modes particuliers de réalisation du procédé de l'invention, à l'instant précis où un marqueur de temps précis, est reconnu, dans le traitement canal, comme étant reçu de la source par l'intermédiaire de son signal de positionnement. On se reporte à la figure 5 qui détaille les étapes 101i et 102i et leurs interfaces 151 it et 152it.

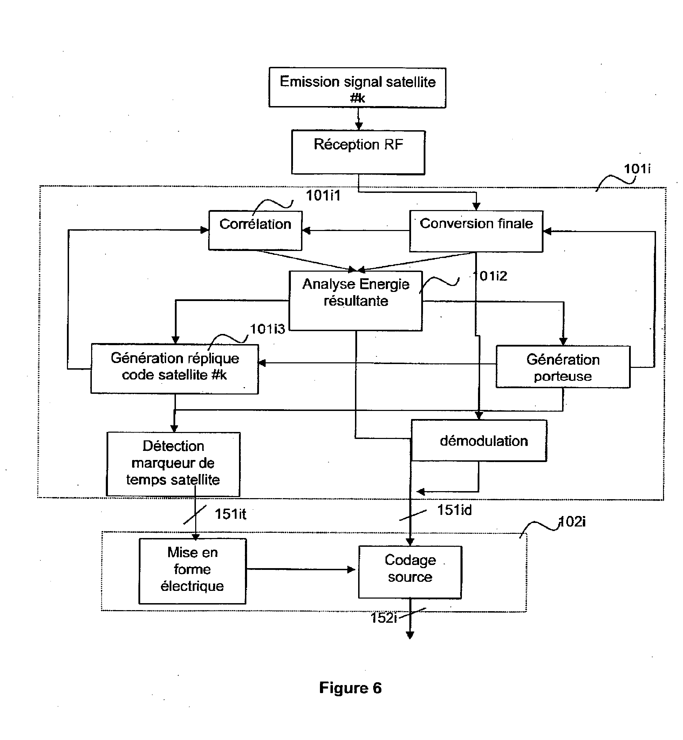

Dans la figure 5, on voit que l'interface 151t est produite par un détecteur d'époque, qui fonctionne comme un déclencheur, attaché à la génération d'une réplique du code de télémétrie pour un traitement de corrélation avec le signal reçu. La mise en forme électrique consiste à générer un signal électrique présentant une transition de front déterminée à l'instant où une pulsation devra être émise par les blocs de multiplexage et mise en forme 103 et d'émission 104 quand ils recevront ce signal. La transition de front électrique correspond à l'information d'époque de code calculée dans l'étape 101 i. Dans la figure 5, le déclencheur, après mise en forme électrique, qui a été placée dans l'étape 102i pour plus de clarté, est en position haute à l'instant précis où la réplique transite de la bribe numérotée 1023 à la bribe numérotée 1 dans la génération, et redescendra en position basse aussitôt après, dès lors que les traitements suivants auront été déclenchés. Cette transition correspond par exemple à la conventionnelle époque de code du signal GPS C/A qui comporte 1023 bribes. Evidemment, l'exemple de la figure 5 traite de ce signal GPS C/A, mais il peut être généralisé à n'importe quel signal de positionnement sur choix déterminé, et entendu avec l'utilisateur du relais dans un document d'interface, ledit choix portant sur une transition ou plusieurs transitions, ou plusieurs fragments du code de télémétrie composant l'essentiel de l'information temporelle dans le signal de positionnement. Selon une variante, des transitions prises sur la porteuse de ce signal peuvent également être choisis, dans la mesure où elles peuvent être ramenées à l'échelle de temps de l'horloge source. C'est le cas des signaux GNSS qui sont générés en cohérence code - porteuse et cette utilisation peut être particulièrement utile dans un relais d'attitude. Par ailleurs, au moins une partie des étapes 101i, chacune étant affecté au traitement d'une source et traitant chaque source visible à minima, réalise les traitements du signal de positionnement, conformément à l'état de l'art d'un récepteur de radio navigation ou plus généralement de traitement d'une mesure télémétrique. Il s'agit des traitements d'acquisition et de poursuite du signal, par exemple du signal GNSS comme décrit dans la figure 5 et dans la figure 6, entre réception et restitution des observables.

La figure 6 représente une séquence possible, simplifiée, des traitements réalisés en poursuite alors que dans la figure 5 seulement les fragments utiles à la compréhension, propres au traitement de génération de la réplique (101 i3 en figure 6) et à la corrélation (101i1 en figure 6), et avant analyse de l'énergie résultante (101i2 en figure 6) pour détection d'écart de synchronisation et réducteur d'écart par DLL (acronyme de Delay Lock Loop pour boucle à asservissement de retard) ont été rapportés, dans le but de fournir une sorte de chronogramme. Dans une implémentation préférentielle de l'invention, et dans le cas de l'utilisation des sources satellitaires des systèmes GNSS, les étapes de génération des pulsations canal sont actives lorsque les traitements du signal sont dans la phase stationnaire de poursuite, avec une synchronisation récurrente de la réplique sur le signal reçu. Le principe du procédé de relais conforme au premier aspect de l'invention, au niveau du relais, repose en effet sur le choix de marqueurs de temps récurrents inclus dans le signal des sources, et du relais sans délais de ces marqueurs de temps dès qu'on les a reçus au niveau de l'antenne A. Ainsi les traitements de poursuite du signal sont mieux adaptés que les traitements d'acquisition, bien que ces derniers puissent aussi être utilisés.

On voit en figure 6 que la détection de marqueur de temps satellite peut provenir de la réplique de code pour la corrélation ou de la réplique de porteuse pour la conversion finale en bande de base, ou des deux sources d'informations. La discrimination d'un instant marqué du signal GNSS peut ainsi également être pris sur la porteuse, à partir de la boucle de porteuse du récepteur, réduisant l'effet Doppler. A titre d'exemple, on donne la marque du début du 100° cycle de porteuse après une époque de code. Cette information qui peut être ajoutée à l'information prise sur le code dans un train de pulsations canal peut alors porter la propagation en vitesse de phase en plus de l'information en vitesse de groupe. Elle est particulièrement intéressante dans un relais d'attitude, du fait d'une longueur d'onde de porteuse plus appropriée que la longueur d'onde de code pour mesure une différence de temps de propagation entre capteurs.

La figure 6 montre aussi que le traitement canal peut fournir une donnée 151id. Dans un mode particulier de réalisation du procédé de relais conforme au premier aspect de l'invention, cette donnée est le bit du message de navigation du signal, dès sa démodulation, qui peut venir en surimpression de la pulsation canal en cours, comme ceci est illustré en figure 7. Ce mode de réalisation particulier du procédé de relais conforme au premier aspect du procédé de l'invention peut être particulièrement utile au traitement du dispositif 200 ou 210, pour acquérir les données qui permettent le positionnement des sources, mais également au traitement du dispositif 300, dans un but particulier d'amélioration de la sensibilité du récepteur par les méthodes connues de l'état de l'art.

La figure 6 montre aussi que l'interface 151id peut profiter des résultats de l'étape d'analyse de l'énergie résultante 101i2 du traitement canal. En effet dans des variantes, l'interface numérique 151id, en codage binaire par exemple, est une donnée transmise à l'utilisateur par surimpression sur l'information temporelle 151 it, ou bien une correction, dite spatiotemporelle dans ce document, puisque, dans les principes télémétriques visés ici, une durée vaut une distance, et que les corrections à apporter sont soit des désynchronisations, soit des délais perturbant le chemin géométrique. Il est à noter ici que la donnée transmise peut être la valeur de la correction à apporter à l'information temporelle 151it pour une meilleure précision de la mesure télémétrique finale de l'utilisateur. Dans ce cas, c'est à l'utilisateur final d'appliquer ladite correction spatiotemporelle, conformément au document de standard d'interface du relais 100. Ladite correction spatiotemporelle ou information peut par ailleurs être le résultat d'un filtrage et être ainsi d'une validité non directement simultanée du marqueur de temps en intégrant des événements du « passé proche».

Dans le cas de la surimpression de 151id et 151it, celle-ci a lieu selon une variante soit, dans une étape, dite de codage source dans ce document, qui fait partie intégrante de l'étape de génération des pulsations canal 102i et qui correspond à apporter une modulation à la future impulsion élémentaire crée dans l'étape de multiplexage et mise en forme temporelle (étape 103 de la figure 4), soit directement dans l'étape de multiplexage et mise en forme temporelle (étape 103 de la figure 4), par exemple en générant un train d'impulsion élémentaires représentative de cette donnée binaire 151id, dans un espace vide entre l'information temporelle crée sur un canal donné et le suivant par ordre chronologique d'arrivée des marqueurs temporels sur les sources.

Dans le cas où la correction spatiotemporelle est appliquée directement au niveau du relais, cette correction peut être appliquée, selon une variante soit dans l'étape de génération des pulsations canal 102, sur un signal électrique, soit dans l'étape de multiplexage et mise en forme temporel 103 directement sur un signal radio ou optique. Dans la variante où les corrections ne sont pas appliquées au niveau du relais l'étape de multiplexage et de mise en forme temporelle 103 respecte scrupuleusement les instants d'arrivée des marqueurs de chaque source, dans leur ordre d'arrivée et en respectant particulièrement les écarts de temps entre eux.

Selon une variante, et particulièrement si les horloges des sources ne sont pas physiquement synchronisées, un traitement anticollision de pulsations est mis en oeuvre. Il consiste soit à exclure des pulsations qui arriveraient à des instants trop proches, soit à en retarder une, quitte à lui infliger une surimpression qui permettrait à l'utilisateur final d'être informé de ce retard particulier. Il est clair ainsi que ce mode particulier de réalisation du procédé conforme au premier aspect de l'invention autorise le traitement d'un ensemble de sources non physiquement synchronisées, pourvu qu'elles appartiennent à des sous ensembles cohérents.

Par ailleurs, selon une variante, on peut générer les pulsations canal d'une horloge virtuelle composite, par traitement de plusieurs canaux, et en particulier de ceux qui traitent d'un sous ensemble cohérent de sources (voir figure 4, et en exemple tous les canaux qui traitent les sources du système GPS). Ce traitement peut consister à entretenir une échelle de temps locale asservie à suivre la synchronisation moyenne filtrée sur un réseau de sources, celles des canaux retenus pour créer ledit traitement, selon les méthodes de l'état de l'art des récepteurs de navigation par satellite et connues sous le nom de TMP (acronyme de Time Mark Pulse). Selon une variante" plusieurs horloges virtuelles composites peuvent être crées pour tenir compte des différents réseaux cohérents de sources relayées, et chacune est distinguée des horloges sources relayées ensemble grâce au traitement de l'étape de multiplexage et de mise en forme temporelle 103 par la surimpression de l'équivalent d'un identifiant de source par exemple.

Selon une variante, particulièrement si le relais est mobile, ce traitement qui, pour trouver le bon asservissement de l'horloge virtuelle composite et créer les interfaces 151 it correspondante, résout la position du relais, peut alors transmettre cette valeur de position à l'étape de génération des pulsations du canal correspondant dans l'interface 151id, pour que celle-ci passe en surimpression dans le signal multi synchrone multi-source.

Selon une variantes, cette interface 151id porte une information sur la qualité du traitement dudit canal et/ou de plusieurs traitements de canaux combinés (cas de la figure 4), et/ou sur une correction à apporter à l'information temporelle 151it, dans les traitements futurs. Par exemple un des éléments de la liste ci-dessous peut être l'objet de l'interface 151d, la liste ci-dessous étant donnée à titre indicatif et sans que cette liste soit limitative :
- un indice de confiance correspondant au rapport signal sur bruit après désétalement du signal,
- un statut des états de poursuite ou d'acquisition du signal ou de démodulation efficace des données du signal,
- une correction de calibration correspondant au temps de propagation propre au canal ou au relais, et/ou délai interne nécessaire aux traitements et calculs, ou biais inter capteurs dans la variante qui implémente plusieurs capteurs, ou encore les différents bras de levier correspondants (de A vers B et entre A1et A2),
- une correction correspondant à un délai de propagation non représentatif d'une distance géométrique entre la source et l'antenne réceptrice A du relais et on cite en particulier toute corrections différentielles qui peuvent être évaluées dans le relais grâce à un calcul de l'état de l'art réalisé par évaluation sur les données émanant des sources d'un réseau de sources cohérentes, de l'écart entre mesures de pseudo distance ou pseudo vitesse et prédiction à partir des connaissance a priori de la position et temps du relais, de manière analogue à celui d'un récepteur de navigation mis en mode station de référence, lesdites corrections différentielles étant représentatives : des délais ionosphériques et troposphériques, dans le cas où les sources sont satellitaires, et qui peuvent aussi être évaluées par mesure bi fréquence pour la ionosphérique si deux canaux traitent deux fréquences différentes sur une même source,
- des dégradations volontaires du signal, particulièrement celles du SA du systèmes GPS, le cas échéant,
   des erreurs et imprécisions des positionnements ou horloges des sources,
   biais d'horloge locale à réduire communément sur les interfaces 151 it,
- une anomalie dans le traitement détectée par des contrôles d'intégrité récurrents qui peuvent être actifs dans cette étape du traitement de signal,
- une anomalie ou panne matérielle sur un canal,
- un taux d'erreur de bits anormalement élevé, ou un contrôle de parité sur des messages transmis incohérents,
- une alerte de décrochage de boucle qui peut être imputable à une interférence, en particulier sur raie parasite,
- une anomalie dans la fonction de corrélation imputable à un multi trajet et dans ce cas, l'information peut porter en terme d'alerte ou en terme de valeur du délai si celui-ci a pu être évalué par des techniques de l'état de l'art, et
- une information transmise dans le signal lui-même et faisant état d'une anomalie sur ce signal (par exemple venant d'un message d'intégrité sur Galileo) ...

Selon une variante, l'étape de traitement canal comporte un contrôle de l'intégrité du canal. Ce traitement suppose un modèle statistique a priori des bruits et erreurs susceptibles de perturber la détection d'époque, ledit modèle s'appliquant à une caractéristique particulière de la mesure. Les paramètres de ce modèle statistique dépendent en particulier du rapport signal sur bruit présent sur le canal de transmission. Le contrôle d'intégrité consiste à réaliser un test statistique d'hypothèses sur ladite propriété particulière appliquée à la mesure réelle. Le traitement permet d'évaluer un indice de confiance dans la mesure, qui peut servir aussi d'alarme au cas où le modèle n'est pas réalisé au titre d'une probabilité de fausse alarme ou de non détection. Cet indice de confiance peut être pré négocié en regard d'une performance attendue de résidu d'erreur, par exemple dans le document de standard d'interface du relais. Selon une variante, ce sont les probabilités qui sont négociées et un rayon de protection pour satisfaire ces probabilités est transmis dans l'interface 151d. Un modèle statistique des bruits et erreur en bruit blanc gaussien centré additif est généralement suffisant, même s'il crée une borne supérieure au modèle réel.

Selon une variante, l'étape d'intégrité porte d'un coup sur l'ensemble des canaux et est alors dite « contrôle d'intégrité relais », et dans ce cas elle utilise la redondance des canaux et sources pour évaluer soit une intégrité globale si la redondance est faible soit une intégrité individuelle par canal si la redondance est très grande, et en particulier dans sa diversité géométrique.

Dans tous les cas le résultat des contrôles d'intégrité (alertes, rayons de protection ou indices de confiances) porte soit sur une information transmise par l'intermédiaire de l'interface 151id ou encore par l'intermédiaire des interfaces 155 ou 157 de la figure 4, soit sur l'exclusion d'un canal dans les étapes de génération de pulsations canal 102 et/ou de multiplexage et mise en forme temporelle 103.

Revenant au signal déclencheur 151it, comme décrit avec la figure 5, ce signal électrique (par exemple TTL) fonctionne comme un déclencheur, mis en position haute, du moins avec une transition de front montant suffisamment raide pour marquer avec précision l'instant précis où le marqueur de temps est reconnu dans le traitement de synchronisation signal source -signal réplique mis en oeuvre dans l'étape 101 i.

Le choix du marqueur de temps là reconnaître dans l'étape 101i est prédéterminé, et décrit dans le document d'interface du relais, de façon à être connu à la fois de l'utilisateur et du relais, pour un traitement adéquat en réception par l'utilisateur du relais, et en particulier pour qu'il en déduise une valeur d'observable reliée à la source du signal de positionnement, que ce soit en TOA (Time of Arrival), ou bien en TDOA (Time Différence Of Arrival) en utilisant l'unité de temps retenue pour le relais de l'échelle de temps de source.

Les résultats des étapes de génération des pulsations dépendent des résultats des étapes de traitement canal.. Dans l'invention, l'étape 102i peut ne faire que la mise en forme électrique du déclencheur sur l'instant d'arrivée du marqueur de temps dans le traitement canal. L'étape 102i est aussi décrite selon plusieurs variantes dans les figures 7 à 11. Dans chaque cas, il s'agit d'une surimpression de la donnée numérique 151id en codage source sur une mise en forme électrique du signal déclencheur émanant de l'étape 101 et noté 151it. On a déjà évoqué cette surimpression qui permet de transmettre toutes sortes de données ou de corrections propres au canal en même temps que les échelles de temps des sources. Dans tous les cas et afin de respecter le besoin de synchronisation au niveau de l'utilisateur du relais, le débit de données en surimpression sur les échelles de temps est limité, de sorte qu'il y ait le moins possible d'interférences inter symboles sur les marqueurs des échelles de temps d'une même source d'une part et inter sources d'autre part. Les figures suivantes montrent à titre indicatif et non limitatif d'autres façons d'utiliser la surimpression :
- la figure 7 concerne la création d'une surimpression du message de navigation, plus quelques données internes ou externes le cas échéant. Parmi les données externes au canal, on cite un code d'accès au signal du relais, une signature du relais qui permet une authentification, un code de multiplex si plusieurs relais doivent partager le même canal de transmission, un identificateur du capteur utilisé, une identification du destinataire du signal par exemple pour un relais uniquement en réponse à une requête du destinataire ou encore toute sorte d'autres données de bas débit,

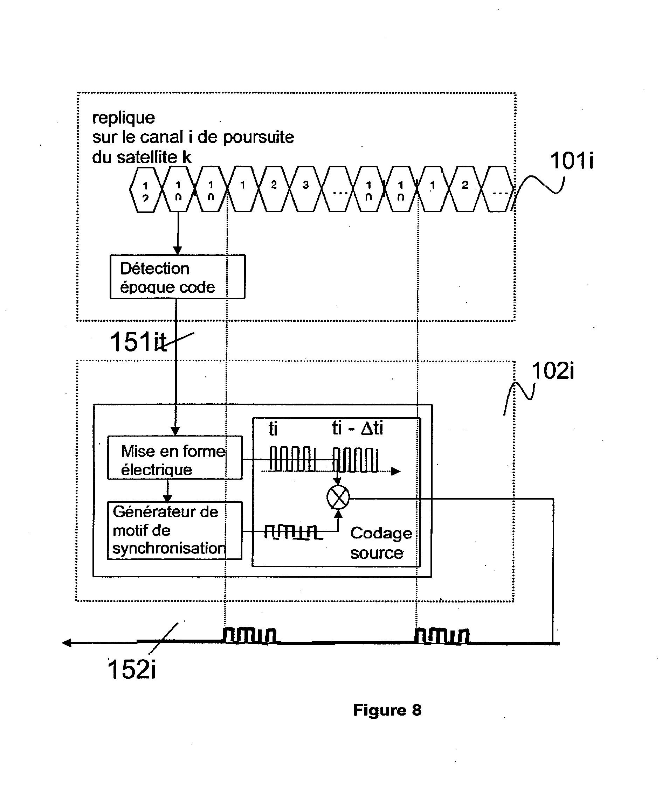

- la figure 8 montre le cas d'un motif de synchronisation qui peut être mis en surimpression pour une meilleure détection et synchronisation au niveau du destinataire,

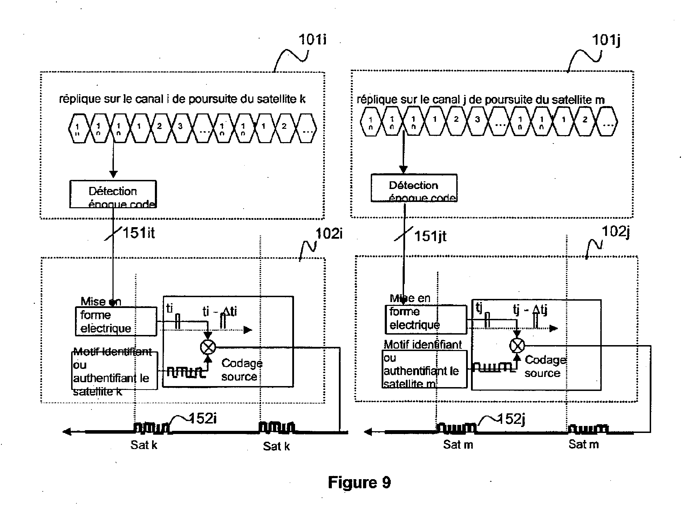

- la figure 9 montre le cas d'un identificateur de source, et

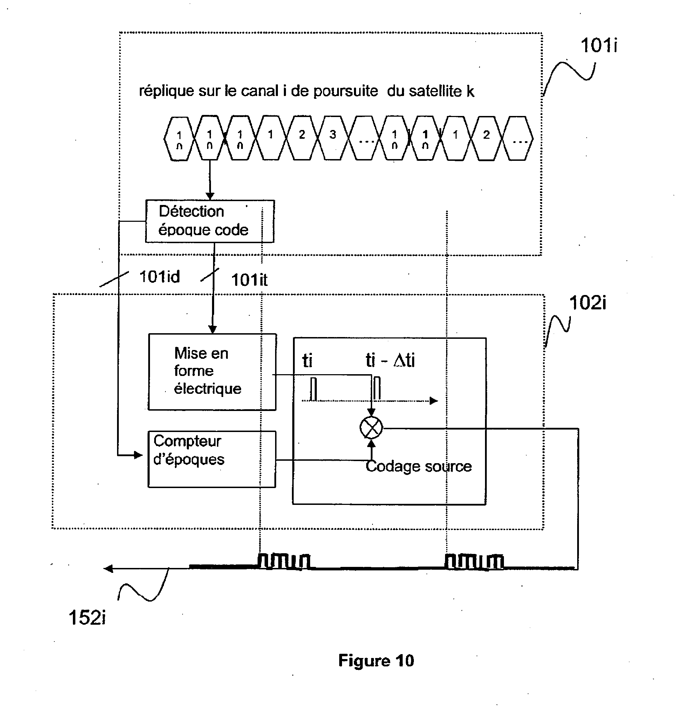

- la figure 10 montre le cas d'un compteur d'époque qui peut faciliter la restitution d'un TOA ou TDOA au niveau du destinataire.

Selon une variante, et pour des utilisations du type LBS par exemple (, acronyme de Location Based Services pour systèmes basés sur la localisation), le relais fonctionne, comme illustré en figure 4 au niveau de l'étape 103 de multiplexage et mise en forme temporelle, alternativement en fournisseur d'échelles de temps de sources, et en fournisseur de données de débit plus élevé que celles qui peuvent être transmises dans le mode relais pulsé multi synchrone multi-source. L'utilisation de techniques ultra large bande pour des zones de couverture restreintes, du fait de la puissance émise, autorise parfaitement la transmission dans un mode alternatif de haut débits de données, qui conviennent parfaitement à des applications LBS. Dans ce cas, l'interface 158 fournit ces données au relais, données qui sont tamponnées au cours de l'étape 107 dite de source des données internes et externes, puis transmises soit via l'interface 157a ou 157b vers l'un des étapes 102 ou 102' de génération des pulsations canal, de façon à être passées en surimpression des marqueurs de temps si lesdites données sont bas débit, soit, si elles sont haut débit, via l'interface 157c ou 157d vers l'étape de multiplexage et mise en forme temporelle 103 pour être multiplexée comme les échelles de temps sources et entre deux marqueurs de temps de celles-ci ou finalement fournir des slots de temps spécifiques aux données.

Dans la figure 3, l'étape de génération de la pulsation canal 102 agit en liaison très proche avec l'étape de traitement multicanal et crée de façon quasi périodique (au Doppler près si la source est défilante et à l'instabilité court terme non corrigée de l'horloge locale près), dès la réception des marqueurs de temps choisis sur chaque source traitée, un signal électrique dont le front montant (ou descendant) est synchrone de ces marqueurs. L'étape de multiplexage et mise en forme 103 est chargée de combiner dans un même signal électrique les pulsations canal en provenance de chaque canaux, après les codages sources décrits plus haut, en respectant les instants d'arrivée de chaque pulsation canal, et si nécessaire de ramener le résultat à un codage en mots binaires ou orthogonaux pour une bonne transmission. Cette étape réalise également la mise en forme temporelle selon une forme impulsionnelle destinée à définir l'occupation spectrale de l'émission finale de chaque transition du signal numérique en bande base résultant du multiplexage des pulsations canal et des données supplémentaires, après une modulation supplémentaire si nécessaire du signal électrique selon les méthodes de l'art.

Finalement l'étape d'émission 104 complète la chaîne de traitement du relais 100 (comme décrit en figure 3) avec ses traitements classiques d'amplification de puissance adéquate à la couverture de la zone où le service de relais pulsé multi synchrone et multi-source doit être fourni dans l'application souhaitée.

L'aérien A, en figure 3 est en interface de réception avec les signaux 050, provenant d'une pluralité de sources, qui dans un mode de réalisation particulier de l'invention, sont des signaux provenant de sources satellitaires des systèmes globaux de navigation par satellite. L'aérien A et l'étape de réception sont dans tous les cas les moyens adaptés pour recevoir et prétraiter les signaux provenant des sources du système de positionnement à relayer. L'antenne A, si le signal à recevoir est RF ou la cellule A si le signal à recevoir est optique a dans tous les cas un diagramme le plus ouvert possible afin de recevoir une pluralité de sources bien distribuées dans l'espace géométrique autour de lui. La sortie de l'étape de réception est considérée, dans un mode de réalisation particulier du procédé conforme au premier aspect du procédé de l'invention, comme une sortie numérique échantillonnée pouvant être opérée sans distorsion par un calculateur dont la puissance de calcul est adaptée au besoin en traitement du signal reçu par A. Cela suppose un traitement simultané pour l'ensemble des sources en visibilité potentielle de l'aérien A. Comme c'est indiqué en figure 3, cette étape de traitement des signaux sources, dite traitement « multi canaux » sur la figure 3 met en parallèle des traitements qui peuvent être identiques ou différents selon les canaux, mais dans tous les cas tels qu'ils s'attachent séparément à tirer l'information, nécessaire à la suite du procédé, sur un signal provenant d'une seule source. Cette étape réalise donc la séparation des sources lorsqu'elles sont en accès multiple. Elle réalise également la synchronisation sur le code de télémétrie, avec restitution de porteuse le cas échéant, et en particulier dans le cas de GNSS où les satellites sont défilants. Elle réalise la démodulation des données transmises dans le message de navigation.

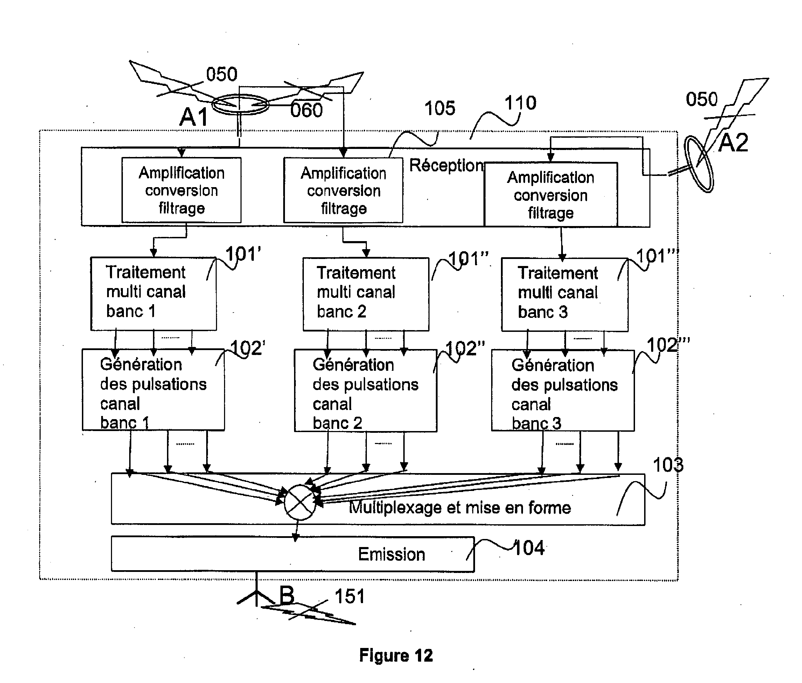

Par ailleurs, certaines sources vont fournir plusieurs signaux sur des fréquences différentes comme c'est le cas sur GNSS, et dans ce cas l'étape de réception peut avoir à multiplier les canaux de conversions en fréquence (voir figure 12 et 13 avec les signaux entrant 050 et 060). Selon une variante, le relais peut aussi travailler sur plusieurs aériens (A1 et A2 sur les figures 12 et 13), soit dans le but d'avoir une ouverture sur le « ciel », ou à l'intérieur d'un bâtiment plus grande de façon à avoir une meilleure diversité géométrique soit pour atteindre des sources de nature différentes (extérieur et intérieur de bâtiment), soit enfin pour devenir un relais d'attitude. L'agencement des étapes de réception et de traitement multicanal et enfin de générations des pulsations canal est dans ce cas un peu adapté à la configuration d'antenne. Les figures 12 et 13 illustrent deux possibilités de traiter cette adaptation d'agencement, la figure 12 offre une parallélisation totale des traitements alors que la figure 13 montre un cas où les canaux peuvent être mixés à partir d'un niveau de traitement qui peut être variable, de l'émission 105 au multiplexage 103. On observe en figure 13, qui représente un mode de réalisation particulier du procédé de relais d'attitude, que l'étape de réception 105 est divisée en deux étapes d'amplification conversion filtrage séparées, l'une 1051 est consacrée à la réception des signaux 050 et 060 par le capteur A1 et l'autre est réservée à la réception des signaux 050 par le capteur A2. On a supposé dans cette figure que les signaux 050 et 060 sont issus d'un même groupe de sources sur deux fréquences différentes. Par exemple, on suppose, sans perdre de généralité, que 050 est l'ensemble des signaux des satellites GPS reçus sur L1 et 060 est l'ensemble des signaux reçus des mêmes satellites GPS sur la fréquence L2. L'étape 1051, après une descente en fréquence, par exemple sur la moyenne des deux fréquences, fournit ses résultats à deux bancs de canaux de façon séparée. On observe alors en figure 13 une double étape de traitement, l'étape de traitement multicanal banc 1, référencée en 101' se charge des signaux en fréquence L1 et l'étape de traitement multicanal banc2, référencée en 101"se charge des signaux en fréquence L2. On voit que ces deux étapes ont des issues différentes. L'étape 101' fournit les données temporelles 151't à l'étape de génération des pulsations canal 102', et des données informationnelles 151'd à l'étape 101", de telle sorte que l'étape 101", ne fournit que le résultat du calcul des corrections bifréquence 151"d, pour être traitées dans l'étape de génération des pulsations canal 102', en surimpression ou en correction directe des données temporelles 151't par exemple. On observe encore en figure 13, que la sortie de l'étape 1052, qui traite les signaux 050 reçus par le capteur A2 va être traitée par un banc de canaux spécifiques, dans l'étape de traitement multicanal banc3 101"'. Cette étape peut fournir des données temporelles de détection d'époque 151"'t en vue de générer des pulsations canal propres, grâce à l'étape 102"'. Grâce à sa réception également de données informationnelles 151'd, l'étape 101'" peut également calculer les écarts de réception entre capteurs A1 et A2, sources par sources et fournir cette donnée 151"'d aux deux étapes de génération de pulsations canal 102' et 102"' pour surimpression des signaux temporels traités respectivement par ces étapes. L'étape de multiplexage et mise en forme 103 réalise alors simplement le multiplexages des séries de pulsations canal provenant des étapes 102' et 102"'. En sortie de l'étape d'émission 104, le signal 151 est alors représentatif de la réception sur plusieurs capteurs par une variante de relais, dit relais d'attitude 110, et le signal 151 est dit pulsé multi synchrone multi-source multi-capteur. Il est à noter ici que le relais d'attitude doit remplir au moins la fonction de relais, telle qu'elle a été définie dans la description de la figure 3 en fournissant l'information principale fournie dans un signal 150, grâce à la réception sur au moins un des capteurs, et donc le signal 151 est un enrichissement d'un signal de type 150.

L'aérien B est le moyen de contrôler la propagation du signal pulsé multi synchrone multi-source généré par le relais 100. L'antenne B est adaptée à l'émission d'un ensemble ordonné d'impulsions ou de trains d'impulsions élémentaires de très courte durée à ultra courte durée, avec une puissance d'émission adéquate pour diffuser dans la zone de couverture du relais de façon préférablement hémisphérique, mais pouvant être isotrope, ou directionnelle selon le besoin de l'application. Une densité de flux homogène est préférée pour éviter des effets indésirables d'interférences ou d'effets de type proche-lointain.

Selon une variante, plusieurs aériens B1, B2..Bp peuvent être employés de manière à étendre la zone de couverture du relais.

L'ensemble d'impulsions ou de trains d'impulsions élémentaires couvre à minima les besoins de transmissions des échelles de temps de chacune des sources à transmettre avec une valeur de vecteur unitaire suffisante pour tenir les besoins de réactivité des applications que le relais dessert. Typiquement, dans le cadre de GNSS, une échelle de temps par source à 1 ms de pas est considéré satisfaisante, mais cette valeur est donnée ici à titre indicatif. On peut dès à présent retenir une vingtaine de sources GNSS visibles en permanence en tout point. Le signal ainsi composé est le signal pulsé multi synchrone multi-source 150.

Selon une implémentation préférentielle, le relais est adapté à relayer des signaux GNSS par un canal de transmission ultra large bande. En effet, étant donné leurs caractéristiques de pénétration des matériaux, leur très bonne résolution temporelle, et leur capacité à la discrimination de trajets multiples, les signaux impulsionnels ultra large bande (ULB) sont avantageusement choisis pour constituer le signal pulsé multi synchrone multi-source 150. Les signaux GNSS bien connus de l'état de l'art, sont basés sur les horloges extrêmement stables incluses dans les émetteurs. Ces horloges ne sont pas synchronisées entre elles physiquement, mais une horloge virtuelle composite est générée au niveau des infrastructures qui contrôlent la constellation et chacune des horloges de satellite est calibrée en regard de l'horloge virtuelle composite appelée échelle de temps système. Cette technique permet, au niveau de l'utilisateur des signaux GNSS, une trilatération sur des mesures de temps d'arrivée (TOA) ou sur leurs différences (TDOA). On désignera par signal GNSS pour tout signal à porteuse et modulation temporelle dont la génération :
- repose sur l'utilisation d'une horloge stable,
- offre des fronts montants suffisamment reconnaissables en synchronisation (large bande spectrale) et
- porte un moyen de comptage de ces fronts montants à partir d'une origine donnée des temps (par exemple grâce à de multiples proportionnalités entre les fréquences porteuses, les débits des codes de télémétrie qui se combinent dans le signal de navigation et les débits des données).

Selon une variante, d'autres sources sont envisageables, et en particulier celles appartenant à des systèmes de positionnement destinés à couvrir l'intérieur de bâtiments, qu'ils soient, par exemple sans que la liste soit exhaustive, des systèmes à base de télémétrie optique ou à base de techniques ultra large bande.

Selon une variante, le signal pulsé multi synchrone multi-source peut aussi être transmis par voie optique. Les antennes et les moyens d'émission sont alors adaptés en conséquence.

Selon une variante, on utilise pour des raisons de compatibilité électromagnétique, ou bien pour des raisons d'extension de la zone de couverture du relais, des signaux pulsés à bandes plus étroites, mais cependant très larges pour obtenir une résolution temporelle satisfaisante. Il existe dans les allocations réglementaires de fréquences des bandes de largeur suffisantes dans les allocations aux services aéronautiques de radio navigation pour adapter les procédés décrits ici à ce type d'applications. Une largeur de 100 MHz doit typiquement convenir au procédé en permettant une résolution temporelle de bonne qualité.

Les étapes d'émission 104 et de réception 105 n'ont pas été détaillées dans la figure 3 ou 4 dans un souci de simplification. Ici on peut considérer que l'étape de réception est celle de l'état de l'art. Dans les figures, les antennes GNSS ont été représentées en ellipse, alors que les antennes propres aux signaux de l'invention sont représentées en brins. Les antennes portent une lettre de définition afin de distinguer les localisations de ces antennes.

Les implémentations de la partie réceptrice GNSS décrites ici sont basées sur des implémentations conventionnelles avec une connotation implémentation matérielle et dans l'espace temporel des corrélateurs. L'applicabilité des procédés de l'invention ne se limite cependant pas à ce type d'implémentations. Une implémentation logicielle est parfaitement acceptable, de même qu'une corrélation dans le domaine fréquentiel, la base étant simplement sur le besoin de synchronisation sur les marqueurs de temps du signal GNSS, fonction réalisée dans tous les cas.

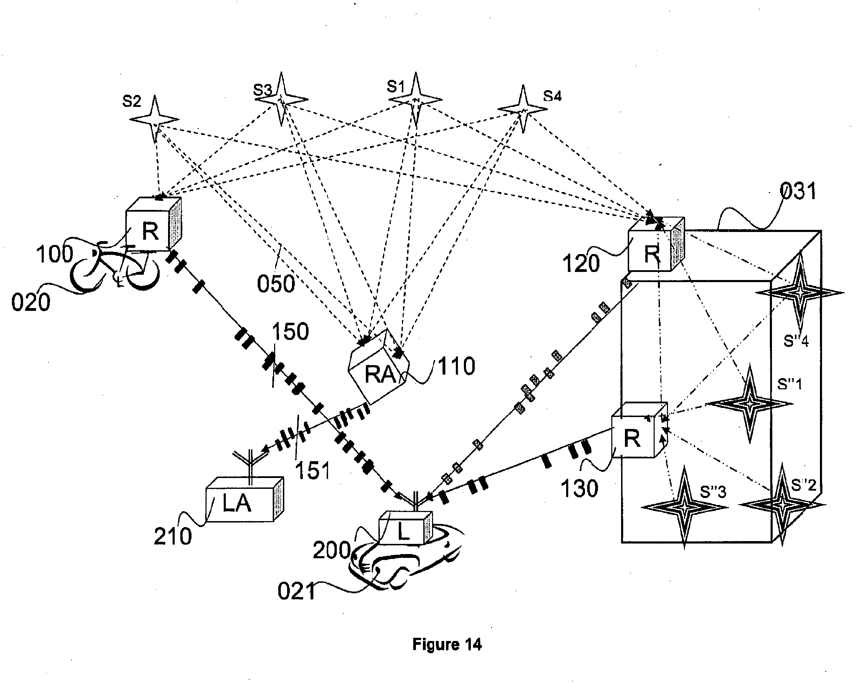

On donne, ci-après, une description détaillée des troisième, et quatrième et cinquième aspects de la présente invention concernant les procédé, dispositif et système de localisation à distance et détermination d'attitude d'un équipement relais pulsé multi synchrone multi-source, en regard des figures 14 à17.

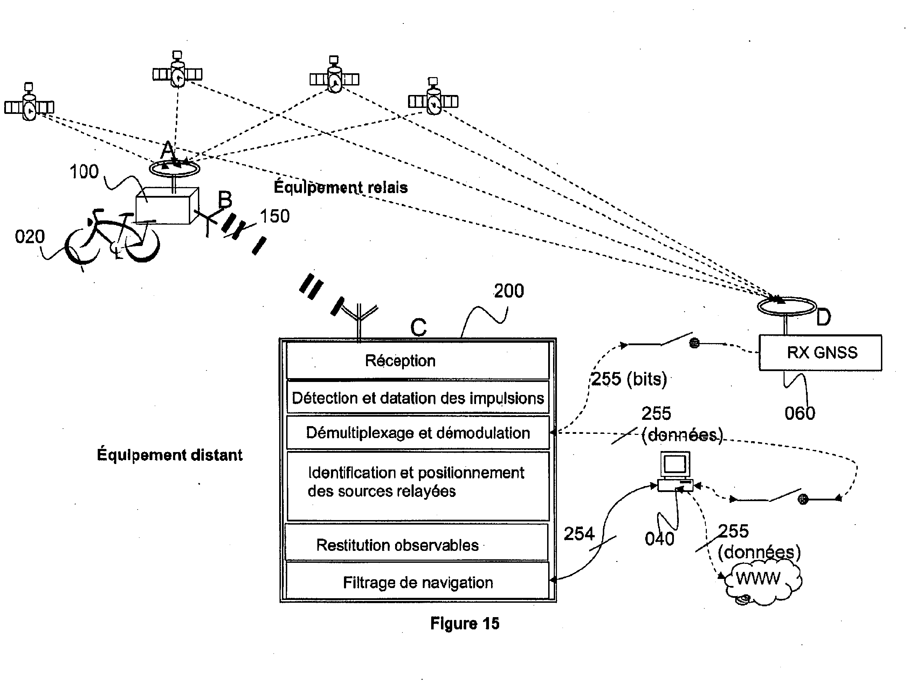

Les figures 14 et 15 donnent les conditions d'utilisation du procédé conforme au troisième aspect de l'invention à savoir le procédé de localisation à distance d'un relais pulsé multi synchrone et multi-source, et, selon une variante, de détermination d'attitude lorsque le relais est dans sa variante de relais d'attitude et que le signal reçu est un signal pulsé multi synchrone multi-source multi-capteur.

Le relais pulsé multi synchrone multi-source, comme on le voit en figure 14 en 100, 110, 120 ou 130 peut être rendu ou non solidaire d'un équipement mobile (par exemple le relais 100 est solidaire du mobile 020 en figure 14). Cependant, la localisation n'existe réellement que si ledit relais reçoit et relaie un nombre de sources cohérentes (c'est-à-dire appartenant à une même constellation, par exemple, appartenant à Si, ou encore toutes appartiennent à l'ensemble S"k) égal au nombre de degrés de liberté du mouvement de l'équipement mobile plus un. Au contraire la mobilité de l'équipement mobile 021 qui est solidaire de l'équipement distant chargé de la localisation 200 a peu d'importance. Dans les cas où la redondance est supérieure au nombre minimal nécessaire le dispositif de localisation peut au choix réaliser une évaluation de la distance qui le sépare de l'équipement distant, ou bien réaliser une synchronisation avec l'équipement mobile 020. Il peut encore, en alternative, réaliser un contrôle d'intégrité sur la position restituée du relais par technique de type RAIM, après avoir adapté correctement, en regard du problème posé, le modèle statistique de bruit et d'erreur, d'avoir adapté les probabilités de fausse alarme et de non détection, en regard des probabilités des événements redoutés, des performances cherchées et des temps de corrélation des mesures entre elles. Cette technique utilise en effet la redondance des observables. Dans ce mode particulier de réalisation du procédé conforme au troisième aspect du procédé de l'invention, l'adaptation est toute particulière, puisque les sources sont toutes traitées dans le même canal depuis le relais. En particulier dans les variantes où le relais a lui-même appliqué des contrôles d'intégrité, réduisant les erreurs liées aux sources, les événements redoutés ne se situent pas alors dans la mesure directe comme c'est traité habituellement dans l'état de l'art, mais davantage dans l'ensemble des erreurs, qui peuvent être décorrélées entre observables, et qui peuvent émaner du traitement propre au dispositif 200, c'est-à-dire dans le traitement du signal multi synchrone pulsé et l'extraction de ses données, ou à la propagation du relais à l'équipement distant.

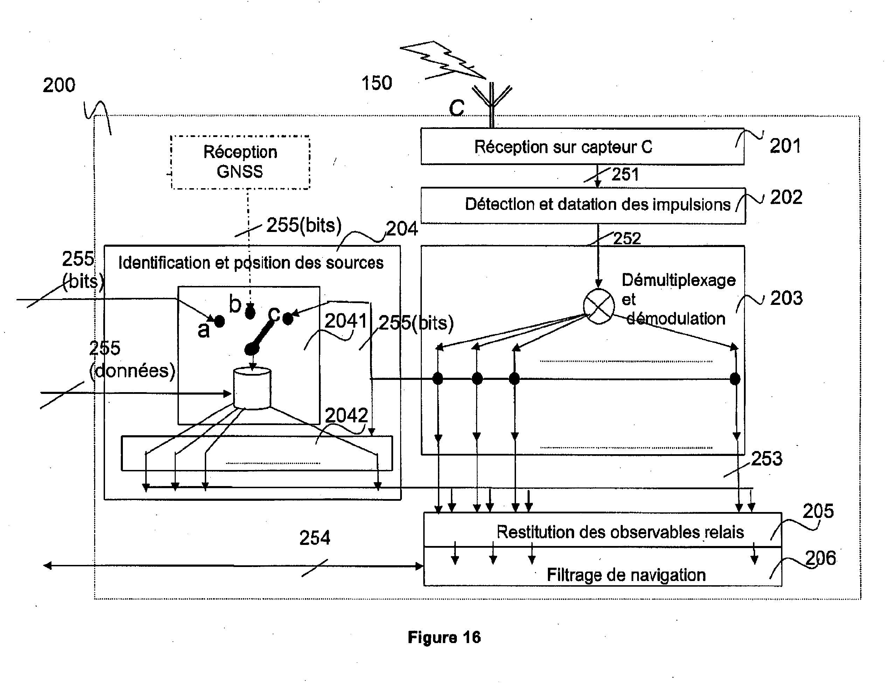

La figure 15 représente, schématiquement, les interfaces et les étapes du procédé mis en oeuvre par le dispositif 200, et la figure 16 détaille la progression où ces étapes sont réalisées dans un mode de réalisation préférentiel du troisième aspect du procédé de l'invention. Les étapes dans leur ordre de progression sont les suivantes : étape de réception 201 du signal pulsé multi synchrone multi-source, détection et datation des impulsions élémentaires et/ou trains d'impulsions élémentaires 202, puis démultiplexage et démodulation des impulsions élémentaires ou trains d'impulsions élémentaires 203, puis identification et positionnement des sources 204, à l'origine des impulsions dans la génération du signal reçu, et enfin une étape de restitutions des observables relais 205 et une étape de filtrage de navigation 206.

Le signal reçu par l'aérien C est un signal composite des signaux pulsés multi synchrones 150multi-source provenant de tous les relais en condition de visibilité et partageant le même canal de transmissionL'étape de réception 201 prévoit un traitement des accès multiples pour séparer le signal considéré des signaux provenant des autres relais. Cette étape n'est toutefois pas nécessaire si le système comprend un seul relais.

Selon une variante, pour l'équipement distant chargé d'une détermination d'attitude, le signal reçu est le signal pulsé multi synchrone, multi-source, multi-capteur 151 émis par un dispositif, dit relais d'attitude 110, mettant en oeuvre des traitements du type de ceux illustrés en figure 12 ou 13.

Suite à l'étape de réception 201, l'étape de détection et datation 202 des impulsions élémentaires ou des trains d'impulsions élémentaires est chargée de tout traitement qui permet de rehausser le niveau du rapport signal sur bruit, dans la bande de réception utile, par des filtrages, jusqu'à obtention d'une capacité de détection, synchronisation et de démodulation selon les méthodes de l'art. Selon des modes de réalisation particuliers, le traitement de détection, en analogique avec une simple diode détectrice de l'art, ou après numérisation et filtrage adapté selon le cas, mesure ou calcule l'énergie du signal reçue, la compare à un seuil choisi en fonction d'une probabilité de fausse alarme acceptable dans le bruit ambiant. L'instant de franchissement de ce seuil estconsidéré comme instant d'arrivée d'une impulsion élémentaire ou d'un train d'impulsions élémentaires. Dans un mode de réalisation préférentiel, l'étape de détection et datation des impulsions 202 filtre le signal reçu pour isoler la bande d'intérêt et cherche, à l'aide d'un détecteur quadratique, les zones temporelles du signal présentant de l'énergie. Ces zones ne contiennent typiquement qu'une seule impulsion, ou qu'un seul train d'impulsions relatif à une époque de code pour une source et un relais donnés. Le détecteur quadratique fournit un échantillon qui est daté. Avantageusement, on utilisera une recherche par dichotomie, telle que décrite dans l'article de L. Reggiani intitulé « Rapid search algorithms for code acquisition in UWB impulse radio » publié dans IEEE Journal on Selected Areas in Communications, Vol. 23, N°5, May 2005, pages 898-908. Les traitements spécifiques comportent en premier lieu la datation du déclenchement lié à la détection d'une impulsion sur l'échelle de temps locale. L'étape de détection et datation des impulsions reçues crée selon l'implémentation, en analogique un signal électrique, qui est échantillonné et tamponné, ou en numérique directement le tableau tampon, référencé 252 en figure 16, sur la période d'analyse choisie.

Selon une variante, dans les cas où les puissances reçues sur le signal pulsé multi synchrone multi-source sont faibles par rapport au bruit et en particulier du fait d'une puissance émise faible ou très étalée en spectre, et selon les types de modulation, le filtrage adapté de l'étape de détection et datation comporte un traitement de corrélation avec un motif de synchronisation, si le relais l'a utilisé, ou avec une autre réplique, par exemple, le motif d'identification du relais, le cas échéant, ou son code d'accès dans un souci de récupérer de l'énergie signal sur désétalement de spectre.

Selon une variante, le filtrage adapté de l'étape de détection et datation utilise tout information connue a priori pour établir des prévisions de séquences des instants d'arrivée des impulsions élémentaires ou trains d'impulsions élémentaires du signal reçu, qui sont générées en pseudo réplique aidant la détection par corrélation. En particulier les informations connues a priori peuvent provenir du flux de données 254, qui est en sortie du procédé 200, en figure 16 c'est à dire les résultats propres de l'étape de filtrage de navigation 206, en bouclage interne, mais qui peut être également en entrée de cette même étape, provenant d'un dispositif externe 040 au procédé 200 et montré en figure 15, qui peut fournir des données d'initialisation ou bien d'assistance, pouvant être approximatives et fournies essentiellement en mode d'initialisation. En alternative, des données moins élaborées émanant de l'étape d'identification et de position des sources 204, ou encore de l'étape de restitution des observables 205. Ces prévisions utilisent le protocole de choix des marqueurs de temps retenus des échelles de temps des sources, tel que décrit dans le document d'interface du relais.

Selon une variante l'étape de détection comporte un traitement d'isolation du trajet direct, ce traitement pouvant se baser sur le fait qu'il est le premier arrivé. Une technique permettant de revisiter le signal en détection sur une fenêtre de Hamming entourant de part et d'autre la détection, ce traitement se déclenchant à l'instant de détection, permet de réaliser avec des seuils de détection et d'analyse appropriés et une nouvelle corrélation avec la forme impulsionnelle prévue, cette isolation.

Le tableau tampon 252, qui contient à la fois les datations d'arrivée des impulsions et les niveaux d'amplitude de ces impulsions élémentaires ou trains d'impulsions élémentaires, est alors analysé par l'étape de démultiplexage et démodulation 203. Cette étape est chargée de trier et séparer les impulsions élémentaires ou trains d'impulsions élémentaires en fonction de leur provenance source dans un but de classement, par canal dit « canal d'observable relais », des impulsions et de leurs datations en temps local, chaque canal restituant l'échelle de temps d'une source, et l'ensemble des canaux réalisant un classement source par source. L'étape 203 est chargée d'autre part de restituer les flux de données supplémentaires qui ont été transmises par le relais, le cas échéant. L'étape peut utiliser pour le classement, par exemple, une analyse des périodicités, par FFT, d'autres moyens temporels étant envisageables. En sortie de cette étape, chaque impulsion élémentaire, qui était un marqueur de temps d'une échelle de temps source, et sa datation en échelle locale, est affectée à un canal, dit canal d'observable relais, chaque canal d'observables relais ayant pour fonction finale de rassembler tous les marqueurs de temps d'une seule source. Dans la variante 210 du procédé, cas où le signal reçu provient d'un relais d'attitude 110, l'étape de démultiplexage et de démodulation est chargée plus spécifiquement de séparer à la fois les informations des sources et des capteurs et crée un classement des données contenues dans le tableau tampon 252 en canal d'observables relais, chacun étant représentatif d'un couple source - capteur unique.

Selon une variante l'étape de démultiplexage et démodulation 203 est supportée par des traitements de corrélation avec des séquences générées à l'issue d'un traitement supplémentaire de prévisions d'écarts temporels attendus (ou périodicités) sur une même source et entre sources (ou écarts fréquentiels si utilisation des FFT), lesdites prévisions étant réalisées grâce au protocole des marqueurs de temps choisis, et/ou grâce à la connaissance a priori des positions et vitesse relatives des sources et de l'équipement relais 100 solidaire de 020 et/ou de l'équipement distant 200, celles-ci étant obtenues par filtrage grâce aux résultats des étapes de restitution des observables 205 et ou de filtrage de navigation 206 et ou d'identification et positionnement des sources 204 dans un bouclage interne des traitements.

En l'absence de prévisions déterministes possibles, le traitement de l'étape de démultiplexage et démodulation peut initialiser un traitement de type acquisition ou un nombre d'hypothèses, plus ou moins exhaustives ou réduites selon les incertitudes des connaissances approximatives des coordonnées, déplacements et caractéristiques des sources et relais, peut être envisagées et des tests d'hypothèses sont menés en utilisant, pour chaque hypothèse, un calcul d'un critère de vraisemblance choisi pour discerner une hypothèse de présence de signal utile, en l'occurrence une échelle de temps source, d'une hypothèse d'absence de signal utile. Les hypothèses prennent à chaque fois une valeur de position d'un marqueur de temps et une valeur d'unité de temps, menant ainsi une acquisition dans un domaine de temps fréquence, habituel dans le domaine de GNSS. Le maximum absolu ou relatif sur l'ensemble des hypothèses ou bien une valeur au dessus d'un seuil permet de dégager une ou des hypothèses à retenir pour des traitements ultérieurs. Eventuellement, le traitement est repris sur un nombre plus réduit d'hypothèses retenues en liste de cellules temps - fréquence susceptibles de contenir un signal utile, pour un critère plus sélectif.

D'autre part, cette étape de démultiplexage et démodulation 203 est chargée également de reconnaître les trains d'impulsions élémentaires qui modulent des informations, soit sur les échelles de temps des sources, soit entre ces échelles de temps, lesdites informations devant être démodulées pour restituer l'information qu'elles portent. Les techniques de l'art de la démodulation sont utilisées, et le document de standard du relais fournit les formats nécessaires à cette démodulation et traitement de formats, contrôle de parité, etc.

Selon une variante, lorsque le relais a utilisé la surimpression d'un identificateur de source sur les marqueurs de temps de l'échelle de temps de ladite source, l'étape de démultiplexage et démodulation 203 utilise cet identificateur comme moyen de séparer les sources, après démodulation des trains élémentaires d'impulsions correspondants. Dans un mode particulier de l'invention, l'identificateur de source est une séquence pseudo-aléatoire dont la fonction d'auto-corrélation présente un valeur élevée quand la séquence et sa réplique sont synchronisées, et une faible valeur quand la séquence et sa réplique sont décalées temporellement. Efin, l'ensemble des séquences pseudo-aléatoires utilisées pour séparer les différentes sources présentent une inter-corrélation faible. L'étape de séparation de sources consiste alors à corréler la réplique d'une séquence avec le signal reçu pour différentes hypothèses de temps de réception du signal et différentes hypothèses de glissement temporel des marqueurs à cause du décalage Doppler dû aux déplacements des satellites, des relais et des dispositifs de réception.

Selon une variante, lorsque le relais a utilisé la surimpression d'un identificateur de capteur sur les marqueurs de temps de l'échelle de temps de ladite source reçue par ledit capteur, ou les écarts de temps entre deux capteurs, l'étape de démultiplexage et démodulation 203 utilise cet identificateur comme moyen de séparer les capteurs, après démodulation des trains élémentaires d'impulsions correspondants. Des modulations différentes ont pu être utilisées aussi pour différencier les sources et/ou les capteurs et dans ce cas, le type de modulation peut également devenir un critère de différentiation des sources et/ou des capteurs. Quand le relais d'attitude a émis une différence de temps entre deux capteurs en surimpression d'un marqueur de temps d'un des deux capteurs (comme illustré en figure 13), l'étape de démultiplexage et démodulation 203 démodule évidemment cet écart de temps en surimpression, associe la datation du marqueur de temps du premier capteur au canal d'observable relais représentatif de la source correspondante et du premier capteur, et utilise la correction et la datation du premier capteur pour créer une datation d'un marqueur de temps à associer au canal d'observable relais représentatif de la même source et du deuxième capteur, et à destination de l'étape de restitution des observables relais 205.

Selon une variante, lorsque le relais a porté en surimpression, sur une ou plusieurs sources, un message de navigation venant directement de la source, celui-ci est fourni par un flux spécifique de cette information sans autre traitement que la restitution des bits 255 à l'étape d'identification et positionnement des sources 204 pour son traitement spécifique 2041 entrée c.

Selon une variante, lorsque le relais a porté en surimpression, sur les marqueurs de temps appartenant à une ou plusieurs sources, une correction spatiotemporelle, celle-ci est restituée après démodulation dans l'étape 203 et corrige les données de l'étape de détection et datation auxquelles elles doivent s'appliquer, après leur classement dans les canaux d'observables relais.

Selon une variante, lorsque les marqueurs de temps choisis sur une échelle source portent une information de temps depuis une origine bien définie, soit depuis la source, soit affectée au marqueur par le relais, en utilisant un compteur d'époque, un traitement pour retrouver la datation en échelle de temps source d'une impulsion élémentaire donnée est réalisée dans l'étape 203, en utilisant le compteur d'époque, le cas échéant.

Selon une variante, l'étape de démultiplexage et démodulation 203 utilise un filtrage temporel supplémentaire sur l'unité de temps restituée d'au moins une des échelles de temps restituées des sources, séparément les unes des autres, ou sur toutes, ce filtrage par source étant fourni comme information à l'étape de restitution des observables 205 pour une évaluation du Doppler (source Si - relais 100 + relais 100-équipement distant 200) et/ou également comme information en bouclage interne pour faciliter le traitement de détection et datation 202.

Selon une variante, l'étape de démultiplexage et démodulation 203 exploite des informations d'horloge virtuelle composite, le cas échéant où le relais fournit ce service, comme une échelle de temps servant à synchroniser l'échelle de temps locale, cette synchronisation ayant un effet de calage de synchronisation pour l'étape de détection et datation 202 et/ou de restitution des observables 205 et/ou directement de filtrage de navigation 206.

Selon une variante, et pour au moins un des canaux d'observables relais, l'étape de démultiplexage et démodulation 203 met en oeuvre un contrôle récurrent d'intégrité de la datation sur échelle locale des impulsions élémentaires reconnues en provenance d'une source, le résultat permettant soit une invalidation de ladite datation en cas de détection d'une anomalie, soit l'attribution d'un facteur de qualité de cette datation. Ce facteur de qualité correspond à un paramètre permettant d'établir un modèle statistique de bruits et d'erreurs liés à l'étape de démultiplexage et ou de détection et datation, avec un indice de confiance prédéterminé. Par exemple, cet exemple est à titre indicatif sans perdre de généralité, on choisit de retenir un modèle blanc gaussien centré pour borner à 99,99 % les bruits et erreurs liés au résultats de datation d'une échelle de temps d'une source, et le facteur de qualité attribué est la variance de cette fonction de probabilité. Le facteur de qualité s'applique alors aux récurrences d'impulsions classées dans le canal d'observable. Ledit contrôle d'intégrité s'appuie, en amont de l'attribution du facteur de qualité, sur des critères de vérifications permettant d'obtenir pas à pas la confiance cherchée, avec par exemple :
- le calcul d'un critère de variation des écarts temporels d'une impulsion à la suivante, et la vérification de sa cohérence avec des valeurs possibles de déplacement de l'équipement solidaire du relais 020 ou de la source, ou de l'équipement distant chargé de la localisation 021, et concluant dans la négative à une anomalie dans la séquence des impulsions élémentaires
- la présence identifiée par l'étape de détection et datation d'un multi entre la source relayée et l'équipement relais et ou entre le relais et l'équipement mobile, voire l'absence du trajet direct, analysé par le filtrage sur la fenêtre de Hamming
- un taux d'erreurs de bits dans le traitement de démodulation trop élevé ou des contrôles de parité défectueux
- un critère de décrochage des résultats de corrélation entre prédiction et signal reçu, ledit décrochage pouvant être attribué à une perte de signal, ou à une interférence liée à la multiplicité des relais, ou à la présence d'un signal provenant directement de la source, ou un autre signal interférant
- une alerte ou une autre information transmise par la source dans son signal de positionnement lui-même, comme c'est le cas avec le futur système GNSS Galileo , ou dans celui d'une autre source, comme c'est le cas avec EGNOS ou WAAS retransmise par le relais qui est représentative de la non intégrité des informations portées dans le signal de positionnement lui même.

Le rôle de l'étape d'identification et de positionnement des sources 204 correspond à l'attribution d'une source à un canal d'observable relais et ensuite d'une position de la source à un marqueur de temps choisi pour restituer un observable dans l'étape de restitution des observables 205 .La restitution des échelles de temps d'émission des sources n'est en effet pas suffisante à la localisation du relais 100, le procédé mis en oeuvre par l'équipement distant 200 devant également restituer la position des sources. Avant d'attribuer une position à un marqueur de temps choisi sur l'échelle de temps source restituée et datée en temps local, par les étapes de détection et datation 202 d'une part et par l'étape de démultiplexage et démodulation 203 d'autre part, il est nécessaire d'identifier la source et donc de reconnaître son identificateur. Cette opération est simplifiée dès lors que celui-ci a été mis en surimpression de l'échelle de temps par le marqueur. Elle peut aussi être traitée par une batterie de tests d'hypothèses utilisant une connaissance a priori d'un ensemble de sources ayant participé au procédé du relais, et un critère de vraisemblance appliqué au résultat d'une fonction choisie pour son pouvoir discriminant et calculée d'une part avec l'hypothèse et d'autre part avec le résultat de la fonction de démultiplexage et démodulation 203.

Les sources peuvent être fixes et dans ce cas leur position est invariante, donc mémorisable dans une base de données, ce qui est fait à l'installation du procédé dans l'équipement distant 200 ou de façon récurrente ou sur requête à partir d'un flux de données (255 - données en figure 15) qui peut provenir d'un serveur Internet par exemple par l'intermédiaire d'un équipement adapté (040 figure 15).

Dans un autre cas, les sources sont mobiles, comme c'est le cas pour les satellites des systèmes globaux de navigation par satellites. Les mouvements de ces dernières sources sont quasi déterministes et leurs trajectoires répondent à des modèles polynomiaux ou autres qui peuvent être utilisés sur une période de validité suffisante pour qu'une mémorisation des paramètres de ces modèles soit effectuée dans une base de données après avoir été acquis. L'étape d'acquisition peut avoir lieu également sur le flux de données (255 -données sur figure 15) également par le biais d'un serveur Internet connu de l'art ou spécifique, par un moyen filaire ou sans fil, qui peut par ailleurs être intégré au dispositif 200. Selon une variante, l'étape d'acquisition peut avoir leu également sur le flux de bits (255- bits), directement récupéré d'un récepteur GNSS (060 figure 15), capable de recevoir et démoduler les mêmes sources de signaux que l'équipement relais, et transféré en entrée (a) de l'étape d'acquisition et mémorisation de message 2041 intégrée dans l'étape d'identification et positionnement des sources 204. Enfin dans une autre variante du procédé, un récepteur GNSS est intégré dans le dispositif 200 et fournit le flux 255-bits en entrée (b) de ladite étape d'acquisition et mémorisation de messages. Les messages de navigation des systèmes globaux de navigation par satellites contiennent également des paramètres de modèle de corrections des horloges sources. Ces modèles d'horloge sont récupérés conjointement par ces étapes pour être intégré également dans l'étape de restitution des observables. L'équivalent pour les sources fixes ou pour des sources mobiles, à savoir des modèles permettant de corriger des instabilités des horloges de sources n'appartenant pas à la classe des systèmes globaux de navigation par satellite est également à prendre en compte pour une meilleure précision dans la restitution des observables 205.

L'étape de restitution des observables est chargée de reconstruire à partir des résultats de datation en échelle de temps locale des impulsions marqueurs de temps, réalisée en étape 202, de la reconnaissance des marqueurs de temps provenant d'une même source, réalisée en étape 203, de l'identification et du positionnement de la source, réalisée en 204 toutes les informations susceptibles de fournir après une étape de traitement adaptée à restituer la position de l'équipement relais 100.

Cette restitution d'observables peut se faire par source sous la forme d'une pseudo distance entre source et relais, et dans ce cas, le terme de pseudo distance prend ici en compte le fait que la désynchronisation de l'horloge locale à l'horloge de source contient également la distance relais - équipement distant et tout autre mode commun à toutes les sources relayées dans la composition des segments de propagations entre source et équipement distant. Pour chaque source, la pseudo distance source - relais est calculée grâce à la différence entre les résultats de la datation d'au moins une des impulsions en échelle de temps locale et sa restitution en échelle de temps source. La datation de l'impulsion marqueur de temps en échelle de temps source peut être traitée en absolu si des compteurs d'époques ont été relayés ou sinon est traitée avec un nombre d'ambiguïtés.

Selon une variante, on utilise des incréments temporels de pseudo distances, en utilisant l'unité de temps source, qui peut être variable, restituée par différence de datation locale entre deux marqueurs de temps successifs de la même échelle de temps source telle qu'elle est restituée sur un canal d'observables relais. Ainsi, pour chaque source, la différence de datation d'au moins une des impulsions à au moins une des suivantes peut être calculée, représentative de la pseudo vitesse, à la dérive près d'horloge locale et/ou variation de la distance équipement relais - équipement distant (sans distinction l'une de l'autre)

Selon une variante, et pour éliminer cette horloge locale et ses défauts, on restitue un observable par couple de sources, par exemple en utilisant une source pivot, ou bien une échelle de temps virtuelle composite d'un groupe de sources cohérentes auquel appartient la source dont on veut restituer l'observable. Dans ce cas on a des observables en différences de temps d'arrivée ou technique dite de TDOA . A partir d'une source pivot, et pour chaque autre source, la différence de datation est calculée en temps local d'au moins une des impulsions à celle de ladite source pivot, représentative d'un même marqueur de temps. Enfin, à partir d'une source pivot, et pour chaque autre source, les doubles différences, de datation d'au moins une des impulsions à au moins une des suivantes sur une source, à la même quantité évaluée pour la source pivot, pour des impulsions représentatives des mêmes marqueurs de temps, permettent de retrouver des différences d'effets Doppler d'une source à l'autre représentatifs de mouvements relatifs entre chaque sous-ensemble de type source - relais.

Selon une variante, dans le procédé de détermination d'attitude, il est nécessaire de réaliser en plus des observables relais, par la méthode décrite plus haut et appliquée à des canaux d'observables relais tous représentatifs d'un même capteur, il est nécessaire de restituer les observables d'attitude par l'une au moins des calculs suivants :
- pour chaque capteur et pour chaque source, la pseudo distance source - capteur du relais, calculée grâce aux résultats de la datation d'au moins une des impulsions du couple capteur - source en échelle de temps locale et sa restitution en échelle de temps source, (technique TOA niveau position et attitude),
- pour chaque capteur, et pour chaque source, la différence de datation d'au moins une des impulsions à au moins une des suivantes, (technique TOA niveau vitesse et attitude),
- pour chaque source, à partir d'un capteur pivot, et pour chaque autre capteur, la différence de datation d'au moins une des impulsions liée à ladite source et au dit capteur à celle liée à la même dite source par l'intermédiaire du dit capteur pivot, lesdites impulsions étant représentatives d'un même marqueur de temps de ladite source (technique TOA, niveau position -TDOA, niveau attitude), et
- à partir d'un capteur pivot et d'une source pivot, et pour chaque autre couple source - capteur, les différences d'une source à la source pivot des différences de datation d'au moins une des impulsions liée, pour ladite source, audit capteur à celle liée à la même source et au dit capteur pivot, lesdites impulsions étant représentatives d'un même marqueur de temps de ladite source. (technique TDOA niveau position et attitude).

L'étape de restitution des observables est aussi chargée d'effectuer les corrections des erreurs de principes connues et estimables. En particulier dans le cas où les sources sont celles des systèmes globaux de navigation par satellites, les corrections de l'état de l'art de ces systèmes habituellement réalisées dans un récepteur des signaux de ces sources sont appliquées pareillement aux observables restitués.

Selon une variante, lorsque le relais fournit le service correspondant, les corrections différentielles transmises et ou les corrections bifréquence (pour correction des délais ionosphériques) sont appliquées.

Selon une variante, et pour au moins un des canaux d'observables relais, l'étape de restitution d'observables 205 met en oeuvre un contrôle d'intégrité sur les mesures relais ainsi restituées, pour servir d'observables dans l'étape finale du procédé à savoir le filtrage de navigation 206. Le résultat de ce contrôle d'intégrité dit mesures relais permet soit d'invalider l'observable en entrée du filtre s'il est jugé qu'une anomalie a été détectée ou que le facteur de qualité est inapproprié à un bon fonctionnement du filtre de navigation soit d'attribuer un facteur de qualité à l'observable, qui vient pondérer celui -ci dans son utilisation par le filtrage de navigation. Comme pour le facteur de qualité de la datation, ce facteur de qualité correspond à un paramètre permettant d'établir un modèle statistique de bruits et d'erreurs liées à l'étape de restitution des observables, avec un indice de confiance prédéterminé. Le contrôle d'intégrité mesures relais et le facteur de qualité applicable aux observables relais s'appuie, sur des critères de vérifications permettant d'obtenir pas à pas la confiance cherchée, avec par exemple :
- la prise en compte du facteur de qualité datation,
- la prise en compte de la disponibilité d'un positionnement précis de la source en regard de la performance attendue ou la prise en compte d'une valeur de cette précision,
- un indice de qualité ou d'exclusion de la source, établi par le contrôle d'intégrité du système de positionnement lui-même et transmis par le signal de positionnement, la présence et la précision des corrections spatiotemporelles appliquées aux mesures et datations, et
- un taux d'erreurs de bits et contrôles de parités défectueux anormalement élevé dans l'acquisition et la mémorisation des messages au niveau de l'étape 204.

L'étape de filtrage de navigation utilise les équations d'état classiques du problème de positionnement de l'équipement relais en relation avec les observables restitués du dit problème. Les inconnues d'état du système sont la position et la vitesse du relais, dans tous les cas. Les inconnues du temps local, en biais et dérive, existent seulement dans le cas où les observables ont été traités en technique TOA. Dans la technique TDOA ils ont été naturellement éliminés. Dans le cas où elles existent, ces inconnues représentent de façon indiscernable les réels paramètres de désynchronisation avec l'échelle de temps virtuelle composite du réseau cohérent des sources utilisées mais aussi de tous les modes communs aux observables en particulier les temps de propagation de l'équipement relais à l'équipement distant. L'estimation des inconnues d'état, en position et en vitesse du relais est traitée séparément, par la résolution du modèle d'état en position et du modèle d'état en vitesse, préférentiellement après linéarisation autour d'une estimée proche par une technique de moindres carrés. La résolution du temps n'est décomposable en restitution réelle du temps et de la distance équipement relais équipement distant qu'à la condition d'avoir des observables supplémentaires, par exemple un signal de télémétrie lui-même proposé par le relais à partir d'une horloge stable ou stabilisée sur un réseau redondant de sources cohérentes. L'horloge virtuelle composite peut jouer ce rôle si elle a été établie à partir d'un réseau de sources cohérentes travaillant elles mêmes sur des horloges stables, ce qui est le cas des constellations GNSS.

Selon une variante, lorsque le relais est un relais d'attitude, les inconnues d'état du système comportent les angles d'Euler ou le quaternion d'attitude en plus des positions et vitesse du centre de gravité, ou bien concernent les positions et vitesses des centres de phase de chaque capteur. Les systèmes d'équations d'état sont écrits en regard des observables groupés par source et par capteur, selon la méthode décrite plus haut, et là encore avec l'alternative de la technique TOA, en ajoutant l'inconnue liée au temps local et l'alternative de la technique TDOA. Cependant le processus utilisé pour la résolution est équivalent dès lors qu'on a pris le soin de séparer par groupe d'inconnues : position, vitesse et attitude.

Selon une variante, une technique de moindres carrés pondérés ou de filtrage de Kalman est utilisée, en utilisant les paramètres d'un modèle statistique de bruit et d'erreurs sur chaque observable. Ce modèle statistique est plus ou moins élaboré selon les applications du procédé, et selon la connaissance a priori des erreurs de principes de la mesure et des bruits rencontrés au niveau du capteur de réception. Il peut être spécifique à chaque observable. En particulier, ces modèles sont dépendants de la nature du lien physique, RF ou optique, de la nature de la source, qui peut être à horloge stable ou non, de l'environnement traversé le long de la propagation, intérieur au bâtiment ou extérieur, environnement diffusant ou diffractant, ou encore lié à la qualité du relais, le niveau de protection des codes correcteurs d'erreur dans la modulation des données, la présence ou non des données de calibration transmises, et à appliquer pour la réduction de ses propres erreurs de principes.

Préférentiellement, et en particulier dans le cas d'utilisation d'une technique de moindres carrés pondérés, le modèle statistique de bruits et d'erreurs est choisi blanc gaussien centré en utilisant un bornage supérieur de la variance correspondant au niveau de confiance cherché dans la précision et l'intégrité des observables, ledit niveau de confiance étant négocié au niveau de l'utilisateur et pris en compte dès le document de standard d'interface du relais, soit en terme final de localisation sur l'erreur de position et vitesse du relais, soit plus directement au niveau des observables. La pondération peut être naturellement liée dans ce cas aux résultats des contrôles d'intégrité effectué dans l'étape de restitution des observables et être directement liée au facteur de qualité attribué alors à l'observable.

Dans un mode particulier de réalisation du procédé de localisation et de détermination d'attitude, conforme au troisième aspect de l'invention, l'étape de filtrage de navigation 206 réalise elle-même une évaluation de la précision et de l'intégrité des estimations de position et vitesse de l'équipement relais qui viennent en sortie de ce procédé, pour un affichage à l'utilisateur final de l'application par exemple, à l'aide du dispositif 040 en figure 15. Cette évaluation consiste à calculer un volume de protection, centré autour de la position affichée, et qui contient la position vraie de l'équipement à localiser, à l'indice de confiance négocié près, ou plus exactement à son complément à un près. L'indice de confiance va déterminer en effet un pourcentage par exemple de 99,9 % dans la confiance à mettre dans la position affichée alors que le volume de protection ne doit pas être dépassé par la position vraie à plus d'une valeur d'une probabilité de non détection du dépassement qui correspond au complément à un de l'indice de confiance, soit à 1-0,999=0,001=10⁻³ dans l'exemple ci-dessus, cette valeur n'étant proposée ici qu'à titre d'exemple. Le volume de protection est calculé selon un indice de confiance prédéterminé selon l'application, et correspond donc à une probabilité d'avoir une erreur du positionnement au-delà du volume de protection, sans avoir eu de déclenchement d'alarme signalant la non intégrité ou l'invalidité de la position affichée. Ce volume est préférentiellement cylindrique, mais peut être aussi ellipsoïdal. Dans le cas du volume cylindrique, on distingue les composantes horizontales des erreurs de position, limitées par le rayon de protection horizontal qui définit un cercle horizontal autour de la position affichée qui contient l'erreur de position horizontale à l'indice de confiance près, des composantes verticales du segment vertical qui prolonge le cercle horizontal en volume cylindrique au dessus et en dessous du plan horizontal et qui contient l'erreur de position verticale à l'indice de confiance près. L'équivalent pour la vitesse est évident. Le calcul du volume de protection va évidemment dépendre de la qualité de l'observabilité des inconnues d'état du système à travers les mesures ou observables. Deux facteurs multiplicatifs sont évidents dans le problème posé, à savoir la diversité géométrique des sources qui ont été relayées par l'équipement relais et transformées en observables relais valides et calculé en dilution de précision, comme dans l'état de l'art, et la qualité des mesures elle-même, qui peut être directement liée au modèle statistique de bruits et d'erreurs affectant ces mesures. Dans le cas où les mesures sont homogènes, le même modèle statistique de bruits et d'erreurs peut être pris pour tous les observables et dans ce cas, on choisit préférentiellement un modèle blanc gaussien centré avec une variance qui dépend a minima du rapport signal sur bruit de la réception.

Selon une variante, dans le cas de l'utilisation d'une technique de moindres carrés pondérés et /ou de filtrage de Kalman, l'évaluation de la précision calcule la variance de l'erreur d'estimation des inconnues du modèle d'état utilisé, en utilisant les équations d'état et en se ramenant aux modèles statistiques de bruit et d'erreurs des observables, après avoir supposé qu'ils ne sont pas corrélés entre sources jusqu'au relais puis corrélés du relais à l'équipement distant, pour certains types d'erreurs.

Selon une variante, l'étape de filtrage de navigation 206 met en oeuvre, lorsque la redondance des observables est satisfaisante en regard du nombre d'inconnues des équations d'état, un contrôle supplémentaire pour vérifier l'intégrité de l'estimation de position, de vitesse, et le cas échéant d'attitude par le calcul des résidus a posteriori sur chaque observable. Il s'agit pour cela de calculer la différence entre chaque observable restitué et chaque observable ré-estimé a posteriori à partir de la valeur affichée (ou estimée sortant du filtre) de position; vitesse, attitude du relais. En supposant un modèle statistique gaussien centré pour chaque observable, celui par exemple utilisé dans le contrôle d'intégrité mesures relais, la norme de ce résidu doit suivre une loi du khi2, et un test du khi2 sur la norme du résidu permet de détecter une incohérence sur les observables susceptible d'avoir introduit une erreur de position et /ou une erreur de vitesse et /ou une erreur d'attitude. Avec une redondance suffisante dans les observables, liées à la fois au nombre d'observables et à leur diversité géométrique, cette technique dérivée ici des techniques RAIM , est capable de donner le volume de protection selon un indice de confiance cohérent du seuil choisi pour le test du khi2 d'une part, de fournir lorsque le test est négatif une invalidation des données affichées, et enfin, avec un niveau de redondance encore supérieure, une isolation de l'observable défaillant. Ce traitement particulier aboutit dans un retour sur les traitements du filtrage de navigation pour recalculer une position intègre chaque fois que cela est possible, en particulier en cas de redondance suffisante, et également un retour sur l'étape de démultiplexage et démodulation pour une réparation du traitement de classement.

Des techniques étendues du RAIM sur des mesures non indépendantes sont également possibles, en particulier sur les observables pseudo distance et pseudo doppler d'une même source. Dans ce cas le volume de protection de la position relais est calculé à partir d'une réduction simultanée des formes quadratiques qui représentent le résidu d'erreur entre observable réalisé et observable estimé d'un côté et l'erreur de position relais d'un autre côté, dès lors qu'un biais ou erreur existe sur les deux mesures provenant d'une même source.

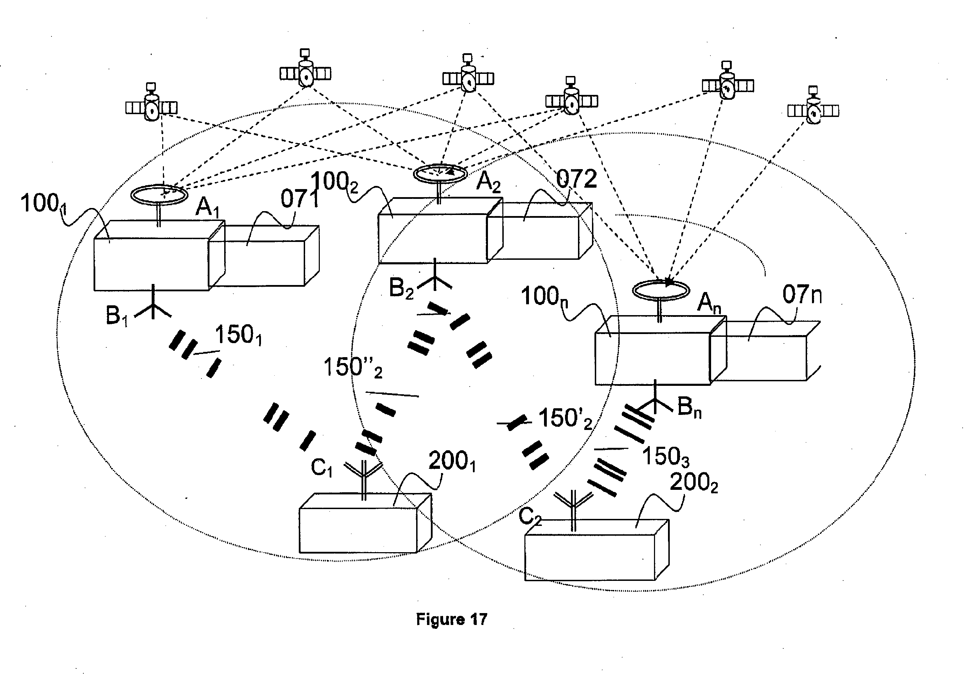

La figure 17 montre un exemple de système mis en oeuvre pour une gestion de flotte étendue d'un ensemble d'équipements 071, 072,... 07n à partir des procédés conformes au premier aspect et au troisième aspect de l'invention selon des modes de réalisation particuliers. L'adaptation consiste ici à résoudre les problèmes liés à l'accès multiple pour des relais émettant vers plusieurs équipements distants différents, et pour un équipement distant de traiter une provenance simultanée de plusieurs relais. Ainsi on peut avoir besoin de localiser un même relais par plusieurs stations de localisations, et le signal pulsé multi synchrone multi-source utilisé pour chacune des stations peut ne pas avoir à relayer exactement les mêmes sources. Il peut être alors nécessaires d'émettre des signaux différents pour un 'accès multi-point Dans ce cas le relais peut utiliser un motif d'authentification différent adapté à cette mise en oeuvre. Inversement une station de localisation peut avoir besoin de localiser une pluralité de relais et dans ce cas, un unique canal de transmission pour tous les relais est préférable. Une technique de multiple accès doit être alors appliquée au niveau de chaque relais de cette transmission, afin qu'au niveau de la localisation la séparation des signaux des relais soit possible et efficace. En figure 17, chacun des équipements 071, 072, ... 07n de l'ensemble à localiser est solidaire d'un relais pulsé multi synchrone multi-source 100₁, 100₂,... 100ₙ, respectivement équipés des capteurs A₁, A₂, ...Aₙ, pour la réception des signaux de positionnement des sources, représentés ici sans perdre de généralité sous forme de satellites, et équipés des aériens émetteurs de signaux pulsés multi synchrones multi-source B₁, B₂, ...Bₙ. En figure 17, deux équipements distants assurent ensemble la localisation de toute la flotte. Il s'agit des équipements 200₁ et 200₂, respectivement équipés de leurs capteurs respectifs C₁ et C₂. L'équipement 071 émet grâce à son relais 100₁ à destination du dispositif 200₁ le signal 150₁, qui lui-même reçoit aussi le signal 150"₂, en provenance de l'équipement 072 grâce à son relais 100₂. Ce même équipement 072 émet grâce à son relais aussi un signal 150'2, différent de 150"₂ à destination de l'équipement distant 200₂. Enfin l'équipement distant 200₂ reçoit et traite simultanément le signal pulsé multi synchrone multi-source 150₃ en provenance du relais 100ₙ de l'équipement 07n. Selon une variante, les relais peuvent être équipés de liaisons numériques supplémentaires qui permettent de recevoir des requêtes de la part des équipements distants chargés de la localisation et n'être activés que sur ces requêtes.

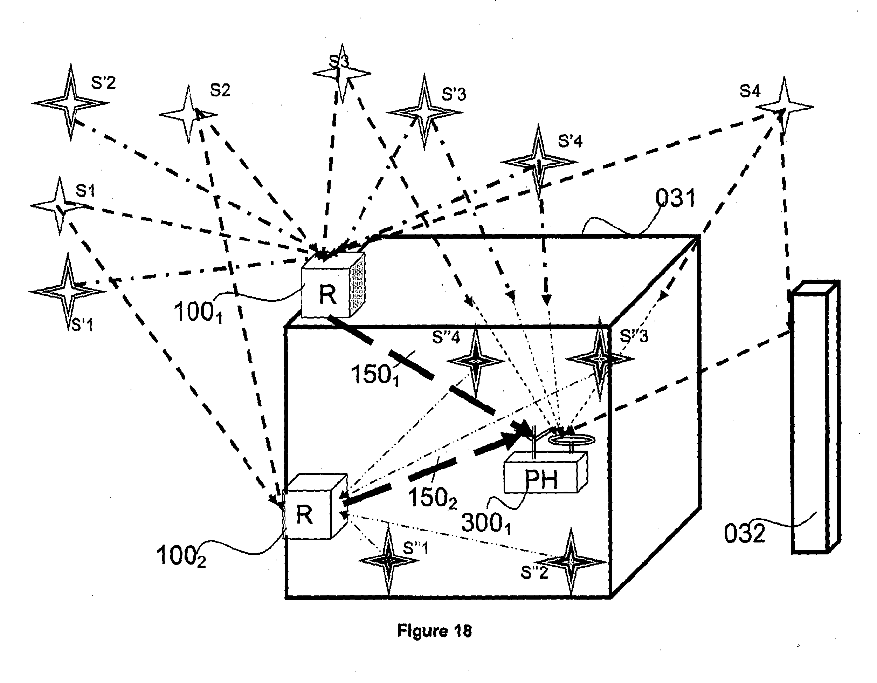

On donne, ci-après, une description détaillée des sixième et septième aspects de la présente invention concernant les procédé, dispositif et système de positionnement hybride aidé par un relais pulsé multi synchrone multi-source, en regard des figures 18 à 23.

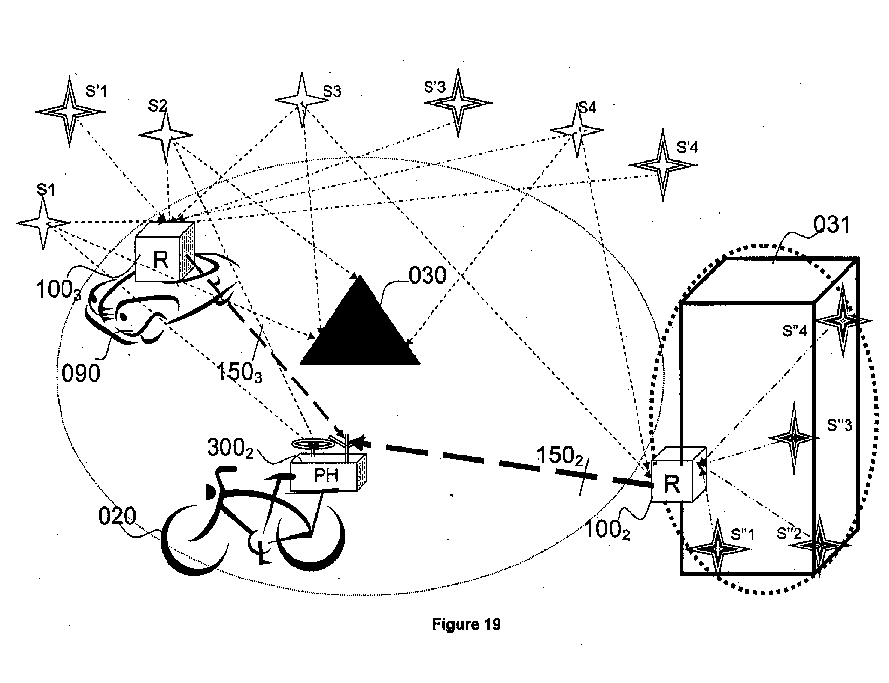

Les figures 18 et 19 donnent deux cas particuliers d'environnement d'applications du dispositif 300 conforme au sixième aspect de la présente invention et mettant en oeuvre le procédé de positionnement hybride par relais pulsé multi synchrone multi-source conforme au cinquième aspect de la présente invention. Ces exemples sont donnés à titre indicatif et pour montrer la variété d'applications plutôt qu'à titre limitatif. La figure 18 indice le dispositif en 300₁, alors que la figure 19 indice le dispositif en 300₂ pour les distinguer sans pour autant chercher à les différentier, les figures 18 et 19 montrant des applications semblables dans deux environnements d'utilisation différents.

Le procédé mis en oeuvre par le dispositif 300 lui permet de se positionner lui-même, ou de positionner un équipement mobile dont il est solidaire. Le dispositif 300 est équipé de deux capteurs. L'un des capteurs, dont l'aérien est représenté en ellipse, est capable de recevoir les signaux de positionnement émis depuis les sources inter opérables Si et S'j, par exemple. Le deuxième capteur, dont l'aérien est représenté en brins, est capable de recevoir au moins un signal pulsé multi synchrone multi-source 150x, émis depuis au moins un dispositif 100i conforme au deuxième aspect de l'invention et mettant en oeuvre le procédé de relais pulsé multi synchrone multi-source conforme au premier aspect de la présente invention. Selon une variante, le dispositif 300 peut également être équipé d'un autre capteur et récepteur permettant de recevoir d'autres sources de signaux de positionnement de type S"k.

En figure 18, on voit un dispositif 300₁ à l'intérieur d'un bâtiment 031. Il reçoit les signaux des sources S3, S'3, S4, S'4, interopérables, mais les reçoit très atténués à cause de la structure du bâtiment 031. Il n'est pas capable de la réception des sources S"k, réseau spécifique offrant un service de positionnement à l'intérieur du bâtiment 031. Pour le signal de la source S4, il reçoit en combinaison avec le trajet direct un multi trajet par réflexion sur le bâtiment 032, dont la puissance est beaucoup plus importante que celle du trajet direct. Par ailleurs, il reçoit les signaux 150₁ et 150₂ émis respectivement par les relais 100₁ et 100₂.

Le relais 100₁ reçoit avec une bonne visibilité l'ensemble des sources S1 à S4 et S'1 à S'4 et en relaie des informations temporelles essentielles de ces sources conformément au procédé de relais pulsé multi synchrone multi-source, objet du premier aspect de la présente invention dans le signal 150₁.

Le relais 100₂ reçoit avec une bonne visibilité l'ensemble des sources S"1 à S"4, d'un réseau de sources cohérentes installées pour fournir un service de positionnement spécifique à l'intérieur du bâtiment, par un capteur situé à l'intérieur du bâtiment 031. Il est aussi équipé pour recevoir les sources S'1 à S'4, d'un service de positionnement global, grâce à un capteur situé à l'extérieur du bâtiment 031, mais ne reçoit que certaines des sources, les S1 et S2 pour des raisons de masquage du bâtiment. Il relaie dans le signal 150₂ grâce à un émetteur configuré pour diffuser à l'intérieur du bâtiment des informations temporelles essentielles des sources qu'il reçoit, sans différencier leur provenance, conformément au procédé de relais pulsé multi synchrone multi-source, objet du premier aspect de la présente invention. Selon une variante, puisqu'il reçoit quatre sources cohérentes S"k, il peut générer également les pulsations d'une horloge virtuelle composite, représentative de la synchronisation des dites sources.

Grâce à des modes de réalisation particuliers du procédé mis en oeuvre selon le cinquième aspect de la présente invention, le dispositif 300₁ profite d'une amélioration sensible de sa sensibilité à la réception des signaux faibles S3, S4, S'3 et S'4, grâce à l'hybridation serrée des traitements de réception de ces signaux avec les informations reçues et traitées du signal pulsé multi synchrone multi-source 150₁ . Il profite également d'une amélioration de précision sur la mesure de pseudo distance avec S4 car il peut éliminer le multi trajet combiné sur S4. Enfin, il peut profiter d'une très nette amélioration de disponibilité du service de positionnement, à la fois en précision et en intégrité, tout en étant à l'intérieur du bâtiment et bien qu'il ne soit pas équipé pour profiter du service spécifique de positionnement crée par S"k grâce à une hybridation lâche, traitée au niveau du filtrage de positionnement, pour une augmentation très nette du nombre des observables à entrer dans le filtre, grâce aux informations sur des sources extérieures et intérieures portées par le signal 150₂ , signal émis par le relais 100₂. Finalement, au moment des transitions de l'intérieur à l'extérieur du bâtiment, le service de positionnement est très continu, sans perte de temps à l'acquisition, sans changement de repère géodésique de positionnement, sans changement d'échelle de temps globale, car le relais 100₁ fournit également les messages de navigation des sources défilantes des systèmes GNSS Si et S'j, par exemple, ainsi que des corrections différentielles qui autorisent un positionnement très précis. Les relais n'ont pas de besoin eux- mêmes d'être précisément positionnés puisqu'ils transfèrent naturellement, avec leur signal, toutes les informations nécessaires pour que le dispositif calcule lui-même sa position, comme expliqué dans le procédé du dispositif 200, objet des troisième et quatrième aspects de la présente invention. Ils n'ont pas davantage besoin d'être synchronisés.

En figure 19, on voit le dispositif 300₂ solidaire d'un mobile 020. Il est en milieu urbain, et est capable de recevoir et traiter les signaux des systèmes GNSS pour un service de positionnement standard sur les sources Si uniquement. Compte tenu de l'environnement, il ne peut recevoir que les sources S1 et S2, à cause du masquage complet de l'obstacle 030. Par ailleurs, il est capable de recevoir et traiter les sources S"k mais n'est pas à ce moment dans la zone de couverture de ces sources. Il vient d'être mis en service après une mise hors tension de longue durée et ne peut pas, en conséquence, calculer son positionnement, et met beaucoup de temps pour acquérir les messages de navigation qui lui permettent d'acquérir plus vite des nouveaux satellites.

Par contre, il est à portée du relais 100₂, solidaire du bâtiment 031 et qui relaie vers l'extérieur grâce à un émetteur diffusant vers l'extérieur le signal pulsé multi synchrone multi-source 150₂ portant des informations venant à la fois des réseaux cohérents de sources Si et S"k. A l'instant de la figure, le relais 100₂ n'est pas en visibilité des sources S1 ni S2, également à cause de l'obstacle 030. Grâce au signal pulsé multi synchrone multi-source 150₂, le dispositif 300₂ qui met en oeuvre le procédé de positionnement aidé par un relais multi synchrone multi-source est capable de localiser le relais 100₂ par le procédé de localisation de relais comme celui défini plus haut en troisième aspect de la présente invention, et intégré naturellement dans celui mis en oeuvre par les traitements réalisés par un dispositif de type 300. De cette localisation, il peut tirer une valeur approximative de sa propre position, il peut aussi construire des observables relais sur les sources S3 et S4, dont certains marqueurs de temps sont aussi intégrés dans le signal pulsé 150₂. Grâce au procédé de positionnement aidé par le relais pulsé multi synchrone multi-source, et en particulier grâce au filtrage hybride de navigation (hybridation lâche) le dispositif 300₂ est capable d'effectuer une première estimation de sa position.

Le dispositif est aussi à portée d'un autre relais, le dispositif 100₃, solidaire d'un équipement mobile 090. Ce relais 100₃ profite d'une réception des deux systèmes de positionnement globaux inter opérables Si et S'j et est en bonne visibilité des sources. Le signal pulsé multi synchrone multi-source 150₃ qu'il émet porte donc des informations sur les sources S1 et S2 qui viennent en redondance des observables utilisés dans la première estimation de position et vont lui apporter un taux de confiance plus élevé.

Par ailleurs, le signal pulsé multi synchrone multi-source 150₃ apporte des informations sur les sources S3 et S4, qui ne sont pas reçues en direct, bien que dans la zone de couverture. Le récepteur des sources Si inclut dans le dispositif 300₂ peut lancer l'acquisition des signaux de ces sources, sur des zones de recherche temps fréquence restreintes, et avec un niveau de sensibilité amélioré, grâce à l'hybridation serrée avec les canaux de traitement des observables relais initialisés pour le traitement du signal 150₃. Bien que le relais soit mobile, la redondance apportée par le signal 150₃ et en particulier grâce à la réception des sources multiples Si et S'j, la position et la vitesse du mobile 090 qui supporte le relais 100₃ peuventt être estimées et compensées pour réduire encore les indisponibilités de positionnement du mobile 020.

Par ailleurs, grâce à un traitement d'hybridation serrée à partir des informations sur les sources S"k obtenues grâce au signal 150₂, si le mobile 020 s'approche et entre dans le bâtiment 031, son estimée de positionnement est immédiatement disponible par le service de positionnement fourni par ces dernières sources.

Dans ce deuxième exemple d'exploitation opérationnelle, on observe encore que les performances de positionnement du dispositif 300₂ sont largement améliorées en disponibilité, précision, intégrité et continuité de service, dans un environnement où des dispositifs relais des signaux de positionnement existent et mettent en oeuvre le procédé conforme au premier aspect de l'invention, et en amenant une forte interopérabilité des services de positionnement.

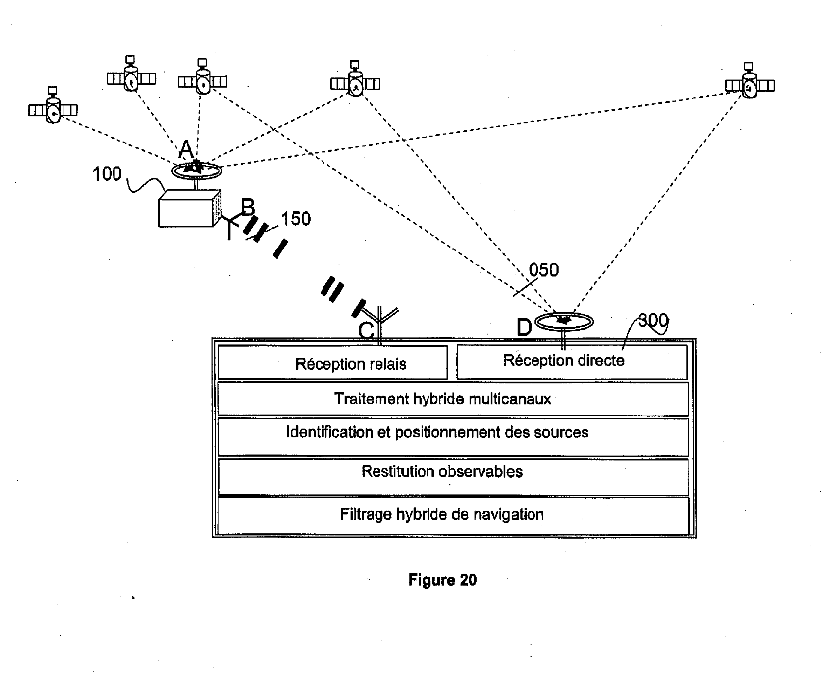

En figure 20, on observe les interfaces du dispositif 300, objet du sixième aspect de la présente invention et on voit un aperçu des étapes du procédé qu'il met en oeuvre, procédé lui-même objet du cinquième aspect de la présente invention.

Le dispositif possède au moins deux moyens de réception différents. L'un, pour une réception directe des signaux de positionnement émis par un ensemble cohérent de sources, illustrées comme des satellites en figure 20, sans que cela soit une restriction, a un aérien repéré en D. L'autre, pour une réception des signaux pulsé multi synchrone multi-source, émis par au moins un dispositif relais 100 conforme au deuxième aspect de l'invention et mettant en oeuvre un procédé de relais conforme au premier aspect de l'invention, a un aérien repéré en C. Le dispositif possède aussi un moyen nécessaire à mettre en oeuvre un traitement hybride multi canaux, un moyen d'identification et positionnement des sources, un moyen de restitution des observables et un moyen de filtrage hybride de navigation. Le relais 100, reçoit en figure 20 par son capteur A les mêmes sources que le dispositif 300, mais ceci n'est pas une exigence du fonctionnement du dispositif 300. Ce point est nécessaire seulement, on le verra plus loin, pour la mise en oeuvre de l'hybridation serrée. Par ailleurs, bien que cela n'a pas été représenté en figure 20 vu le peu d'intérêt en regard de l'invention, le dispositif 300 utilise un moyen d'affichage des résultats de son positionnement hybride ou bien un moyen de sortie de ses données à destination d'une application de navigation, ou de guidage, ou de LBS ou toute autre application ayant besoin du positionnement réalisé.

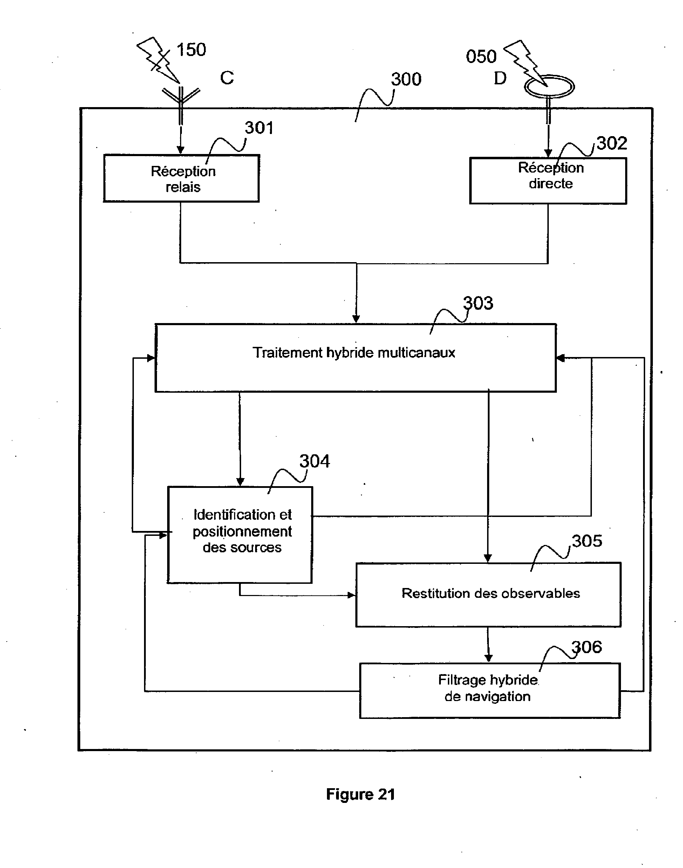

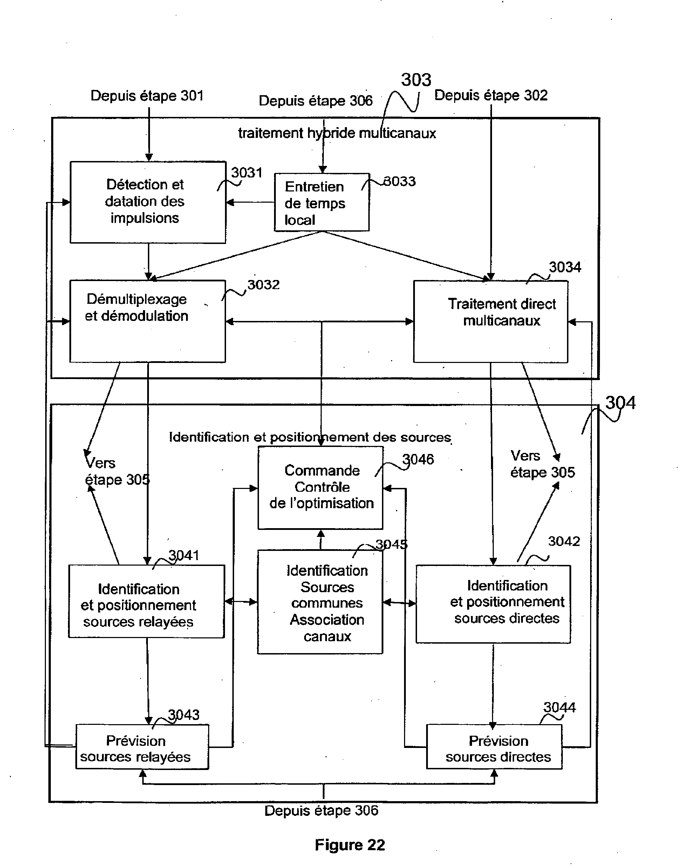

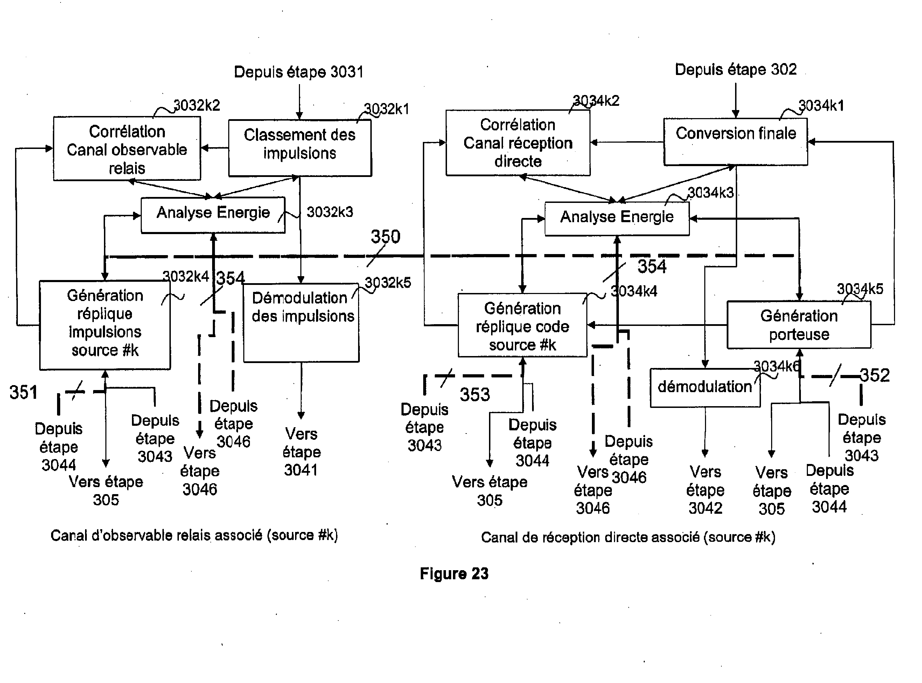

En figure 21, on voit les étapes mises en oeuvre par le procédé objet du cinquième aspect de l'invention, le procédé de positionnement hybride, aidé par un relais pulsé multi synchrone multi-source. Ces étapes sont montrées dans leur progression minimale. La figure 21 fait état également des bouclages internes qui sont mis en oeuvre dans les variantes du procédé. Les étapes 303 et 304 sont détaillées dans les figures 22 et 23.

On voit en figure 21, et dans le sens haut vers bas, la mise en parallèle des étapes de réceptions, l'étape de réception relais 301, avec son aérien C, et l'étape de réception directe 302, avec son aérien D, et leur convergence vers l'étape de traitement hybride multicanal 303. Cette étape de traitement hybride multicanal rassemble les traitements pour des raisons de similitude et d'interactions serrées, mais met en parallèle aussi des traitements multicanaux propres à la réception directe, lesdits canaux étant nommés par la suite canaux de réception directe, et des traitements multicanaux propres à la réception du signal relais, lesdits canaux étant nommés canaux d'observables relais. Cette étape de traitement hybride multicanal fournit une double sortie multicanal, c'est-à-dire que chaque canal fournit au moins deux types d'informations. L'une d'entre elles est à destination d'une étape d'identification et de positionnement des sources 304, qui agit ainsi sur l'identification des sources relayées pour les sorties des canaux d'observables relais et sur l'identification des sources reçues en direct, dites sources directes, pour les sorties des canaux de réception directe. Plus à droite en figure 21, l'autre sortie multicanal de l'étape de traitement hybride multicanal est en entrée d'une étape de restitution des observables 305. Cette étape agit également en parallèle sur les sorties des canaux d'observables relais pour fournir des observables relais à la dernière étape, celle du filtrage hybride de navigation 306, et sur les sorties des canaux de réception directe pour fournir des observables directs à cette dernière même étape.

Selon un mode de réalisation particulier du procédé objet du cinquième aspect de la présente invention, des bouclages internes vont renforcer l'efficacité des traitements de chaque étape. Ces différents bouclages sont détaillés dans les figures 22 et 23 qui vont être décrites ci-dessous.

En figure 22, on adresse, dans un premier niveau de détail, et selon des modes de réalisation particuliers du procédé conforme au cinquième aspect de la présente invention, les étapes de traitement hybride multicanal 303 et d'identification et positionnement des sources 304, et de leurs interactions entre elles et avec les autres étapes.

L'étape de traitement hybride multicanal 303 est décomposée à gauche pour le traitement du signal pulsé multi synchrone multi-source qui fait suite à l'étape 301 et à droite pour le traitement des signaux de positionnement en réception directe depuis l'étape 302.

A gauche, le traitement du signal pulsé multi synchrone multi-source se décompose en figure 22 en deux étapes, celle de détection et datation des impulsions élémentaires et trains d'impulsions élémentaires 3031, suivie de celle de démultiplexage et démodulation 3032, permettant de séparer les informations à traiter en canaux d'observables relais. Ces étapes ont été décrites en détail lors de la description du procédé de localisation conforme au troisième aspect de la présente invention et peuvent ici recouvrir les mêmes variantes.

A droite, le traitement direct multicanal réalise les traitements des signaux de positionnement sur des canaux parallèles, traitements de l'état de l'art, semblables à ceux décrits dans la description de la figure 6, et en supportant l'acquisition et la poursuite des dits signaux, par une corrélation, dans un but de synchronisation, du signal arrivant sur une réplique générée du code de télémétrie.

Bien que non illustrée sur la figure 22, une échelle de temps local doit être générée par un oscillateur local pour l'étape de réception directe, dans son traitement de conversion en fréquence intermédiaire et surtout dans le traitement des signaux de positionnement pour la génération de la réplique du code de télémétrie et les étapes de génération de porteuse et conversions finales pour réduire l'effet Doppler lié au déplacement due à l'équipement mobile. De même, une échelle de temps local est également nécessaire à l'étape de traitement du signal pulsé multi synchrone multi-source, au minimum pour la datation des impulsions élémentaires reçues. Les deux échelles de temps local peuvent être indépendantes, incluses dans les étapes respectives de traitement.

Selon une variante, le traitement des signaux pulsés multi synchronesmulti-source et le traitement direct des signaux de positionnement utilisent la même échelle de temps local et partagent le même oscillateur local pour générer cette échelle de temps local.

Selon une variante, et illustré en figure 22, un retour de l'étape de filtrage hybride de navigation 306, vers le traitement hybride multicanal 303 permet de réaliser un traitement d'entretien du temps local 3033.

Au niveau du traitement hybride multicanal 303, le traitement d'entretien du temps local 3033 permet de réduire l'erreur de désynchronisation du temps local sur l'échelle de temps système pour une linéarisation plus précise des équations de navigation. L'échelle de temps système est préférentiellement celle d'un des systèmes de positionnement traité, et préférentiellement celle d'un système GNSS si les sources correspondantes font parties des sources reçues, soit relayées soit directes, puisque cette dernière est très précisément référencée au temps universel coordonné. Elle peut être également une horloge virtuelle composite, bien que ce dernier cas n'apporte pas les performances optimales. C'est dans tous les cas la référence de temps (origine et unité) qui permet d'écrire dans un référentiel homogène les équations d'état de la navigation de l'équipement mobile à positionner et de son évolution. Le filtrage hybride de navigation 306 résout régulièrement l'inconnue de désynchronisation entre l'échelle de temps local et l'échelle de temps système. Cette sortie peut être utilisée à bon escient dans un traitement d'entretien du temps local à destination de la datation de tout événement en temps local, détecté dans le traitement hybride multicanal, en particulier pour le traitement du signal pulsé multi synchrone multi-source. En figure 22 le temps local entretenu est donc en entrée de chacune des étapes incluses dans le traitement hybride multicanal et permettra directement de restituer ultérieurement des observables dans un référentiel de temps le plus proche possible du référentiel de temps souhaité.

Les étapes 3031 3032 et 3034 étant analogues aux étapes décrites dans les précédents procédés, elles peuvent, selon une variante, de façon analogue aux méthodes décrites précédemment intégrer des contrôles d'intégrité dans leurs traitements avec un but de détecter les mêmes anomalies, pour le traitement des canaux d'observables, que celles décrites dans le procédé de localisation d'un équipement mobile à distance, procédé selon le troisième aspect de la présente invention, et, pour le traitement des canaux de réception directe, que ceux décrits dans le procédé de relais pulsé multi synchrone multi-source, procédé selon le premier aspect de la présente invention. Les sorties de ces variantes sont à destination de toutes les étapes qui utilisent le résultat du traitement hybride multicanal 303, à savoir essentiellement l'étape d'identification et positionnement des sources 304 et l'étape de restitution des observables 305. Elles prennent la forme d'une invalidation, d'une sortie canal en cas de détection d'anomalie. Cette détection d'anomalie fait appel à un facteur de qualité canal, fonction du niveau de sécurité requis par l'application qui utilise le positionnement.

En figure 22, l'étape d'identification et de positionnement des sources 304 se décompose naturellement sur la gauche en étape d'identification des sources relayées 3041 et sur la droite en étape d'identification et positionnement des sources directes 3042 et fournissent leurs résultats à l'étape de restitution des observables 305. Les traitements de l'étape 3041 ont déjà été décrits dans le procédé de localisation à distance d'un équipement mobile, procédé conforme au troisième aspect de la présente invention et sont analogues ici. Ceux de son homologue 3042 sont essentiellement identiques, et n'ont pas besoin d'être développés ici. Ils comportent selon une variante, comme dans les descriptions précédentes, une étape d'acquisition et de mémorisation des messages qui peut ou non être commune selon la variété des sources reçues.

En particulier, selon une variante, une mise en commun des corrections spatiotemporelles pour des erreurs de principes des systèmes de positionnement reçues pour des sources relayées peuvent être utilisées à bon escient sur les sources directes et inversement. Par exemple les corrections différentielles ou une grille ionosphérique reçue par un signal EGNOS à travers un relais, donc un signal pulsé multi synchrone multi-source sont aussi utilisées par des canaux d'observables directs s'ils sont des sources GNSS, que ce soit en retour vers le traitement hybride multicanal pour une prévision plus précise du traitement de démultiplexage, une amélioration de sensibilité du traitement direct ou dans la restitution des observables.

Selon une variante, en figure 22, on observe également la mise en oeuvre de traitements de prévisions pour les sources relayées 3043 et pour les sources directes 3044. Ces traitements de prévisions prennent en entrée toutes estimations de position, vitesse et temps, en provenance de l'étape de filtrage hybride de navigation, et concernant toutes les inconnues d'états de l'équipement mobile à positionner, mais aussi de l'équipement relais fournisseur de signal pulsé multi synchrone multi-source. Complétée par les résultats des étapes d'identification et de positionnement des sources 3041 et 3042, ces étapes de prévisions sources relayées et prévision sources directes vont apporter des supports efficaces aux traitements de chacune des étapes 3031, 3032 et 3034 du traitement hybride multicanal 303, respectivement côté sources relayées et côté source directes.

Selon une variante, une étape d'identification des sources communes 3045 est mise en oeuvre périodiquement. Elle permet d'identifier une source Si, qui est reçue directement sur un canal de réception directe, et qui a été identifiée comme reçue par l'intermédiaire d'un relais, c'est-à-dire par des fragments de son code de télémétrie, ou plus simplement par son échelle de temps source, qui a été démultiplexée sur un canal d'observable relais.

Le rôle de l'étape 3045 est également d'associer par paires les numéros de canaux d'observables relais et de canaux de réception directe qui traitent une même source, et enfin de lancer en présence de tels couples une étape de commande et contrôle de l'optimisation des traitements 3046, pour une hybridation serrée sur les canaux associés.

L'hybridation serrée de deux canaux associés est illustrée en figure 23. Pour réaliser cette illustration, la figure 23 détaille, à un niveau supérieur en comparaison à la figure 22, un mode de réalisation particulier de l'étape de démultiplexage et démodulation d'une part, pour un canal d'observable relais (à gauche de la figure 23), et un mode de réalisation particulier de l'étape de traitement direct sur un canal de réception directe ( à droite de la figure 23). La figure choisit évidemment des canaux associés et recevant la même source commune numérotée k. C'est pourquoi toutes les étapes du canal comportent la lettre k dans leur référencement, bien que les numéros affectés aux canaux ne soient pas semblables.

A gauche donc, conformément aux variantes du traitement de démultiplexage décrites plus haut et par conséquent non décrites à nouveau, on trouve :
- une étape de classement des impulsions 3032k1,
- une étape de corrélation du canal observable relais 3032k2,
- une étape d'analyse de l'énergie de signal résultante 3032k3,
- une étape de génération de réplique des impulsions source #k 3032k4, et
- une étape de démodulation des impulsions 3032k5.

A droite donc, conformément aux étapes mises en oeuvre dans l'état de l'art du traitement des signaux de positionnement et en particulier des signaux GNSS, on trouve :
- une étape de conversion finale 3034k1,
- une étape de corrélation canal réception directe 3034k2,
- une étape d'analyse de l'énergie de signal résultante 3034k3,
- une étape de génération de réplique code source #k 3034k4,
- une étape de génération de porteuse 3034k5, et
- une étape de démodulation des impulsions 30342k6.

Le premier rôle de l'étape 3046 (figure 22) est de faire partager les résultats de l'étape de prévision sources relayées aux canaux de réception directs, et réciproquement, les résultats de l'étape de prévisions sources directes aux canaux d'observables relais, si ces canaux en ont besoin pour améliorer leurs propres traitement et obtenir un meilleur rendement en rapport signal sur bruit. C'est le rôle des flux d'interface internes référencés 351, 352 et 353 en figure 23 qui lient respectivement l'étape 3044 de prévision des sources directes vers l'entrée de l'étape 3032k4 de génération de la réplique des impulsions source #k et l'étape 3043 de prévision des sources relayées vers l'entrée de l'étape 3034k5 de génération porteuse, et de l'étape 3034k4 de génération de réplique code source #k.

Pour évaluer ce besoin ou non de prévision, l'étape de commande et contrôle de l'optimisation doit vérifier l'état de traitement de chacun des canaux. C'est pourquoi les étapes d'analyse d'énergie 3032k3 et 3034k3 qui évaluent le rapport signal sur bruit fournissent leurs résultats à l'étape 3046. La connaissance pour l'étape 3046 des qualités de traitement de signal courant n'est pas suffisante. Les optimisations vont dépendre d'autres paramètres, et en particulier :
- le taux d'échec des contrôles de parité ou de codes correcteurs d'erreur dans les traitements de démodulations,
- l'existence et la qualité des prévisions de positionnement des sources,
- les paramètres d'un modèle statistique de bruit et d'erreur affecté aux observables dudit canal,
- les résultats dudit contrôle d'intégrité canal, et en particulier ladite invalidation, et
- les résultats d'un contrôle d'intégrité position et en particulier une exclusion d'observable

Pour ce faire d'autres interfaces internes entre l'étape 3046 sont également nécessaires comme avec les étapes d'identifications et positionnement des sources relayées 3041 et directes 3042., montrées en figure 22, et également avec la restitution d'observables 305.

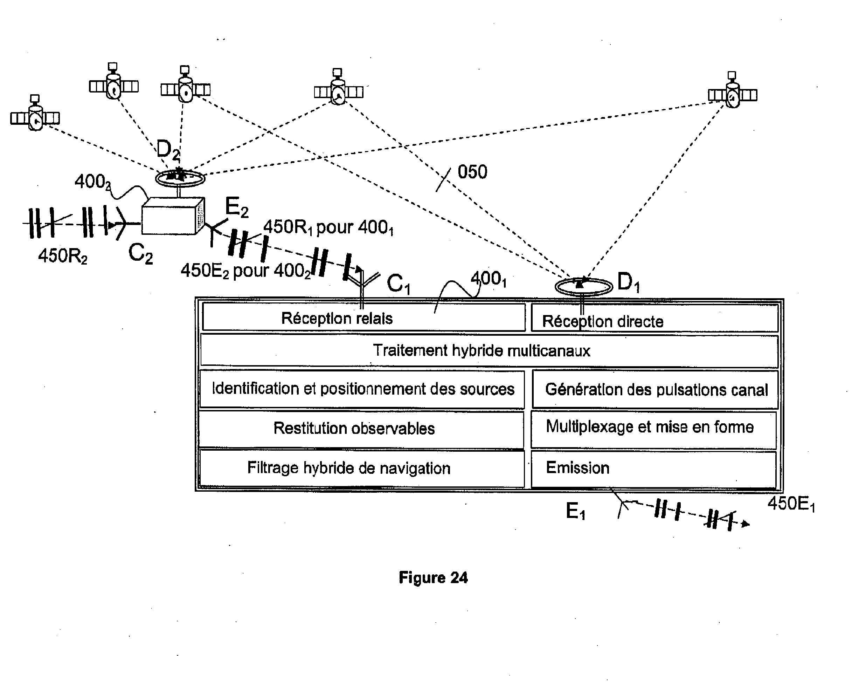

Réciproquement, l'optimisation des traitements, contrôlée et commandée par l'étape 3046 peut passer par toute une série de modification dans la façon de gérer la corrélation, la vitesse de glissement des générations de répliques pour l'acquisition et ou la poursuite des méthodes pour l'asservissement et les choix des paramètres des boudes de poursuites. C'est pourquoi, en supposant en figure 24 que tous les contrôles et les commandes des traitements séquentiels du signal sont exécutés dans l'étape nommée ici analyse des énergies, une double interface 354 en entrée et sortie est illustrée en figure 24 entre l'étape contrôle et commande des optimisations 3046 et les étapes analyse énergie du canal observables 3032k3 et analyse énergie du canal de réception directe 3034k3. Cette interface concerne en particulier :
- réglage de la vitesse de balayage de ladite réplique en fonction des différences temporelles entre impulsions relevées sur ledit canal d'observable relais associé,
- réglage des durées, séquences et synchronisations des opérations d'intégrations cohérentes et d'intégrations non cohérentes en fonction des écarts de réplique relevés avec ledit canal d'observables relais associé,
- réglage des paramètres de filtrage et ordres de boucle d'asservissement des traitements de poursuite dudit signal de positionnement en fonction des écarts de réplique relevés sur ledit canal d'observables relais associé, et
- réglage des paramètres utilisés dans les calculs des énergies du signal résultantes de l'opération de désétalement et permettant la gestion globale des modes des dits traitements directs en fonction des écarts relevés sur ledit canal d'observables relais associé.

Selon une variante, pour une réactivité maximale, on décrit en figure 23, une interaction directe 350 entre génération de répliques, à savoir une intervention directe du positionnement de la réplique de code source #k 3034k4 à partir de la génération de la réplique impulsions source #k 3032k4, ou bien sur la génération de porteuse 3034k5, ou réciproquement. Ce mode de réalisation particulier est initialisé par l'étape 3046 qui laisse la main à une intervention directe des canaux associés entre eux jusqu'à ce qu'un événement contrôlé par l'étape 3046 et non contrôlé par les étapes 3032k et 3034k intervienne (par exemple une exclusion suite à une non intégrité d'un observable détectée par le contrôle d'intégrité implémenté au niveau du filtrage hybride de navigation). Cette mise en oeuvre particulière intervient en particulier lorsque les signaux reçus en direct sont très faibles et que les signaux relayés sont en grande proximité comme on l'avait vu dans l'utilisation opérationnelle montrée en figure 18.

Le sens des dépendances commandées et contrôlées par l'étape 3046 pour l'hybridation serrée dépend évidemment d'une comparaison d'une combinaison de critères évalués sur les canaux d'observables relais et les canaux de réception directe, rendus comparables, et va toujours du canal associé le plus fiable en maître sur le canal associé le plus vulnérable ; Les modes de réalisations montrés en figure 23 sont plutôt ressemblants à des modes de traitement implémentés en corrélation temporelle. Ce mode n'est pas restrictif au regard du procédé décrit dans la présente invention et un mode de corrélation fréquentielle est tout aussi adaptée au procédé à la condition d'adapter la génération de réplique au domaine fréquentiel, à savoir que c'est la génération du spectre de fréquence de la réplique qui permet le filtrage adapté qui est maîtrisé en même temps que le choix des échantillons pris sur le signal reçu, en termes de fréquence d'échantillonnage, durée temporelle de la fenêtre de signal reçue et nombre de points de FFT ( acronyme de Fast Fourier Transform ).

Finalement, l'étape de restitution des observables 205 utilise simultanément, pour les canaux d'observables relais, les résultats des étapes d'identification et de positionnement des sources relayées 3041, de l'étape démultiplexage et démodulation 3032 pour calculer les observables relais, qui sont représentatifs par exemple des pseudo distance et pseudo vitesses entre sources et relais, comme décrit plus haut dans le procédé de localisation à distance (technique TOA). Par ailleurs, l'étape de restitution des observables 205 utilise simultanément, pour les canaux d'observables directs, les résultats des étapes d'identification et de positionnement des sources directes 3042 et de l'étape de traitement direct des canaux (canal par canal) 3034 pour calculer les observables directs, qui sont représentatifs par exemple des pseudo distance et pseudo vitesses entre sources et équipement à positionner, selon les techniques TOA de l'état de l'art.

Dans un mode de réalisation particulier, le filtrage hybride de navigation peut résoudre séparément les observables relais et les observables directs. Dans le premier cas, il résout la position du relais et une inconnue de temps, qui inclut la désynchronisation du temps local sur l'échelle de temps système et le temps de propagation relais-équipement distant, en l'occurrence équipement mobile à positionner. Dans le deuxième cas, il résout la position de l'équipement mobile et la désynchronisation de l'échelle de temps local à l'échelle de temps système. Dans tous les cas où les redondances sont assez grandes, en particulier en nombre de sources communes et/ou en nombre de relais, les modes communs peuvent être discernés entre erreurs de désynchronisation et temps de propagation spatial entre relais et équipement mobile.

Selon une variante, et particulièrement lorsque les échelles de temps local sont partagées, les différences d'observables entre relais et direct sur une même source permet cette distinction.

Selon une variante, les observables et les équations d'états et modèle d'évolution du filtrage de navigation sont décrits pour représenter tous des pseudo distances et des pseudo vitesses entre sources et équipement mobil, en particulier lorsque le relais est en très grande proximité. Dans ce cas une pondération adéquate prend en compte une évaluation des erreurs de principes et peut être évaluée en particulier à partir des résultats de l'hybridation serrée des canaux d'observables relais et des canaux de réception directe associés.

Selon une variante, les contrôles d'intégrité à la fois sur les étapes de restitution d'observables et sur le filtrage de navigation qui ont été décrits dans le procédé de localisation selon le troisième aspect de la présente invention sont complètement transposable ici à la fois pour la chaîne d'observables relais, pour la chaîne d'observables directs et pour la combinaison hybride des deux, pourvu que des modèles statistiques d'erreurs et de bruits raisonnables en regard des événements redoutés attendus soient utilisés avec les seuils adaptés et avec les pondérations adéquates.

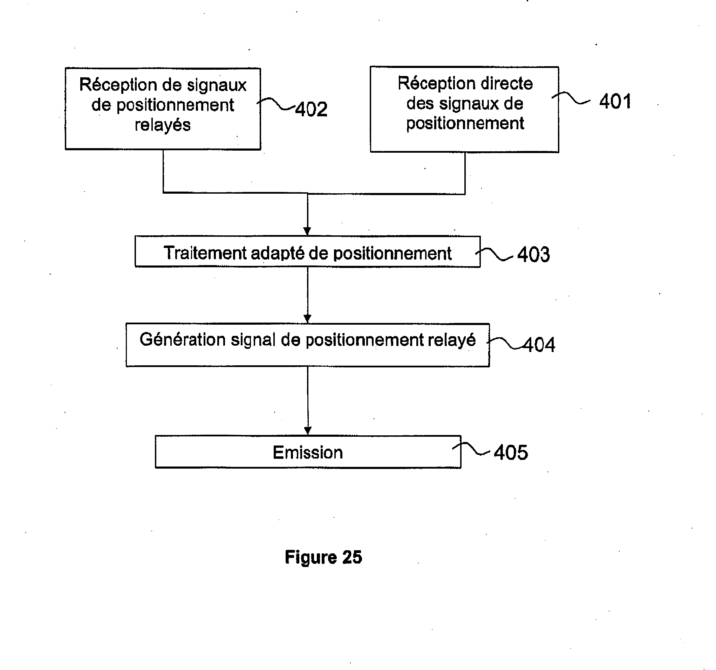

On donne, ci-après, une description détaillée de mise en réseaux d'équipements relais mobiles, pour un exemple d'applications et d'architecture des précédentes réalisation des relais pulsé multi synchrone multi-source, en regard des figures 24 et 25.

En figure 24 on observe les interfaces du dispositif ou équipement mobile 400₁, objet du premier aspect de la présente invention et on voit un aperçu des moyens qu'il intègre dans un mode de réalisation particulier et préférentiel.

L'équipement mobile 400₁ possède au moins deux moyens de réception différents. L'un, pour une réception directe des signaux de positionnement 050 émis par un ensemble cohérent de sources, illustrées comme des satellites GNSS en figure 24, sans que cela soit une restriction, a un aérien repéré en D₁. L'autre a un aérien repéré en C₁, pour une réception des signaux pulsé multi synchrone multi-source 450R₁, appelés aussi signaux de positionnement relayés, émis par un équipement mobile homologue 400₂, en tout point identique à l'équipement mobile 400₁ et mettant en oeuvre le même procédé, objet du second aspect de l'invention. L'équipement mobile a aussi un moyen d'émission équipé d'un aérien E₁ pour diffuser un signal également pulsé multi synchrone multi-source 150E₁.

L'équipement mobile 400₁ possède aussi un moyen de traitement hybride multi canaux, un moyen d'identification et positionnement des sources, un moyen de restitution des observables, un moyen de filtrage hybride de navigation, un moyen de génération des pulsations canal, un moyen de multiplexage et mise en forme temporelle des pulsations, tous ces moyens et les fonctions et étapes qu'ils mettent en oeuvre ayant été décrits en détail plus haut dans ce document.

L'équipement mobile homologue 400₂ reçoit, en figure 24 par son capteur D₂, les mêmes sources que l'équipement mobile 400₁, mais ceci n'est pas une exigence du fonctionnement du dispositif 400₁ ni du dispositif 400₂. Par ailleurs, bien que cela n'ait pas été représenté en figure 24, l'équipement mobile 400₁ utilise un moyen d'affichage des résultats de son positionnement hybride ou bien un moyen de sortie de ses données à destination d'une application de navigation, ou de guidage, ou de LBS ou toute autre application ayant besoin du positionnement réalisé.

En figure 25, on voit un exemple de succession d'étapes du procédé conforme au deuxième aspect de la présente invention, et leur progression.

L'étape de réception directe des signaux de positionnement 401 et l'étape de réception des signaux de positionnement relayés 402 ont déjà été décrites plus haut et sont conforme à l'état de l'art. L'étape d'émission 405, qui consiste à émettre des signaux de positionnement relayés est compatible avec l'étape 402 qui consiste à recevoir des signaux analogues à ceux émis, sans qu'il y ait nécessairement de communication protocolaire.

Selon une variante, ces étapes 402 et 405 consistent à émettre et recevoir des signaux ultra large bande. Selon une variante ces étapes 402 et 405 consistent à émettre et recevoir des signaux qui utilisent une bande de fréquence très large, typiquement 100 MHz, dans les bandes réglementairement allouées aux services de radionavigation par satellite, services de radionavigation aéronautiques ou bien de radiolocalisation.

L'étape qui suit et utilise les résultats des étapes de réception 401 et 402 est une étape de traitement adapté de positionnement 403. Cette étape travaille selon l'état de l'art sur les signaux de positionnement reçus en direct et qui lui viennent de l'étape 401. Pour un mode de réalisation particulier, liée à l'utilisation des signaux GNSS, cet état de l'art est décrit succinctement et partiellement dans la figure 6 (traitement dé signal uniquement, hors restitution d'observables et filtrage de navigation). Cette étape travaille selon le procédé de localisation décrit plus haut et dans la figure 16 sur les signaux de positionnement relayés et qui lui viennent de l'étape 402. Selon une variante, et selon un mode préférentiel, cette étape travaille selon le procédé de positionnement hybride décrit plus haut et dans les figures 21 à 23.

L'étape de génération du signal relayé 404, peut être, selon un mode de réalisation particulier, celle représentée par les figures 3 à 13 sous la combinaison des étapes particulières et leurs combinaisons, 102 et 103, l'étape 101 des figures 3 à 13 étant quant à elle partie intégrante de l'étape de traitement adapté de positionnement 403.

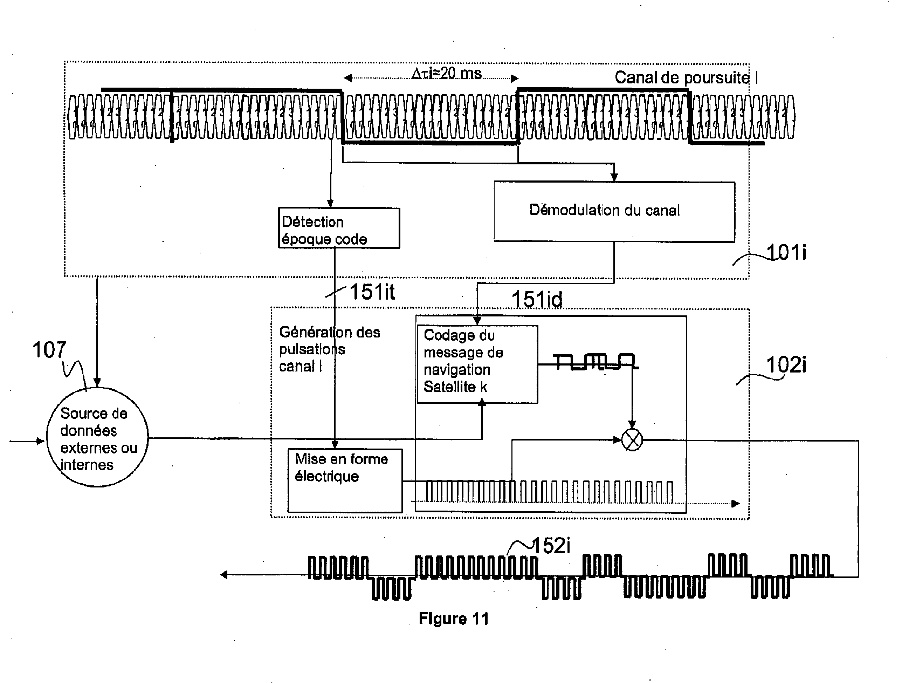

On se réfère à la description détaillée de ces figures 3 à 13 pour en apprécier les variantes, dont les suivantes sont particulièrement intéressantes dans le procédé conforme au deuxième aspect de la présente invention :
- cette étape peut porter en surimpression les messages de navigation et d'autres informations sur le signal pulsé multi synchrone multi-source. Si les signaux de positionnement sont des signaux GNSS, ces messages de navigation contiennent toute information utile pour le positionnement et la synchronisation des sources, et pour certains des données d'intégrité sur les signaux de positionnement d'une pluralité de sources. (voir descriptions des figures 7 et 11).
- cette étape peut porter en surimpression ou directement en correction des corrections spatiotemporelles applicables aux signaux de positionnement pour une amélioration de la précision par correction des erreurs de principe (voir description des figures 13).

Selon une variante, l'étape de traitement adapté de positionnement 403 permet de localiser et de calculer la vitesse les équipements mobiles homologues, dès lors qu'ils émettent un signal de positionnement relayé. Un mode de réalisation particulier de cette variante, utilisant le signal pulsé multi synchrone multi source, a été décrit plus haut dans le document et est représenté en figure 16.

Dans cette variante, un contrôle d'intégrité peut également être mis en oeuvre et évaluer une performance de réception canal et une performance de positionnement en précision et intégrité, appelée aussi facteur de qualité selon un indice de confiance préétabli. Cet indice de confiance peut ici être déterminé à l'avance pour tous les équipements mobiles qui se trouvent en place dans une même zone de couverture, ou bien être négocié entre deux équipements qui, au hasard de leur mobilité, reçoivent mutuellement les signaux de positionnement relayés.

Selon une variante, toutes ces informations calculées par l'équipements mobiles peuvent être partagées par des équipements mobiles homologues par le biais d'une modulation de données internes et externes, sur le signal de positionnement relayé, comme mises en oeuvre par l'étape de génération du signal relayé 404 (voir description figure 4).

Selon une variante, l'étape de traitement adapté de positionnement 403 permet de réaliser un positionnement hybride, de calculer la vitesse, et de calculer le temps sous forme d'une horloge virtuelle composite de l'équipement mobile qui la met en oeuvre comme cela a été décrit plus haut dans le document et représenté dans les figures 21 à 23.

Selon une variante, toutes ces informations calculées par l'équipements mobiles peuvent être partagées par des équipements mobiles homologues par le biais d'une modulation de données internes et externes, sur le signal de positionnement relayé, comme mises en oeuvre par l'étape de génération du signal relayé 404 (voir description figure 4).

Selon une variante, ces données calculées ne sont transférées à des équipements mobiles homologues, par le biais du signal pulsé multi synchrone multi-source, que lorsque les évaluations de performance en précision et intégrités sont supérieures à un seuil prédéterminé ou négocié, de façon à ne pas encombrer les transmissions d'informations imprécises, non intègres ou inutilisables.

## Revendications

1. Procédé de relais pulsé multi synchrone multi-source, ledit relais (100) étant mobile ou non dans au moins une zone de couverture (010) d'au moins un système de positionnement, ledit système de positionnement mettant en oeuvre une pluralité cohérente de sources émettrices (Si) de signaux de positionnement (050), **caractérisé en ce que** ledit relais met en oeuvre les étapes suivantes :
- une étape de réception (105) sur au moins un capteur (A) de réception solidaire dudit relais d'au moins un signal de positionnement (050),
- une étape de traitement (101) d'au moins un signal de positionnement sur au moins un canal de réception,
- pour au moins un canal de réception, une étape de génération de pulsations dites canal (102), synchronisées avec ledit signal de positionnement traité par ledit canal de réception, lesdites pulsations canal étant représentatives à la fois des instants d'émission dudit signal de positionnement et du positionnement dudit moyen de réception du relais,
- une étape de multiplexage et mise en forme temporelle (103) desdites pulsations pour la génération d'un signal pulsé multi synchrone multi source, et
- une étape d'émission (104), par au moins un moyen d'émission (B), dudit signal pulsé multi synchrone multi source (150).

2. Procédé selon la revendication 1, **caractérisé en ce que** le signal pulsé multi synchrone multi-source (150) est représentatif d'au moins une source parmi une pluralité de sources de signaux de positionnement en relayant au moins une partie de marqueurs temporels prédéterminés (151it), choisis parmi des transitions de codes de télémétrie, lesdits codes de télémétrie étant générés et émis par ladite source Si grâce à une horloge dite de source.

3. Procédé selon l'une quelconque des revendications 1 à 2, **caractérisé en ce que** le signal pulsé multi synchrone multi source (150) est représentatif d'au moins une source Si parmi une pluralité de sources de signaux de positionnement (050) en relayant au moins une partie des marqueurs temporels prédéterminés sur des cycles de porteuse, lesdits cycles de porteuse ayant été marqués par une modulation spécifique au niveau de la source dans un but de télémétrie et étant alors représentatifs de ladite horloge de source.

4. Procédé selon l'une quelconque des revendications 1 à 3, **caractérisé en ce que** ladite étape de traitement (101) comporte, pour au moins un canal, une étape de génération d'une horloge virtuelle, composite d'une multiplicité desdites horloges de sources.

5. Procédé selon l'une quelconque des revendications 1 à 4, **caractérisé en ce que** ladite étape de traitement (101) comporte un contrôle d'intégrité dit canal, l'étape de génération et/ou l'étape de multiplexage dépendant du résultat dudit contrôle d'intégrité canal par exclusion dudit canal ou inclusion d'un indice de confiance.

6. Procédé selon la revendication 5, **caractérisé en ce que** le contrôle d'intégrité canal détecte au moins l'une des conditions suivantes :
- détection d'un multi trajet dans l'étape de traitement,
- détection d'une interférence entre signaux de positionnement, et/ou entre le signal de positionnement et un signal interférant autre, en particulier une raie spectrale parasitaire et
- détection d'une alerte ou autre information représentative de la non intégrité des informations portées dans au moins un desdits signaux de positionnement.

7. Procédé selon l'une quelconque des revendications 1 à 6, **caractérisé en ce qu'**il comporte une étape de contrôle d'intégrité dit relais, représentative de la cohérence de l'information reçue sur une pluralité de canaux, l'étape de génération et/ou l'étape de multiplexage dépendant du résultat dudit contrôle d'intégrité relais par exclusion d'un ou plusieurs canaux ou par inclusion d'un indice de confiance.

8. Procédé selon la revendication 7, **caractérisé en ce que** ladite étape de contrôle d'intégrité relais utilise la redondance des canaux et signaux de positionnement pour détecter et isoler un traitement défectueux sur un canal.

9. Procédé selon l'une quelconque des revendications 1 à 8, **caractérisé en ce que** ladite étape de traitement comporte, pour au moins un canal, le calcul d'au moins une correction spatiotemporelle des informations intéressant ledit canal, calculée grâce à des informations traitées sur ledit canal ou sur au moins un des autres canaux.

10. Procédé selon la revendication 9, **caractérisé en ce que** ladite correction spatiotemporelle est représentative d'au moins une des informations suivantes :
- temps de propagation et calcul interne audit relais, par ailleurs calibré,
- biais d'horloge locale résolu par rapport à la synchronisation d'une pluralité de sources,
- délai de propagation non représentatif d'une distance géométrique, et en particulier ionosphérique ou troposphérique si la source du signal de positionnement est satellitaire,
- délai d'un multi trajet détecté,
- correction différentielle, en particulier si ledit relais est fixe et de position connue,
- correction d'une dégradation volontaire appliquée à au moins un des signaux de positionnement traités,
- bras de levier interne au relais représentatif d'un différentiel de positions entre lesdits capteurs de réception et/ou entre les capteurs de réception et le moyen d'émission et
- l'écart de temps entre une pulsation canal générée sur un canal traitant le signal venant d'un couple dit source - capteur pivot, avec une pulsation canal provenant d'un autre canal qui traite la même source sur un capteur différent et correspondant directement à des observables d'attitude.

11. Procédé selon l'une quelconque des revendications 9 à 10, **caractérisé en ce que**, pour au moins un canal, ladite étape de génération des pulsations canal 102 utilise au moins une correction spatiotemporelle, l'instant de génération de la pulsation dépendant de cette correction.

12. Procédé selon l'une quelconque des revendications 1 à 11, **caractérisé en ce que** l'étape de multiplexage et mise en forme temporelle (103) respecte temporellement la séquence de pulsations canal telle qu'elle a été générée par tout ou partie de la pluralité de canaux.

13. Procédé selon l'une quelconque des revendications 9 à 10, **caractérisé en ce que** ladite étape de multiplexage et mise en forme temporelle (103) exploite au moins une correction spatiotemporelle, la séquence de pulsations canal à l'origine du signal pulsé multi synchrone multi source dépendant de ladite exploitation de corrections

14. Procédé selon l'une quelconque des revendications 1 à 13, **caractérisé en ce que**, au cours de ladite étape de génération de pulsation canal (102) et/ou au cours de ladite étape de multiplexage et mise en forme temporelle (103), on utilise, sur au moins un canal, au moins un codage source pour une modulation d'impulsion ou de train d'impulsions dans le signal pulsé multi synchrone multi source.

15. Procédé selon la revendication 14, **caractérisé en ce que** ledit codage source est représentatif dudit relais et/ou d'une donnée fournie par ailleurs audit relais pouvant être représentative d'au moins un des paramètres suivants :
- code d'accès au relais,
- signature du relais,
- code de multiplex si plusieurs relais doivent partager un même canal de transmission en accès multiple, et
- identificateur du capteur utilisé dans le cas d'un relais multi-capteur.

16. Procédé selon l'une quelconque des revendications 14 à 15, **caractérisée en ce que** ledit codage source est représentatif d'un récepteur destinataire du signal pulsé multi synchrone multi source à émettre par ledit relais et intègre un code d'accès à celui-ci.

17. Procédé selon l'une quelconque des revendications 14 à 16, **caractérisée en ce que** ledit codage source est représentatif d'un motif de synchronisation.

18. Procédé selon l'une quelconque des revendications 14 à 17, **caractérisé en ce que** ledit codage source est représentatif d'un compteur de pulsation.

19. Procédé selon l'une quelconque des revendications 14 à 18, **caractérisé en ce que** ledit codage source est représentatif d'un identificateur de ladite source dudit signal de positionnement.

20. Procédé selon l'une quelconque des revendications 14 à 19, **caractérisé en ce que** ledit codage source est représentatif d'une donnée (101id) contenue dans la modulation propre dudit signal de positionnement.

21. Procédé selon l'une quelconque des revendications 14 à 20, **caractérisé en ce que** ledit codage source est représentatif dudit indice de confiance évalué par ladite étape de contrôle d'intégrité.

22. Procédé selon l'une quelconque des revendications 14 à 21, **caractérisé en ce que** ledit codage source est représentatif d'une correction spatiotemporelle.

23. Procédé selon l'une quelconque des revendications 1 à 22, **caractérisé en ce que** ladite étape de multiplexage et mise en forme (103) ne fonctionne que sur certains slots de temps.

24. Procédé selon l'une quelconque des revendications 1 à 23, **caractérisé en ce que** l'étape de multiplexage et mise en forme temporelle (103) traite les collisions potentielles desdites pulsations canal sur l'échelle des temps.

25. Procédé selon l'une quelconque des revendications 1 à 24, **caractérisé en ce que** l'étape de multiplexage et mise en forme temporelle alterne des slots de multiplexage et mise en forme temporelle (103) des pulsations canal et des slots de multiplexage et mise en forme de données fournies au relais par un moyen de communication externe (107), comprenant en particulier les données d'un service basé sur la localisation.

26. Procédé selon l'une quelconque des revendications 1 à 25, **caractérisé en ce que** l'étape d'émission (104) utilise la technologie Ultra Large Bande.

27. Procédé selon l'une quelconque des revendications 1 à 26, **caractérisé en ce que** l'étape d'émission (104) utilise la technologie optique.

28. Procédé selon l'une quelconque des revendication 1 à 27, **caractérisé en ce que** l'étape d'émission (104) utilise une bande de fréquence très large, typiquement 100 MHz dans des bandes réglementairement allouées aux services de radionavigation par satellite, services de radionavigation aéronautiques ou bien de radiolocalisation.

29. Procédé selon l'une quelconque des revendications 1 à 28, **caractérisé en ce que** ladite étape de traitement (101) est représentative de la poursuite du signal de positionnement d'un système global de navigation par satellites ou de ses compléments et **caractérisée en ce que** ladite pulsation canal est synchrone de la détection d'une époque du code de télémétrie datant l'émission dans le signal de positionnement.

30. Dispositif (100) de relais multi synchrone multi source de signaux de positionnement, **caractérisé en ce qu'**il comporte:
- au moins un moyen de réception pour la réception d'au moins un signal de positionnement,
- un moyen de traitement d'au moins un signal de positionnement sur au moins un canal dit de réception,
- pour au moins un canal de réception, un moyen de génération de pulsations dites canal, synchronisées avec ledit signal de positionnement traité par ledit canal de réception, lesdites pulsations canal étant représentatives à la fois des instants d'émission dudit signal de positionnement et du positionnement dudit capteur de réception du relais,
- un moyen de multiplexage et mise en forme temporelle des dites pulsations pour la génération d'un signal multi synchrone pulsé, et
- au moins un moyen d'émission dudit signal multi synchrone pulsé.

31. Procédé de localisation (200) et détermination d'attitude d'un équipement solidaire (020) d'un relais (100) pulsé multi synchrone multi source selon la revendication 30, dit équipement relais, mobile ou non, par un équipement distant, mobile ou non, **caractérisé en ce que** ledit équipement distant met en oeuvre:
- une étape de réception (201), par un moyen de réception (C) dudit équipement distant, du signal pulsé multi synchrone multi-source émis par ledit équipement relais,
- une étape de détection et datation des impulsions (202) ou trains d'impulsions dites élémentaires composant ledit signal pulsé multi synchrone multi-source,
- une étape de démultiplexage et démodulation (203) desdites impulsions ou trains d'impulsions élémentaires en canaux dits d'observables relais, lesdits canaux d'observables relais étant représentatifs d'au plus une des sources, dites relayées pour avoir participé à la génération dudit signal pulsé multi synchrone multi-source,
- une étape d'identification et de positionnement desdites sources (204) relayées,
- pour chaque canal d'observables relais, une étape de restitution d'observables relais (205) et
- une étape de filtrage de navigation (206) agissant sur lesdits observables relais et réalisant le calcul d'une estimation de la position, de la vitesse, dudit équipement relais dès lors que le nombre de dites sources relayées dépasse d'au moins un le nombre de degrés de liberté du centre de gravité du dit équipement relais et, le cas échéant, de l'attitude dudit relais, dès lors que le nombre de capteurs de réception des sources, au niveau dudit relais, a dépassé d'au moins un le nombre de degrés de liberté en rotation du dit équipement relais.

32. Procédé selon la revendication 31, **caractérisé en ce que** ladite étape de détection et datation (202) utilise au moins l'une des techniques suivantes :
- mesure ou calcul d'énergie du signal reçu et déclenchement d'un trigger sur dépassement d'un seuil associé au bruit ambiant,
- corrélation avec un motif de synchronisation,
- corrélation avec un identificateur dudit équipement relais, et
- corrélation avec une réplique crée à partir d'un traitement de prévision des instants d'arrivée des impulsions ou trains d'impulsions élémentaires.

33. Procédé selon l'une quelconque des revendications 31 à 32, **caractérisé en ce que** ladite étape de détection et datation (202) comporte un traitement d'isolation du trajet direct des impulsions ou trains d'impulsions élémentaires.

34. Procédé selon l'une quelconque des revendications 31 à 33, **caractérisé en ce que** ladite étape de démultiplexage et démodulation (203) classe lesdites impulsions élémentaires ou train d'impulsions élémentaires détectées et datées, chaque classe, dit canal d'observables relais, étant représentative d'une unique source.

35. Procédé selon l'une quelconque des revendications 31 à 34, **caractérisé en ce que** ladite étape de démultiplexage et démodulation (203) classe lesdites impulsions élémentaires ou trains d'impulsions élémentaires détectées et datées, chaque classe, dit canal d'observables relais, étant représentative d'un unique couple source - capteur dudit relais.

36. Procédé selon l'une quelconque des revendications 31 à 35, **caractérisé en ce que** ladite étape de démultiplexage et démodulation (203) utilise, pour son dit classement, un traitement de prévision des écarts temporels et/ou fréquentiels attendus entre lesdites impulsions ou trains d'impulsions élémentaires, selon une connaissance a priori des dites sources, et/ou du dit relais, et/ou d'un choix prédéterminé d'une unité sur lesdites horloges de source, et un traitement de corrélation et/ou de filtrage adapté entre le résultat de ladite prévision et le résultat de ladite étape de détection et datation.

37. Procédé selon l'une quelconque des revendications 31 à 36, **caractérisé en ce que** ladite étape de démultiplexage et démodulation (203) utilise l'un des moyens suivants pour réaliser son dit classement :
- des tests d'hypothèses et vraisemblance sur des choix exhaustifs de sources et capteurs, à travers une grille de recherche temps fréquence,
- des tests d'hypothèses et vraisemblance sur des choix réduits de sources et capteurs, à travers une liste de cellules temps fréquence utilisant une connaissance approximative des coordonnées, déplacements et caractéristiques des dites sources et du dit relais,
- la démodulation d'au moins un des trains d'impulsions élémentaires pour identifier au moins une des dites sources relayées,
- la démodulation d'au moins un des trains d'impulsions élémentaires pour identifier au moins une des dits capteurs utilisés, et
- le type de modulation utilisée pour les trains d'impulsions.

38. Procédé selon l'une quelconque des revendications 31 à 37, **caractérisé en ce que** ladite étape de démultiplexage et démodulation (203) utilise la démodulation d'au moins un des trains d'impulsions élémentaires pour restituer une correction spatiotemporelle et corriger au moins un des résultats de ladite étape de détection et datation.

39. Procédé selon l'une quelconque des revendications 31 à 38, **caractérisé en ce que** ladite étape de démultiplexage et démodulation (203) restitue la datation sur l'échelle de temps de la source d'au moins une des impulsions d'au moins un des canaux d'observables relais.

40. Procédé selon la revendication 39, **caractérisé en ce que** ladite étape de démultiplexage et démodulation (203) utilise la démodulation d'un compteur d'époque pour restituer une datation en échelle de temps de source.

41. Procédé selon l'une quelconque des revendications 31 à 40, **caractérisé en ce que** ladite étape de démultiplexage et démodulation (203) utilise la démodulation d'au moins un des trains d'impulsions élémentaires pour restituer une correction spatiotemporelle représentative d'une différence de temps d'arrivée d'un signal de positionnement venant d'une même source entre deux capteurs dudit relais, le résultat de ladite étape de restitution d'observables relais dépendant de ladite correction spatiotemporelle.

42. Procédé selon l'une quelconque des revendications 31 à 41, **caractérisé en ce que** ladite étape de démultiplexage et démodulation (203) utilise un filtrage des datations des impulsions élémentaires reconnues comme appartenant à une même dite source relayée, le traitement de ladite étape de détection et datation dépendant du résultat de ce filtrage.

43. Procédé selon l'une quelconque des revendications 31 à 42, **caractérisé en ce que** l'étape de démultiplexage et démodulation (203) exploite des informations d'horloge virtuelle composite, le cas échéant, ladite étape de détection et datation mettant en oeuvre des traitements spécifiques pour utiliser le résultat de cette exploitation.

44. Procédé selon l'une quelconque des revendications 31 à 43, **caractérisé en ce que** l'étape de démultiplexage et démodulation (203) exploite des informations d'horloge virtuelle composite, le cas échéant, ladite étape de filtrage de navigation mettant en oeuvre des traitements spécifiques pour utiliser le résultat de cette exploitation.

45. Procédé selon l'une quelconque des revendications 31 à 44, **caractérisé en ce que**, pour au moins un dit canal d'observable relais, ladite étape de démultiplexage et démodulation (203) intègre un contrôle récurrent d'intégrité dit datation relais, résultant dans l'invalidation de ladite datation attachée aux récurrences d'impulsions classées dans ledit canal d'observable et/ou l'attribution d'un facteur de qualité dit datation calculé selon un indice de confiance prédéterminé

46. Procédé selon la revendication 45, **caractérisé en ce que** ledit contrôle d'intégrité datation relais détecte au moins l'une des conditions suivantes :
- une anomalie dans la séquence des impulsions élémentaires,
- la présence identifiée et non contrôlée d'un multi trajet entre ladite source relayée et ledit équipement relais et/ou entre ledit équipement relais et ledit équipement mobile,
- un taux d'erreur de bit anormalement élevé ou des anomalies dans des contrôles de parité au cours du traitement de démodulation,
- une interférence entre signaux provenant de relais multiples, entre signal relayé et signaux de positionnement directs et/ou entre le signal de relais et un signal interférant autre, en particulier une raie spectrale parasitaire, et
- une alerte ou autre information représentative de la non intégrité des informations portées dans le signal pulsé multi synchrone multi source.

47. Procédé selon l'une quelconque des revendications 31 à 46, **caractérisé en ce que** ladite étape d'identification et de positionnement des sources (204) relayées réalise une étape d'acquisition et/ou une mémorisation de messages (2041), lesdits messages étant représentatifs de modèles de trajectoires desdites sources relayées et/ou de modèles d'évolutions de leurs dites horloges sources.

48. Procédé selon la revendication 47, **caractérisé en ce que** les messages à acquérir et/ou mémoriser dans ladite étape d'acquisition et/ou de mémorisation de messages (2041) proviennent d'au moins un des résultats suivants :
- résultats d'une initialisation et/ou mémorisation d'une base de données dans l'équipement distant,
- résultats de l'étape de démultiplexage et démodulation desdites impulsions ou trains d'impulsions élémentaires détectées,
- résultats de la réception d'une télécommunication filaire ou sans fil d'un serveur de tels messages, cette télécommunication pouvant être périodique ou sur requête et
- dans le cas où les sources relayées appartiennent à la classe des systèmes globaux de navigation par satellites, résultats de la démodulation des signaux eux-mêmes grâce à un récepteur adapté.

49. Procédé selon l'une quelconque des revendications 31 à 48, **caractérisé en ce que** ladite étape de restitution d'observables relais (205) calcule, pour au moins un dit capteur relayé dudit relais, à partir des données d'au moins un des ensembles des dits canaux d'observables relais représentatifs dudit capteur et d'un nombre de sources relayées suffisant en regard du nombre de degrés de liberté du centre de gravité dudit équipement relais, l'un au moins des observables suivants :
- pour chaque source, la pseudo distance source - relais, calculée grâce aux résultats de la datation d'au moins une des impulsions en échelle de temps locale et sa restitution en échelle de temps source,
- pour chaque source, la différence de datation d'au moins une des impulsions à au moins une des suivantes,
- à partir d'une source pivot, et pour chaque autre source, la différence de datation d'au moins une des impulsions à celle de ladite source pivot, représentative d'un même marqueur de temps, et
- à partir d'une source pivot, et pour chaque autre source, les doubles différences de datation d'au moins des impulsions à au moins une des suivantes à la même quantité évaluée pour ladite source pivot, pour des impulsions représentatives des mêmes marqueurs de temps.

50. Procédé selon l'une quelconque des revendications 31 à 49, **caractérisé en ce que** ladite étape de restitution d'observables relais (205) calcule, pour au moins une des sources relayées par ledit relais, à partir des données d'au moins un des ensembles des dits canaux d'observables relais représentatifs de ladite source et d'un nombre de capteurs relayés suffisant en regard du nombre de degrés de liberté en rotation dudit équipement relais (110) autour de son centre de gravité, l'un au moins des observables suivants :
- pour chaque capteur et pour chaque source, la pseudo distance source - capteur du relais, calculée grâce aux résultats de la datation d'au moins une des impulsions du couple capteur - source en échelle de temps locale et sa restitution en échelle de temps source,
- pour chaque capteur, et pour chaque source, la différence de datation d'au moins une des impulsions à au moins une des suivantes,
- pour chaque source, à partir d'un capteur pivot, et pour chaque autre capteur, la différence de datation d'au moins une des impulsions liée à ladite source et au dit capteur à celle liée à la même dite source par l'intermédiaire du dit capteur pivot, lesdites impulsions étant représentatives d'un même marqueur de temps de ladite source, et
- à partir d'un capteur pivot et d'une source pivot, et pour chaque autre couple source - capteur, les différences d'une source à la source pivot des différences de datation d'au moins une des impulsions liée, pour ladite source, au dit capteur à celle liée à la même source et au dit capteur pivot, lesdites impulsions étant représentatives d'un même marqueur de temps de ladite source.

51. Procédé selon l'une quelconque des revendications 31 à 50, **caractérisé en ce que**, pour au moins un canal d'observables relais; ladite étape de restitution des observables relais (205) intègre un contrôle d'intégrité dit mesures relais résultant dans l'invalidation ou non de l'observable calculé et/ou l'adjonction d'un facteur de qualité dit observable relais calculé selon un indice de confiance prédéterminé.

52. Procédé selon la revendication 51, **caractérisé en ce que** ledit contrôle d'intégrité mesures relais utilise au moins l'un des paramètres suivants dans son évaluation de facteur de qualité observable relais et/ou son invalidation d'observables :
- le facteur de qualité datation
- la disponibilité d'un positionnement précis de la source en regard de la performance attendue
- un indice de qualité ou d'exclusion de source provenant du signal relayé
- la présence ou non de corrections spatiotemporelles adéquates, et
- un taux d'erreurs de bits anormalement élevé dans l'acquisition et ou la démodulation des messages le cas échéant

53. Procédé selon l'une quelconque des revendications 31 à 52, **caractérisé en ce que** ladite étape de filtrage de navigation (206) utilise une pondération des observables relais, le résultat en terme de précision et intégrité de l'estimée de position, et vitesse et le cas échéant de l'attitude de l'équipement relais dépendant de cette pondération.

54. Procédé selon la revendication 53 et selon l'une quelconque des revendications 51 à 52, **caractérisé en ce que** ladite étape de filtrage de navigation (206) utilise ledit facteur de qualité observable relais calculé par ladite étape de restitution des observables relais pour pondérer les observables, et l'exclusion des observables relais invalidés par ledit contrôle d'intégrité mesures relais dans l'estimation de la position, vitesse et le cas échéant de l'attitude dudit relais.

55. Procédé selon l'une quelconque des revendications 31 à 52, **caractérisé en ce que** ladite étape de filtrage de navigation (206) réalise une évaluation de la précision et de l'intégrité de position et vitesse consistant à calculer un volume de protection dudit positionnement selon un indice de confiance prédéterminé.

56. Procédé selon la revendication 53, **caractérisé en ce que** ladite évaluation de la précision et de l'intégrité utilise la redondance des observables pour mettre en oeuvre un traitement de détection et isolation d'observables indésirables, le résultat de ladite étape de filtrage de navigation (206) et/ou le résultat de l'étape de démultiplexage et démodulation (203) dépendant du résultat de ce traitement.

57. Dispositif de localisation et détermination d'attitude (210) d'un équipement (020) solidaire d'un relais pulsé multi synchrone multi source (100) selon la revendication 30, dit équipement relais, mobile ou non, par un équipement distant (021), mobile ou non, **caractérisé en ce que** ledit équipement distant met en oeuvre:
- un moyen de réception d'un signal pulsé multi synchrone multi-source émis par ledit équipement relais,
- un moyen de détection et datation des impulsions ou trains d'impulsions dites élémentaires composant ledit signal pulsé multi synchrone multi-source,
- un moyen de démultiplexage et démodulation desdites impulsions ou trains d'impulsions élémentaires par des canaux dits d'observables relais, lesdits canaux d'observables relais étant représentatifs d'au plus une des sources, dites relayées pour avoir participé à la génération dudit signal pulsé multi synchrone multi-source,
- un moyen d'identification et de positionnement desdites sources relayées,
- pour chaque canal d'observables relais, un moyen de restitution d'observables relais et
- un moyen de filtrage de navigation agissant sur lesdits observables relais et réalisant le calcul de la position et/ou de la vitesse, dudit équipement relais et, le cas échéant, de l'attitude dudit relais.

58. Système comportant au moins un dispositif relais mettant en oeuvre un procédé selon l'une quelconque des revendications 1 à 29 émettant vers au moins un dispositif distant adapté à mettre en oeuvre un procédé selon la revendication 31 à 54, et permettant des accès point à multi point et/ou multi point à point et/ou multi point à multi point.

59. Procédé de positionnement hybride d'un équipement mobile, aidé par un relais (100) pulsé multi synchrone multi-source selon la revendication 30, **caractérisé en ce qu'**il comporte les étapes suivantes :
- une étape de réception dite relais (301), par un capteur de réception (C), solidaire dudit équipement mobile, pour la réception d'un dit signal pulsé multi synchrone multi-source (150) émis par ledit relais (100) pour au moins une source parmi une pluralité de signaux de positionnement dite relayée,
- une étape de réception dite directe (302), par un capteur de réception solidaire dudit équipement mobile, pour la réception de signaux de positionnement (050) provenant d'au moins une source dite directe parmi une pluralité de sources de signaux de positionnement,
- une étape de traitement hybride multicanal (303) d'au moins un signal de positionnement sur au moins un canal dit de réception directe, et d'au moins un signal pulsé multi synchrone multi-source sur au moins un canal dit d'observable relais, lesdits canaux de réception directe et d'observables relais travaillant en parallèle,
- une étape d'identification et de positionnement des dites sources (304) directes et relayées,
- une étape de restitution d'observablesdits relais et dits directs (305) dépendant respectivement des résultats de traitement des dits canaux d'observables relais et des résultats de traitement des dits canaux de réception directe,
- une étape de filtrage hybride de navigation (306) utilisant conjointement lesdits observables directs et lesdits observables relais, et réalisant une estimation de la position, de la vitesse et du temps local dudit équipement mobile.

60. Procédé selon la revendication 59, **caractérisé en ce que**, dans ladite étape de traitement hybride multicanal (303), le traitement des dits signaux pulsés multi synchrones multi-source sur les canaux d'observables relais et le traitement des dits signaux de positionnement sur les canaux de réception directe utilisent une même échelle de temps local (3033) et/ou un même oscillateur local comme base de temps.

61. Procédé selon l'une quelconque des revendications 59 à 60, **caractérisé en ce que**, ladite étape de traitement hybride multicanal (303) comporte dans le traitement des dits signaux pulsés multi synchrones multi-source un traitement de détection et datation des impulsions élémentaires (3031) et/ou trains d'impulsions élémentaires selon l'une quelconques des revendications 32 à 33 suivi d'un traitement de démultiplexage et démodulation (3032) sur les canaux d'observables relais selon l'une quelconque des revendications 34 à 46.

62. Procédé selon la revendication 61, **caractérisé en ce que** ledit traitement de détection et datation des impulsions élémentaires (3031) ou trains d'impulsions élémentaires contenues dans lesdits signaux pulsés multi synchrones multi-source utilise une échelle de temps local ou un oscillateur local qui dépend des résultats de l'estimation du temps local réalisé dans ladite étape de filtrage hybride de navigation.

63. Procédé selon l'une quelconque des revendications 59 à 62, **caractérisé en ce que**, pour chaque canal de traitement, qu'il soit de réception directe ou d'observable relais, ladite étape de traitement hybride multicanal (303) intègre un contrôle d'intégrité dit canal, résultant dans une invalidation des résultats du traitement sur le canal et/ou l'attribution d'un facteur de qualité dit canal calculé selon un indice de confiance prédéterminé et s'appliquant à une datation en échelle de temps local d'un événement connu du signal traité.

64. Procédé selon la revendication 63, **caractérisé en ce que** ledit contrôle d'intégrité canal détecte sur les canaux de réception directe au moins l'une des conditions suivantes :
- un ou plusieurs multi trajets dans l'étape de traitement direct,
- une interférence entre signaux de positionnement, et/ou entre le signal de positionnement directe et le signal pulsé multi synchrone multi source et/ou entre le signal de positionnement direct et un signal interférant autre, en particulier une raie spectrale parasitaire, et
- une alerte ou autre information représentative de la non intégrité des informations portées dans au moins un desdits signaux de positionnement.

65. Procédé selon l'une quelconque des revendications 63 à 64, **caractérisé en ce que** ledit contrôle d'intégrité canal détecte sur les canaux d'observables relais au moins l'une des conditions suivantes :
- un ou plusieurs multi trajets entre ladite source relayée et ledit équipement relais et/ou entre ledit équipement relais et ledit équipement mobile,
- un taux d'erreur de bit anormalement élevé ou des anomalies dans des contrôles de parité dans le résultat ladite étape de démodulation,
- une interférence entre signaux provenant de relais multiples, entre signal relayé et signaux de positionnement directs et/ou entre le signal de relais et un signal interférant autre, en particulier une raie spectrale parasitaire, et
- une alerte ou autre information représentative de la non intégrité des informations portées dans le signal pulsé multi synchrone multi source.

66. Procédé selon l'une quelconque des revendications 59 à 65, **caractérisé en ce que** ladite étape d'identification et de positionnement des sources (304) utilise les résultats des estimations de position vitesse et temps de ladite étape de filtrage hybride de navigation et calcule des prévisions de positionnement des dites sources relayées (3043) et des dites sources directes (3044), les traitements de ladite étape de traitement hybride multicanal (303) dépendant du résultat des dites prévisions.

67. Procédé selon l'une quelconque des revendications 59 à 66, **caractérisé en ce que** lesdites prévisions de positionnement des sources directes (3044) ou relayées (3043) utilisent des corrections spatiotemporelles résultant du traitement d'au moins un signal pulsé multi synchrone multi-source, sur au moins un canal d'observable relais.

68. Procédé selon l'une quelconque des revendications 59 à 67, **caractérisé en ce que** ladite étape de restitution des observables (305) utilise pour les canaux de réception directe des corrections spatiotemporelles résultant du traitement d'au moins un signal pulsé multi synchrone multi-source (150) sur au moins un canal d'observables relais.

69. Procédé selon l'une quelconque des revendications 59 à 68, **caractérisé en ce que** ladite étape d'identification et de positionnement des sources (304) réalise l'identification des sources, dites communes (3045), entre lesdites sources relayées et lesdites sources directes, réalise, lorsqu'il en existe, une association des dits canaux de réception directe et des dits canaux d'observable relais correspondants, et établit, pour lesdits canaux associés, une commande et un contrôle d'optimisations (3046) des traitements hybrides multicanal.

70. .Procédé selon la revendication 69, **caractérisé en ce que** ledit contrôle des dites optimisations (3046) des traitements hybrides multicanal dépend de la comparaison sur chacun des dits canaux associés d'au moins un des critères de la liste suivante :
- le rapport signal sur bruit du traitement de signal,
- le taux d'échec des contrôles de parité ou de codes correcteurs d'erreur dans les traitements de démodulations,
- l'existence et la qualité des prévisions de positionnement des sources,
- les paramètres d'un modèle statistique de bruit et d'erreur affecté aux observables dudit canal,
- les résultats dudit contrôle d'intégrité canal, et en particulier ladite invalidation et
- les résultats d'un contrôle d'intégrité position et en particulier une exclusion d'observable.

71. Procédé selon l'une quelconque des revendications 69 à 70, **caractérisé en ce que**, pour au moins une paire de dits canaux associés, ladite commande des dites optimisations (3046) des traitements hybride multicanal, crée au moins une des dépendances de la liste suivante entre les traitements du signal pulsé multi synchrone multi-source et les traitements des signaux de positionnement:
- le traitement du signal pulsé multi synchrone multi-source dépend des prévisions des positions des sources directes pour la détection des impulsions élémentaires ou trains d'impulsions élémentaires,
- le traitement du signal pulsé multi synchrone multi-source dépend des prévisions des positions des sources directes pour le démultiplexage et la démodulation,
- le traitement du signal de positionnement dépend des prévisions des positions des sources relayées,
- le traitement du signal pulsé multi synchrone multi-source dépend des résultats du traitement du signal de positionnement, et
- le traitement du signal de positionnement dépend des résultats du traitement du signal pulsé multi synchrone multi-source.

72. Procédé selon l'une quelconque des revendications 69 à 71, **caractérisé en ce que**, pour au moins un dit canal de réception directe associé à un canal d'observable relais, ladite étape de traitement hybride multicanal (303) utilise une corrélation temporelle avec une réplique du code de télémétrie pour l'acquisition et/ou la poursuite dudit signal de positionnement, et **caractérisé en ce que** les résultats du canal d'observables relais associé agissent directement sur la génération de ladite réplique en utilisant au moins l'une des actions suivantes :
- positionnement direct de ladite réplique sur une position proche de celle relevée sur ledit canal d'observables relais associé,
- réglage de la vitesse de balayage de ladite réplique en fonction des différences temporelles entre impulsions relevées sur ledit canal d'observable relais associé,
- réglage des durées, séquences et synchronisations des opérations d'intégrations cohérentes et d'intégrations non cohérentes en fonction des écarts de réplique relevés avec ledit canal d'observables relais associé,
- réglage des paramètres de filtrage et ordres de boucle d'asservissement des traitements de poursuite dudit signal de positionnement en fonction des écarts de réplique relevés sur ledit canal d'observables relais associé, et
- réglage des paramètres utilisés dans les calculs des énergies du signal résultantes de l'opération de désétalement et permettant la gestion globale des modes des dits traitements directs en fonction des écarts relevés sur ledit canal d'observables relais associé.

73. Procédé selon l'une quelconque des revendications 69 à 71, **caractérisé en ce que** pour au moins un dit canal de réception directe associé à un canal d'observable relais, ladite étape de traitement hybride multicanal (303) utilise une corrélation fréquentielle avec une réplique du code de télémétrie pour l'acquisition et/ou la poursuite dudit signal de positionnement, et **caractérisé en ce que** les résultats du canal d'observables relais associé agissent directement sur la génération du spectre de fréquence de ladite réplique en utilisant ses propres résultats dans la recherche des périodicités et séparations de source.

74. Procédé selon l'une quelconque des revendications 59 à 73, **caractérisé en ce que** ladite étape d'identification et de positionnement des sources (304) réalise une étape d'acquisition et/ou une mémorisation de messages, lesdits messages étant représentatifs de modèles de trajectoires desdites sources relayées et/ou de modèles d'évolutions de leurs dites horloges sources et proviennent indifféremment des démodulations des canaux d'observables relais ou des canaux de réception directe.

75. Procédé selon l'une quelconque des revendications 59 à 74, **caractérisé en ce que** ladite étape de restitution d'observables (305) utilise simultanément les résultats des dites étapes d'identification et de positionnement des sources (304) et de traitement hybride multicanal (303) pour calculer des pseudo distances et des pseudo vitesses entre sources et équipement mobile, pour les canaux d'observables relais comme pour les canaux de réception directe.

76. Procédé selon l'une quelconque des revendications 59 à 75, **caractérisé en ce que**, pour chaque canal d'observables relais et chaque canal de réception directe, ladite étape de restitution des observables (305) intègre un contrôle d'intégrité dit mesures résultant dans l'invalidation ou non de l'observable calculé et/ou l'adjonction d'un rayon de protection dit mesure selon un indice de confiance prédéterminé.

77. Procédé selon la revendication 76, **caractérisé en ce que** ledit contrôle d'intégrité mesures utilise au moins l'un des paramètres suivants dans son évaluation de rayon de protection mesure et/ou son invalidation d'observable :
- le facteur de qualité canal,
- la disponibilité d'un positionnement précis de la source en regard de la performance attendue,
- une information de qualité ou d'exclusion de source provenant du signal relayé ou du signal de positionnement,
- la présence de corrections spatiotemporelles, et
- un taux d'erreurs de bits anormalement élevé dans l'acquisition et ou la démodulation des messages le cas échéant.

78. Procédé selon l'une quelconque des revendications 76 à 77, **caractérisé en ce que** ladite étape de filtrage hybride de navigation (306) utilise l'invalidation des observables comme une exclusion de ceux-ci en entrée du filtrage hybride de navigation et le rayon de protection mesure comme une pondération de l'observable dans le filtrage hybride de navigation.

79. Procédé selon l'une quelconque des revendications 59 à 78, **caractérisé en ce que** ladite étape de filtrage hybride de navigation (306) réalise une évaluation de la précision et de l'intégrité de l'estimation de position, vitesse et temps consistant à calculer un volume de protection dudit positionnement selon un indice de confiance prédéterminé.

80. Procédé selon la revendication 79, **caractérisé en ce que** ladite évaluation de la précision et de l'intégrité utilise la redondance des observables pour mettre en oeuvre un traitement de détection et isolation d'observables indésirables, le résultat de ladite étape de filtrage hybride de navigation (306) et/ou le résultat de l'étape de traitement hybride multicanal (303) dépendant du résultat de ce traitement.

81. Procédé selon l'une quelconque des revendications 59 à 80, **caractérisé en ce que** au moins une desdites sources de signaux de positionnement appartient à l'un des systèmes globaux de navigation par satellites.

82. Dispositif de positionnement hybride (300) d'un équipement mobile, aidé par un relais (100) pulsé multi synchrone multi source selon la revendication 30, **caractérisé en ce qu'**il comporte :
- un moyen de réception, solidaire dudit équipement mobile, capable de la réception d'un dit signal pulsé multi synchrone multi source émis par ledit équipement relais,
- un moyen de réception, solidaire dudit équipement mobile, capable de la réception de signaux de positionnement provenant d'une source parmi une pluralité de sources de signaux de positionnement,
- un moyen de traitement hybride multicanal d'au moins un signal de positionnement sur au moins un canal dit de réception directe, et d'au moins un signal pulsé multi synchrone multi-source sur au moins un canal dit d'observable relais, lesdits canaux de réception directe et d'observables relais travaillant en parallèle,
- un moyen d'identification et de positionnement des dites sources directes et relayées,
- un moyen de restitution d'observables dits relais et dits directs dépendant respectivement des résultats de traitement des dits canaux d'observables relais et des résultats de traitement des dits canaux de réception directe, et
- un moyen de filtrage hybride de navigation utilisant conjointement lesdits observables directs et lesdits observables relais, et réalisant une estimation de la position, de la vitesse et du temps local dudit équipement mobile.

## Claims

1. Multi-source, multi-synchronous pulsed relay method, the relay (100) being movable or non-movable in at least one coverage zone (010) of at least one positioning system, this positioning system using a coherent plurality of transmission sources (Si) of positioning signals (050), **characterised in that** the relay carries out the following steps:
- a step (105) for receiving, at least at one receiving sensor (A) which is integral to this relay, at least one positioning signal (050),
- a step (101) for processing at least one positioning signal on at least one receiving channel,
- for at least one receiving channel, a step (102) for generating so-called channel pulses, which are synchronised with this positioning signal which is processed by this receiving channel, those channel pulses being representative both of the transmission times of this positioning signal and the positioning of this receiving means of the relay,
- a step (103) for multiplexing and time-shaping these pulses for generating a multi-source, multi-synchronous pulsed signal and
- a step (104) for transmitting, via at least one transmission means (B), the multi-source, multi-synchronous pulsed signal (150).

2. Method according to claim 1, **characterised in that** the multi-source, multi-synchronous pulsed signal (150) is representative of at least one source among a plurality of sources of positioning signals, with at least some predetermined time markers (151 it) being relayed, selected from telemetry code transitions, these telemetry codes being generated and transmitted by this source Si by means of a so-called source clock.

3. Method according to either claim 1 or claim 2, **characterised in that** the multi-source, multi-synchronous pulsed signal (150) is representative of at least one source Si among a plurality of sources of positioning signals (050), with at least some of the predetermined time markers being relayed over carrier cycles, those carrier cycles having been marked by a specific modulation in the region of the source for the purpose of telemetry and being representative of this source clock.

4. Method according to any one of claims 1 to 3, **characterised in that** the processing step (101) comprises, for at least one channel, a step for generating a virtual clock which is a composite of a multiplicity of these source clocks.

5. Method according to any one of claims 1 to 4, **characterised in that** the processing step (101) comprises a so-called channel integrity control, the generating step and/or the multiplexing step depending on the result of the channel integrity control by the exclusion of the channel or the inclusion of a confidence index.

6. Method according to claim 5, **characterised in that** the channel integrity control detects at least one of the following conditions:
- detecting a multipath in the processing step,
- detecting interference between positioning signals and/or between the positioning signal and another interference signal, in particular a parasitic spectral line and
- detecting an alert or another piece of information representative of the non-integrity of the information carried in at least one of these positioning signals.

7. Method according to any one of claims 1 to 6, **characterised in that** it comprises a step of so-called relay integrity control which is representative of the coherence of the information received on a plurality of channels, the generating step and/or the multiplexing step depending on the result of this relay integrity control by excluding one or more channels or by including a confidence index.

8. Method according to claim 7, **characterised in that** this relay integrity control step uses the redundancy of the channels and positioning signals to detect and isolate defective processing on a channel.

9. Method according to any one of claims 1 to 8, **characterised in that** this processing step comprises, for at least one channel, the calculation of at least one spatio-temporal correction of the information involving the channel, calculated by means of the information processed on this channel or on at least one of the other channels.

10. Method according to claim 9, **characterised in that** this spatio-temporal correction is representative of at least one of the following pieces of information:
- propagation time and calculation within the relay, which is also calibrated,
- local clock bias resolved in relation to the synchronisation of a plurality of sources,
- propagation delay which is non-representative of a geometric distance, and particularly an ionospheric or tropospheric distance, if the source of the positioning signal is a satellite,
- delay of a detected multipath,
- differential correction, in particular if this relay is fixed and of known position,
- correction of intentional degradation applied to at least one of the positioning signals processed,
- lever arm which is internal to the relay and which is representative of a differential of positions between these receiving sensors and/or between the receiving sensors and the transmission means and
- the time deviation between a channel pulse generated on a channel processing the signal from a so-called source-pivot sensor pair, and a channel pulse from another channel which processes the same source over a different sensor and corresponding directly to attitude observables.

11. Method according to either claim 9 or claim 10, **characterised in that**, for at least one channel, this channel pulse generation step (102) uses at least one spatio-temporal correction, the pulse generation time depending on that correction.

12. Method according to any one of claims 1 to 11, **characterised in that** the multiplexing and time-shaping step (103) complies, in terms of time, with the channel pulse sequence as was generated by all or some of the plurality of channels.

13. Method according to either claim 9 or claim 10, **characterised in that** the multiplexing and time-shaping step (103) uses at least one spatio-temporal correction, the channel pulse sequence forming the basis of the multi-source, multi-synchronous pulsed signal depending on the use of corrections.

14. Method according to any one of claims 1 to 13, **characterised in that**, during the channel pulse generation step (102) and/or during the multiplexing and time-shaping step (103), at least one source encoding for modulating a pulse or a stream of pulses in the multi-source, multi-synchronous pulsed signal is used, on at least one channel.

15. Method according to claim 14, **characterised in that** the source encoding is representative of the relay and/or of a piece of data which is additionally supplied to the relay and which may be representative of at least one of the following parameters:
- relay access code,
- relay signature,
- multiplex code if a plurality of relays must share the same multiple access transmission channel and
- identifier for the sensor used in the case of a multi-sensor relay.

16. Method according to either claim 14 or claim 15, **characterised in that** the source encoding is representative of a destination receiver of the multi-source, multi-synchronous pulsed signal to be transmitted by the relay and includes an access code therefor.

17. Method according to any one of claims 14 to 16, **characterised in that** this source encoding is representative of a synchronisation pattern.

18. Method according to any one of claims 14 to 17, **characterised in that** this source encoding is representative of a pulse counter.

19. Method according to any one of claims 14 to 18, **characterised in that** this source encoding is representative of an identifier for the source of this positioning signal.

20. Method according to any one of claims 14 to 19, **characterised in that** this source encoding is representative of a piece of data (101 id) which is contained in the specific modulation specific to this positioning signal.

21. Method according to any one of claims 14 to 20, **characterised in that** this source encoding is representative of this confidence index evaluated by this integrity control step.

22. Method according to any one of claims 14 to 21, **characterised in that** this source encoding is representative of a spatio-temporal correction.

23. Method according to any one of claims 1 to 22, **characterised in that** this multiplexing and shaping step (103) operates only at specific time slots.

24. Method according to any one of claims 1 to 23, **characterised in that** the multiplexing and time-shaping step (103) processes the potential collisions of these channel pulses over the timescale.

25. Method according to any one of claims 1 to 24, **characterised in that** the multiplexing and time-shaping step alternates slots for multiplexing and time-shaping (103) the channel pulses and slots for multiplexing and shaping data supplied to the relay by an external communication means (107), comprising in particular the data of a service based on localisation.

26. Method according to any one of claims 1 to 25, **characterised in that** the transmission step (104) uses ultra wide band technology.

27. Method according to any one of claims 1 to 26, **characterised in that** the transmission step (104) uses optical technology.

28. Method according to any one of claims 1 to 27, **characterised in that** the transmission step (104) uses a very wide frequency band, typically 100 MHz, in bands which are assigned to satellite radionavigation services, aeronautical radionavigation services or radio localisation services in accordance with regulations.

29. Method according to any one of claims 1 to 28, **characterised in that** this processing step (101) is representative of the tracking of the positioning signal of a global satellite navigation system, or the complements thereof, and **characterised in that** this channel pulse is synchronous with the detection of a stage of the telemetry code dating the transmission in the positioning signal.

30. Multi-source, multi-synchronous relay device (100) for positioning signals, **characterised in that** it comprises:
- at least one receiving means for receiving at least one positioning signal,
- a means for processing at least one positioning signal on at least one so-called receiving channel,
- for at least one receiving channel, a means for generating so-called channel pulses which are synchronised with this positioning signal which is processed by this receiving channel, these channel pulses being representative both of the transmission times of this positioning signal and the positioning of the receiving sensor of the relay,
- a means for multiplexing and time-shaping these pulses for generating a pulsed multi-synchronous signal and
- at least one means for transmitting this pulsed multi-synchronous signal.

31. Method (200) for locating and determining the attitude of an integral piece of equipment (020) of a multi-source, multi-synchronous pulsed relay (100) according to claim 30, which is referred to as relay equipment and which may or may not be movable, by means of remote equipment, which may or may not be movable, **characterised in that** the remote equipment carries out:
- a step (201) for receiving, via a receiving means (C) of the remote equipment, the multi-source, multi-synchronous pulsed signal transmitted by the relay equipment,
- a step (202) for detecting and dating the elementary pulses or elementary pulse streams which constitute this multi-source, multi-synchronous pulsed signal,
- a step (203) for demultiplexing and demodulating these elementary pulses or elementary pulse streams into so-called relay observables channels, these relay observables channels being representative of a maximum of one of the sources which are said to have been relayed in order to be involved in the generation of this multi-source, multi-synchronous pulsed signal,
- a step (204) for identifying and positioning these relayed sources
- for each relay observables channel, a step (205) for reconstructing relay observables and
- a step (206) for navigation filtration acting on these relay observables and carrying out the calculation of an estimate of the position and speed, of this relay equipment as soon as the number of these relayed sources exceeds, by at least one, the number of degrees of freedom of the centre of gravity of this relay equipment and, where applicable, the attitude of this relay, as soon as the number of receiving sensors of the sources in this relay has exceeded, by at least one, the number of degrees of freedom of rotation of this relay equipment.

32. Method according to claim 31, **characterised in that** this detecting and dating step (202) uses at least one of the following techniques:
- measuring or calculating the energy of the received signal and activating a trigger if a threshold associated with the ambient noise is exceeded,
- correlation with a synchronisation pattern,
- correlation with an identifier of the relay equipment and
- correlation with a reply produced from a processing operation for providing the arrival times of the elementary pulses or elementary pulse streams.

33. Method according to either claim 31 or claim 32, **characterised in that** this detection and dating step (202) comprises a processing operation for isolating the direct path of the elementary pulses or elementary pulse streams.

34. Method according to any one of claims 31 to 33, **characterised in that** this demultiplexing and demodulating step (203) classifies these detected and dated elementary pulses or elementary pulse streams, each so-called relay observables channel classification being representative of a single source.

35. Method according to any one of claims 31 to 34, **characterised in that** this demultiplexing and demodulating step (203) classifies these detected and dated elementary pulses or elementary pulse streams, each so-called relay observables channel classification being representative of a single source-sensor pair of this relay.

36. Method according to any one of claims 31 to 35, **characterised in that** this demultiplexing and demodulating step (203) uses, for its classification, a processing operation for the prediction of the expected time and/or frequency deviations between these elementary pulses or elementary pulse streams in accordance with knowledge a *priori* of these sources and/or this relay and/or a predetermined selection of one unit from these source clocks, and a suitable processing operation for correlation and/or filtering between the result of this prediction and the result of this detecting and dating step.

37. Method according to any one of claims 31 to 36, **characterised in that** this demultiplexing and demodulating step (203) uses one of the following means to carry out its classification:
- hypothesis and probability tests on exhaustive selections of sources and sensors via a time-frequency search grid,
- hypothesis and probability tests on reduced selections of sources and sensors via a list of time-frequency cells using approximate knowledge of the coordinates, movements and characteristics of these sources and this relay,
- the demodulation of at least one of the elementary pulse streams in order to identify at least one of these relayed sources,
- the demodulation of at least one of the elementary pulse streams in order to identify at least one of the sensors used and
- the type of modulation used for the pulse streams.

38. Method according to any one of claims 31 to 37, **characterised in that** this demultiplexing and demodulating step (203) uses the demodulation of at least one of the elementary pulse streams to reconstruct a spatio-temporal correction and to correct at least one of the results of this detecting and dating step.

39. Method according to any one of claims 31 to 38, **characterised in that** this demultiplexing and demodulating step (203) reconstructs the dating over the timescale of the source of at least one of the pulses of at least one of the relay observables channels.

40. Method according to claim 39, **characterised in that** this demultiplexing and demodulating step (203) uses the demodulation of a stage counter in order to reconstruct dating in terms of a source timescale.

41. Method according to any one of claims 31 to 40, **characterised in that** this demultiplexing and demodulating step (203) uses the demodulation of at least one of the elementary pulse streams in order to reconstruct a spatio-temporal correction which is representative of a difference in the arrival time of a positioning signal from the same source between two sensors of this relay, the result of this step of reconstructing relay observables depending on this spatio-temporal correction.

42. Method according to any one of claims 31 to 41, **characterised in that** this demultiplexing and demodulating step (203) uses filtering of the datings of the elementary pulses recognised as belonging to the same relayed source, the processing of this detecting and dating step depending on the result of that filtering operation.

43. Method according to any one of claims 31 to 42, **characterised in that** the demultiplexing and demodulating step (203) uses composite virtual clock information, where applicable, this detecting and dating step bringing about specific processing operations in order to use the result of that usage.

44. Method according to any one of claims 31 to 43, **characterised in that** the demultiplexing and demodulating step (203) uses composite virtual clock information, where applicable, the navigation filtration step bringing about specific processing operations in order to use the result of that usage.

45. Method according to any one of claims 31 to 44, **characterised in that**, for at least one relay observables channel, this demultiplexing and demodulating step (203) integrates a recurrent so-called relay dating integrity control, and which results in invalidation of this dating attached to the recurrences of pulses classified in this observables channel and/or the assignment of a so-called dating quality factor and which is calculated in accordance with a predetermined confidence index.

46. Method according to claim 45, **characterised in that** this relay dating integrity control detects at least one of the following conditions:
- an anomaly in the sequence of elementary pulses,
- the identified and uncontrolled presence of a multipath between this relayed source and this relay equipment and/or between this relay equipment and this movable equipment,
- an abnormally high bit error rate or anomalies in parity controls during the demodulation processing operation,
- interference between signals from multiple relays, between relayed signal and direct positioning signals and/or between the relay signal and a different interference signal, in particular a parasitic spectral line, and
- an alert or another piece of information representative of the non-integrity of the information carried in the multi-source, multi-synchronous pulsed signal.

47. Method according to any one of claims 31 to 46, **characterised in that** this step (204) for identifying and positioning the relayed sources carries out a step (2041) for acquiring and/or storing messages, these messages being representative of trajectory models of these relayed sources and/or development models of the source clocks thereof.

48. Method according to claim 47, **characterised in that** the messages to be acquired and/or stored in this message acquisition and/or storage step (2041) stem from at least one of the following results:
- results of an initialisation and/or storage of a database in the remote equipment,
- results of the step for demultiplexing and demodulating these detected elementary pulses or elementary pulse streams,
- results of the reception of a wired or wireless telecommunication of a server for such messages, that telecommunication being periodic or on demand and,
- if the relayed sources belong to the classification of global satellite navigation systems, results of the demodulation of the signals themselves by means of a suitable receiver.

49. Method according to any one of claims 31 to 48, **characterised in that** the step (205) for reconstructing relay observables calculates, for at least one relayed sensor of this relay, on the basis of the data of at least one of the groups of these relay observables channels which are representative of this sensor and a number of relayed sources that is sufficient in relation to the number of degrees of freedom of the centre of gravity of this relay equipment, at least one of the following observable elements:
- for each source, the pseudo distance between the source and the relay which is calculated by means of the results of the dating of at least one of the pulses in a local timescale and the reconstruction thereof in a source timescale,
- for each source, the difference of the dating from at least one of the pulses to at least one of the following pulses,
- from a pivot source, and for each other source, the difference of the dating from at least one of the pulses to the pulse of that pivot source, which is representative of the same time marker, and
- from a pivot source, and for each other source, the doubled differences of the dating from at least one of the pulses to at least one of the following pulses at the same quantity evaluated for this pivot source, for pulses representing the same time markers.

50. Method according to any one of claims 31 to 49, **characterised in that** the step (205) for reconstructing relay observables calculates, for at least one of the sources relayed by the relay, on the basis of the data of at least one of the groups of these relay observables channels which are representative of this source and a number of relayed sensors that is sufficient in relation to the number of degrees of freedom of rotation of this relay equipment (110) about the centre of gravity thereof, at least one of the following observable elements:
- for each sensor and for each source, the pseudo distance between the source and the sensor of the relay which is calculated by means of the results of the dating of at least one of the pulses of the sensor-source pair in a local timescale and the reconstruction thereof in a source timescale,
- for each sensor and for each source, the dating difference from at least one of the pulses to at least one of the following pulses,
- for each source, from a pivot sensor, and for each other sensor, the dating difference from at least one of the pulses connected to this source and this sensor to the pulse connected to that same source by means of that pivot sensor, these pulses being representative of the same time marker of this source, and
- from a pivot sensor and a pivot source, and for each other source-sensor pair, the differences from one source to the pivot source of the dating differences of at least one of the pulses connected, for this source, to this sensor to the pulse connected to the same source and to that pivot sensor, these pulses representing the same time marker of this source.

51. Method according to any one of claims 31 to 50, **characterised in that**, for at least one relay observables channel, this step (205) for reconstructing the relay observables integrates a so-called relay measurements integrity control which may or may not result in invalidation of the observable element calculated and/or the addition of a so-called relay observable quality factor and which is calculated in accordance with a predetermined confidence index.

52. Method according to claim 51, **characterised in that** this relay measurements integrity control uses at least one of the following parameters in its evaluation of the relay observable quality factor and/or its invalidation of observable elements:
- the dating quality factor,
- the availability of precise positioning of the source in relation to the expected performance,
- a quality index or source exclusion index from the relayed signal,
- the presence or absence of adequate spatio-temporal corrections and
- an abnormally high bit error rate during acquisition and/or demodulation of the messages, where applicable.

53. Method according to any one of claims 31 to 52, **characterised in that** this navigation filtration step (206) uses weighting of the relay observables, the result in terms of precision and integrity of the position estimate and speed and, where applicable, the attitude of the relay equipment depending on that weighting.

54. Method according to claim 53 and according to either claim 51 or claim 52, **characterised in that** this navigation filtration step (206) uses this relay observable quality factor calculated by this step for reconstructing the relay observables in order to weight the observable elements and the exclusion of the relay observables invalidated by this relay measurements integrity control in the estimate of the position, speed and, where applicable, the attitude of this relay.

55. Method according to any one of claims 31 to 52, **characterised in that** this navigation filtration step (206) carries out an evaluation of the precision and integrity of the position and speed involving calculation of a protection volume of this positioning in accordance with a predetermined confidence index.

56. Method according to claim 53, **characterised in that** this evaluation of the precision and the integrity uses the redundancy of the observable elements to carry out a processing operation for detecting and isolating undesirable observable elements, the result of this navigation filtration step (206) and/or the result of the demultiplexing and demodulating step (203) depending on the result of that processing operation.

57. Device (210) for locating and determining the attitude of a piece of so-called relay equipment (020) which is integral to a multi-source, multi-synchronous pulsed relay (100) according to claim 30, and which may or may not be movable, by a remote piece of equipment (021) which may or may not be movable, **characterised in that** this remote equipment uses:
- a means for receiving a multi-source, multi-synchronous pulsed signal which is transmitted by this relay equipment,
- a means for detecting and dating the elementary pulses or elementary pulse streams which constitute this multi-source, multi-synchronous pulsed signal,
- a means for demultiplexing and demodulating these elementary pulses or elementary pulse streams by so-called relay observables channels, these relay observables channels being representative of a maximum of one of the sources which are said to have been relayed in order to be involved in the generation of this multi-source, multi-synchronous pulsed signal,
- a means for identifying and positioning these relayed sources,
- for each relay observables channel, a means for reconstructing relay observables and
- a means for navigation filtration acting on these relay observables and carrying out the calculation of the position and/or the speed of this relay equipment and, where applicable, the attitude of the relay.

58. System comprising at least one relay device carrying out a method according to any one of claims 1 to 29, transmitting towards at least one remote device which is suitable for carrying out a method according to claim 31 to claim 54, and allowing point to multi-point and/or multi-point to point and/or multi-point to multi-point access.

59. Hybrid positioning method for mobile equipment assisted by a multi-source, multi-synchronous pulsed relay (100) according to claim 30, **characterised in that** it comprises the following steps:
- a so-called receiving step (301), by means of a receiving sensor (C) integral to this movable equipment, for receiving a multi-source, multi-synchronous pulsed signal (150) which is transmitted by this relay (100) for at least one source among a plurality of so-called positioning signals,
- a so-called direct receiving step (302), by means of a receiving sensor which is integral to this movable equipment, for receiving positioning signals (050) from at least one so-called direct source among a plurality of positioning signal sources,
- a step (303) for multi-channel hybrid processing of at least one positioning signal on at least one so-called direct reception channel, and of at least one multi-source, multi-synchronous pulsed signal on at least one so-called relay observables channel, these direct reception and relay observables channels operating in parallel,
- a step (304) for identifying and positioning these direct and relayed sources,
- a step (305) for reconstructing the so-called relay observables and direct observables which is dependent on the processing results of the so-called relay observables channels and the processing results of the direct reception channels respectively,
- a step (306) for hybrid navigation filtration jointly using these direct observables and relay observables and carrying out an estimate of the position, the speed and the local time of the movable equipment.

60. Method according to claim 59, **characterised in that**, in this multi-channel hybrid processing step (303), the processing of these multi-source, multi-synchronous pulsed signals on the relay observables channels and the processing of these positioning signals on the direct reception channels use the same local timescale (3033) and/or the same local oscillator as the time basis.

61. Method according to either claim 59 or claim 60, **characterised in that** this multi-channel hybrid processing step (303) comprises, in the operation for processing these multi-source, multi-synchronous pulsed signals, a processing operation involving detecting and dating the elementary pulses (3031) and/or elementary pulse streams according to either claim 32 or claim 33, followed by a demultiplexing and demodulating processing operation (3032) on the relay observables channels according to any one of claims 34 to 46.

62. Method according to claim 61, **characterised in that** this processing operation involving detecting and dating the elementary pulses (3031) or elementary pulse streams contained in these multi-source, multi-synchronous pulsed signals uses a local timescale or a local oscillator which depends on the results of the estimate of the local time carried out in this hybrid navigation filtration step.

63. Method according to any one of claims 59 to 62, **characterised in that**, for each processing channel, whether it be a direct reception channel or a relay observables channel, this hybrid multi-channel processing step (303) integrates a so-called channel integrity control, resulting in invalidation of the results of the processing operation on the channel and/or the assignment of a so-called channel quality factor which is calculated in accordance with a predetermined confidence index and which is applied to local timescale dating of a known event of the processed signal.

64. Method according to claim 63, **characterised in that** this channel integrity control detects, on the direct reception channels, at least one of the following conditions:
- one or more multipaths in the direct processing step,
- interference between positioning signals and/or between the direct positioning signal and the multi-source, multi-synchronous pulsed signal and/or between the direct positioning signal and another interference signal, in particular a parasitic spectral line and
- an alert or another piece of information representative of the non-integrity of the information carried in at least one of these positioning signals.

65. Method according to either claim 63 or claim 64, **characterised in that** this channel integrity control detects on the relay observables channels at least one of the following conditions:
- one or more multipaths between this relayed source and this relay equipment and/or between this relay equipment and this movable equipment,
- an abnormally high bit error rate or anomalies in parity controls in the result of this demodulation step,
- interference between signals from multiple relays, between relayed signal and direct positioning signals and/or between the relay signal and another interference signal, in particular a parasitic spectral line, and
- an alert or another piece of information representative of the non-integrity of the information carried in the multi-source, multi-synchronous pulsed signal.

66. Method according to any one of claims 59 to 65, **characterised in that** this step (304) for identifying and positioning the sources uses the results of the estimates of position, speed and time of this hybrid navigation filtration step and calculates the predictions for positioning these relayed sources (3043) and these direct sources (3044), the processing operations of this hybrid multi-channel processing step (303) depending on the result of those predictions.

67. Method according to any one of claims 59 to 66, **characterised in that** these predictions for positioning the direct sources (3044) or relayed sources (3043) use spatio-temporal corrections resulting from the processing of at least one multi-source, multi-synchronous pulsed signal on at least one relay observables channel.

68. Method according to any one of claims 59 to 67, **characterised in that** this step (305) for reconstructing the observable elements uses, for the direct reception channels, spatio-temporal corrections resulting from the processing of at least one multi-source, multi-synchronous pulsed signal (150) on at least one relay observables channel.

69. Method according to any one of claims 59 to 68, **characterised in that** this step (304) for identifying and positioning the sources carries out the identification of the so-called common sources (3045) between these relayed sources and these direct sources, carries out, when it exists, an association of these direct reception channels and these corresponding relay observables channels and establishes, for these associated channels, a command and a control for optimisation operations (3046) of the hybrid multi-channel processing operations.

70. Method according to claim 69, **characterised in that** this control of these optimisation operations (3046) of the hybrid multi-channel processing operations depends on the comparison, on each of these associated channels, of at least one of the criteria from the following list:
- the signal to noise ratio of the signal processing,
- the failure rate of the parity controls or error correction codes in the demodulation processing operations,
- the existence and quality of the predictions for positioning the sources,
- the parameters of a statistical model for noise and error attributed to the observable elements of this channel,
- the results of this channel integrity control and in particular this invalidation and
- the results of a position integrity control and in particular an exclusion of an observable.

71. Method according to either claim 69 or claim 70, **characterised in that**, for at least one pair of these associated channels, this command of these optimisation operations (3046) of the hybrid multi-channel processing operations produces at least one of the dependencies from the following list between the processing operations of the multi-source, multi-synchronous pulsed signal and the processing operations of the positioning signals:
- the processing of the multi-source, multi-synchronous pulsed signal depends on the predictions of the positions of the direct sources for detecting the elementary pulses or elementary pulse streams,
- the processing of the multi-source, multi-synchronous pulsed signal depends on the predictions of the positions of the direct sources for demultiplexing and demodulation,
- the processing of the positioning signal depends on the predictions of the positions of the relayed sources,
- the processing of the multi-source, multi-synchronous pulsed signal depends on the results of the processing of the positioning signal and
- the processing of the positioning signal depends on the results of the processing of the multi-source, multi-synchronous pulsed signal.

72. Method according to any one of claims 69 to 71, **characterised in that**, for at least one direct reception channel associated with a relay observables channel, this hybrid multi-channel processing step (303) uses a time correlation with a reply of the telemetry code for acquiring and/or tracking this positioning signal, and **characterised in that** the results of the associated relay observables channel act directly on the generation of this reply using at least one of the following actions:
- direct positioning of this reply at a position close to that read on this associated relay observables channel,
- adjustment of the scanning speed of this reply in accordance with the time differences between pulses read on this associated relay observables channel,
- adjustment of the durations, sequences and synchronisations of the coherent integration operations and non-coherent integration operations in accordance with the reply deviations read with this associated relay observables channel,
- adjustment of the filtering parameters and signalling loop orders of the processing operations for tracking this positioning signal in accordance with the reply deviations read on this associated relay observables channel and
- adjustment of the parameters used in the calculations of the energies of the signal resulting from the despreading operation and allowing overall control of the modes of these direct processing operations in accordance with the deviations read on this associated relay observables channel.

73. Method according to any one of claims 69 to 71, **characterised in that**, for at least one so-called direct reception channel associated with a relay observables channel, this hybrid multi-channel processing step (303) uses a frequency correlation with a reply of the telemetry code for acquiring and/or tracking this positioning signal, and **characterised in that** the results of the associated relay observables channel act directly on the generation of the frequency spectrum of this reply using the specific results thereof in the search for the source periodicities and separations.

74. Method according to any one of claims 59 to 73, **characterised in that** this step (304) for identifying and positioning the sources carries out a step for acquiring and/or storing messages, these messages representing trajectory models of these relayed sources and/or development models of the so-called source clocks thereof and may equally well result from the demodulations of the relay observables channels or the direct reception channels.

75. Method according to any one of claims 59 to 74, **characterised in that** this observables reconstruction step (305) simultaneously uses the results of this step (304) for identifying and positioning the sources and the hybrid multi-channel processing step (303) in order to calculate the pseudo distances and pseudo speeds between sources and movable equipment for the relay observables channels and for the direct reception channels.

76. Method according to any one of claims 59 to 75, **characterised in that**, for each relay observables channel and each direct reception channel, this observables reconstruction step (305) includes a so-called measurement integrity control which may or may not result in the invalidation of the calculated observable element and/or the addition of a so-called measurement protection ray path in accordance with a predetermined confidence index.

77. Method according to claim 76, **characterised in that** this measurement integrity control uses at least one of the following parameters in its evaluation of the measurement protection ray path and/or its invalidation of observables:
- the channel quality factor,
- the availability of precise positioning of the source in relation to the expected performance,
- a piece of quality information or source exclusion information from the relayed signal or the positioning signal,
- the presence of spatio-temporal corrections and
- an abnormally high bit error rate during the acquisition and/or demodulation of the messages, where applicable.

78. Method according to either claim 76 or claim 77, **characterised in that** this hybrid navigation filtration step (306) uses the invalidation of the observable elements as an exclusion thereof at the input of the hybrid navigation filtration and the measurement protection ray path measures as a weighting of the observable element in the hybrid navigation filtration.

79. Method according to any one of claims 59 to 78, **characterised in that** this hybrid navigation filtration step (306) carries out an evaluation of the precision and integrity of the estimate of position, speed and time involving the calculation of a protection volume of this positioning in accordance with a predetermined confidence index.

80. Method according to claim 79, **characterised in that** this evaluation of the precision and the integrity uses the redundancy of the observable elements to carry out a processing operation involving detection and isolation of undesirable observable elements, the result of this hybrid navigation filtration step (306) and/or the result of the hybrid multi-channel processing step (303) depending on the result of that processing operation.

81. Method according to any one of claims 59 to 80, **characterised in that** at least one of these positioning signal sources belongs to one of the global satellite navigation systems.

82. Hybrid positioning device (300) of a piece of movable equipment, using a multi-source, multi-synchronous pulsed relay (100) according to claim 30, **characterised in that** it comprises:
- a receiving means which is integral to this movable equipment and which is capable of receiving a so-called multi-source, multi-synchronous pulsed signal which is transmitted by this relay equipment,
- a receiving means which is integral to this movable equipment and which is capable of receiving positioning signals from one source among a plurality of positioning signal sources,
- a hybrid multi-channel processing means for at least one positioning signal on at least one so-called direct reception channel and at least one multi-source, multi-synchronous pulsed signal on at least one so-called relay observables channel, those direct reception and relay observables channels operating in parallel,
- a means of identifying and positioning those direct and relayed sources,
- a means for reconstructing those relay observables and direct observables depending on the processing results of those relay observables channels and the processing results of those direct reception channels, respectively, and
- a hybrid navigation filtration means which jointly uses those direct observable elements and those relay observables and which carries out an estimate of the position, the speed and the local time of that movable equipment.

## Patentansprüche

1. Gepulstes Multisynchron-Multiquellen-Relaisverfahren, wobei das Relais (100) wohl oder nicht beweglich ist in wenigstens einer Abdeckungszone (010) wenigstens eines Positionsbestimmungssystems, wobei das Positionsbestimmungssystem eine kohärente Mehrzahl von Quellen zur Aussendung (Si) von Positionsbestimmungssignalen (050) verwendet, **dadurch gekennzeichnet, dass** das Relais die folgenden Schritte ausführt:
- einen Schritt des Empfangs (105) wenigstens eines Positionsbestimmungssignals (050) bei wenigstens einem Empfangssensor (A), der mit dem Relais verbunden ist,
- einen Schritt der Verarbeitung (101) wenigstens eines Positionsbestimmungssignals auf wenigstens einem Empfangskanal,
- für wenigstens einen Empfangskanal, einen Schritt der Erzeugung von sogenannten Kanalpulsen (102), die mit dem vom Empfangskanal verarbeiteten Positionsbestimmungssignal synchronisiert sind, wobei die Kanalpulse gleichzeitig für die Aussendezeitpunkte des Positionsbestimmungssignals und für die Positionsbestimmung der Empfangseinrichtung des Relais repräsentativ sind,
- einen Schritt der Multiplexierung und Zeitformung (103) der Pulse zur Erzeugung eines gepulsten Multisynchron-Multiquellensignals, und
- einen Schritt der Aussendung (104) des gepulsten Multisynchron-Multiquellensignals (150) durch wenigstens eine Aussendeeinrichtung (B).

2. Verfahren nach Anspruch 1, **dadurch gekennzeichnet, dass** das gepulste Multisynchron-Multiquellensignal (150) repräsentativ ist für wenigstens eine Quelle aus einer Mehrzahl von Positionsbestimmungssignalquellen und wenigstens einen Teil von vorbestimmten Zeitmarken (151 it) überträgt, die aus Telemetriecodeübergängen ausgewählt sind, wobei die Telemetriecodes mittels einer sogenannten Quellenuhr durch die Quelle Si erzeugt und ausgesandt werden.

3. Verfahren nach einem der Ansprüche 1 bis 2 , **dadurch gekennzeichnet, dass** das gepulste Multisynchron-Multiquellensignal (150) repräsentativ ist für wenigstens eine Quelle Si aus einer Mehrzahl von Positionsbestimmungssignalquellen (050) und wenigstens einen Teil von vorbestimmten Zeitmarken auf Schwingungsperioden überträgt, wobei die Schwingungsperioden mittels einer spezifischen Modulation im Bereich der Quelle zum Zweck der Telemetrie markiert wurden und somit für die Quellenuhr repräsentativ sind.

4. Verfahren nach einem der Ansprüche 1 bis 3, **dadurch gekennzeichnet, dass** der Schritt der Verarbeitung (101) für wenigstens einen Kanal einen Schritt der Erzeugung einer virtuellen Uhr als Verbund aus einer Vielzahl der Quellenuhren umfasst.

5. Verfahren nach einem der Ansprüche 1 bis 4, **dadurch gekennzeichnet, dass** der Schritt der Verarbeitung (101) eine sogenannte Kanalintegritätskontrolle umfasst, wobei der Schritt der Erzeugung und/oder der Schritt der Multiplexierung vom Ergebnis der Kanalintegritätskontrolle abhängen mittels Ausschluss des Kanals oder Einschluss eines Zuverlässigkeitsindex.

6. Verfahren nach Anspruch 5, **dadurch gekennzeichnet, dass** die Kanalintegritätskontrolle wenigstens eine der folgenden Bedingungen erfasst:
- Erfassung eines Vielfachwegs im Schritt der Verarbeitung,
- Erfassung einer Interferenz zwischen Positionsbestimmungssignalen und/oder zwischen dem Positionsbestimmungssignal und einem anderen interferierenden Signal, insbesondere einem parasitären spektralen Strahl, und
- Erfassung eines Alarms oder einer anderen Information, die repräsentativ ist für die Nicht-Integrität der Informationen, die in wenigstens einem der Positionsbestimmungssignale getragen werden.

7. Verfahren nach einem der Ansprüche 1 bis 6, **dadurch gekennzeichnet, dass** es einen Schritt der sogenannten Relaisintegritätskontrolle umfasst, die repräsentativ ist für die Kohärenz der auf einer Mehrzahl von Kanälen empfangenen Information, wobei der Schritt der Erzeugung und/oder der Schritt der Multiplexierung vom Ergebnis der Relaisintegritätskontrolle abhängen mittels Ausschluss eines oder mehrere Kanäle oder mittels Einschluss eines Zuverlässigkeitsindex.

8. Verfahren nach Anspruch 7, **dadurch gekennzeichnet, dass** der Schritt der Relaisintegritätskontrolle die Redundanz der Kanäle und Positionsbestimmungssignale verwendet, um eine fehlerhafte Verarbeitung auf einem Kanal zu erfassen und zu isolieren.

9. Verfahren nach einem der Ansprüche 1 bis 8, **dadurch gekennzeichnet, dass** der Schritt der Verarbeitung für wenigstens einen Kanal die Berechnung wenigstens einer raumzeitlichen Korrektur der für den Kanal interessanten Informationen umfasst, berechnet mittels Informationen, die auf dem Kanal oder auf wenigstens einem der anderen Kanäle verarbeitet werden.

10. Verfahren nach Anspruch 9, **dadurch gekennzeichnet, dass** die raumzeitliche Korrektur für wenigstens eine der folgenden Informationen repräsentativ ist:
- Zeit für Ausbreitung und interne Berechnung beim Relais, anderweitig kalibriert,
- Aufgelöster lokaler Uhrenfehlgang bezüglich der Synchronisierung einer Mehrzahl von Quellen
- Ausbreitungsverzögerung, die nicht repräsentativ für einen geometrischen Abstand ist, insbesondere ionosphärisch oder troposphärisch, wenn die Quelle des Positionsbestimmungssignals ein Satellit ist,
- Verzögerung eines erfassten Vielfachwegs,
- Differentielle Korrektur, insbesondere, wenn das Relais fest und an einer bekannten Position ist,
- Korrektur einer absichtlichen Verschlechterung, die auf wenigstens eines der verarbeiteten Positionsbestimmungssignale angewandt wird,
- relaisinterner Hebelarm, der für ein Positionsdifferential zwischen den Empfangssensoren und/oder zwischen den Empfangssensoren und der Aussendeeinrichtung repräsentativ ist, und
- der zeitliche Abstand zwischen einem Kanalpuls, der bei einem Kanal erzeugt wird, welcher das Signal verarbeitet, das von einem sogenannten Quelle-Drehsensor-Paar kommt, und einem Kanalpuls, der von einem anderen Kanal stammt, welcher die gleiche Quelle bei einem unterschiedlichen Sensor verarbeitet und direkt Einstellungs-Observablen entspricht.

11. Verfahren nach einem der Ansprüche 9 bis 10, **dadurch gekennzeichnet, dass** für wenigstens einen Kanal der Schritt der Erzeugung von Kanalpulsen (102) wenigstens eine raumzeitliche Korrektur verwendet, wobei der Zeitpunkt der Erzeugung des Pulses von dieser Korrektur abhängt.

12. Verfahren nach einem der Ansprüche 1 bis 11, **dadurch gekennzeichnet, dass** der Schritt der Multiplexierung und Zeitformung (103) zeitlich die Kanalpulssequenz derart berücksichtigt, dass sie bei allen oder einem Teil der Mehrzahl von Kanälen erzeugt worden ist.

13. Verfahren nach einem der Ansprüche 9 bis 10, **dadurch gekennzeichnet, dass** der Schritt der Multiplexierung und Zeitformung (103) wenigstens eine raumzeitliche Korrektur ausnutzt, wobei die Kanalpulssequenz am Anfang des gepulsten Multisynchron-Multiquellensignals von der Ausnutzung der Korrekturen abhängt.

14. Verfahren nach einem der Ansprüche 1 bis 13, **dadurch gekennzeichnet, dass** im Verlauf des Schritts der Erzeugung des Kanalpulses (102) und/oder im Verlauf des Schritts der Multiplexierung und Zeitformung (103) man bei wenigstens einem Kanal wenigstens eine Quellencodierung für eine Modulation eines Pulses oder Pulszuges in dem gepulsten Multisynchron-Multiquellensignal verwendet.

15. Verfahren nach Anspruch 14, **dadurch gekennzeichnet, dass** die Quellencodierung repräsentativ ist für das Relais und/oder einen anderweitig an das Relais gelieferten Datensatz, der für wenigstens einen der folgenden Parameter repräsentativ sein kann:
- Zugriffscode zum Relais,
- Signatur des Relais,
- Multiplexcode, wenn sich mehrere Relais in Vielfachzugriff ein und denselben Übertragungskanal teilen müssen, und
- Identifikator des verwendeten Sensors im Fall eines Vielsensor-Relais.

16. Verfahren nach einem der Ansprüche 14 bis 15, **dadurch gekennzeichnet, dass** die Quellencodierung repräsentativ ist für einen Zielempfänger des gepulsten Multisynchron-Multiquellensignals, das vom Relais auszusenden ist, und einen Zugriffscode hierfür enthält.

17. Verfahren nach einem der Ansprüche 14 bis 16, **dadurch gekennzeichnet, dass** die Quellencodierung für ein Synchronisationsmuster repräsentativ ist.

18. Verfahren nach einem der Ansprüche 14 bis 17, **dadurch gekennzeichnet, dass** die Quellencodierung für einen Pulszähler repräsentativ ist.

19. Verfahren nach einem der Ansprüche 14 bis 18, **dadurch gekennzeichnet, dass** die Quellencodierung für einen Identifikator der Quelle des Positionsbestimmungssignals repräsentativ ist.

20. Verfahren nach einem der Ansprüche 14 bis 19, **dadurch gekennzeichnet, dass** die Quellencodierung für einen Datensatz (101 id) repräsentativ ist, der in der eigenen Modulation des Positionsbestimmungssignals enthalten ist.

21. Verfahren nach einem der Ansprüche 14 bis 20, **dadurch gekennzeichnet, dass** die Quellencodierung für den Zuverlässigkeitsindex repräsentativ ist, der vom Integritätskontrollschritt bewertet wird.

22. Verfahren nach einem der Ansprüche 14 bis 21, **dadurch gekennzeichnet, dass** die Quellencodierung für eine raumzeitliche Korrektur repräsentativ ist.

23. Verfahren nach einem der Ansprüche 1 bis 22, **dadurch gekennzeichnet, dass** der Schritt der Multiplexierung und Formung (103) nur bei bestimmten Zeitslots arbeitet.

24. Verfahren nach einem der Ansprüche 1 bis 23, **dadurch gekennzeichnet, dass** der Schritt der Multiplexierung und Zeitformung (103) die potentiellen Kollisionen der Kanalpulse auf der Zeitskala verarbeitet.

25. Verfahren nach einem der Ansprüche 1 bis 24, **dadurch gekennzeichnet, dass** der Schritt der Multiplexierung und Zeitformung Slots zur Multiplexierung und Zeitformung (103) der Kanalpulse und Slots zur Multiplexierung und Formung von Daten alterniert, die dem Relais von einer externen Kommunikationseinrichtung (107) geliefert werden, umfassend insbesondere die Daten eines lokalisierungsbasierten Dienstes.

26. Verfahren nach einem der Ansprüche 1 bis 25, **dadurch gekennzeichnet, dass** der Schritt des Aussendens (104) die Ultrabreitbandtechnologie verwendet.

27. Verfahren nach einem der Ansprüche 1 bis 26, **dadurch gekennzeichnet, dass** der Schritt des Aussendens (104) die optische Technologie verwendet.

28. Verfahren nach einem der Ansprüche 1 bis 27, **dadurch gekennzeichnet, dass** der Schritt des Aussendens (104) ein sehr breites Frequenzband verwendet, typischerweise 100 MHz in Bändern, die ordnungsgemäß den Satellitenradionavigationsdiensten, den Luftfahrtradionavigationsdiensten oder Radiolokalisierungsdiensten zugewiesen sind.

29. Verfahren nach einem der Ansprüche 1 bis 28, **dadurch gekennzeichnet, dass** der Schritt der Verarbeitung (101) repräsentativ ist für die Verfolgung des Positionsbestimmungssignals eines globalen Satellitennavigationssystems oder seiner Ergänzungen und **dadurch gekennzeichnet, dass** der Kanalpuls synchron ist zur Erfassung eines die Aussendung datierenden Zeitabschnitts des Telemetriecodes im Positionsbestimmungssignal.

30. Multisynchron-Multiquellen-Relaisvorrichtung (100) für Positionsbestimmungssignale, **dadurch gekennzeichnet, dass** sie umfasst:
- wenigstens eine Empfangseinrichtung für den Empfang wenigstens eines Positionsbestimmungssignals,
- eine Einrichtung zur Verarbeitung wenigstens eines Positionsbestimmungssignals auf wenigstens einem sogenannten Empfangskanal,
- für wenigstens einen Empfangskanal eine Einrichtung zur Erzeugung sogenannter Kanalpulse synchronisiert mit dem vom Empfangskanal verarbeiteten Positionsbestimmungssignal, wobei die Kanalpulse gleichzeitig repräsentativ sind für die Zeitpunkte der Aussendung des Positionsbestimmungssignals und die Positionsbestimmung des Empfangssensors des Relais,
- eine Einrichtung zur Multiplexierung und Zeitformung der Pulse zur Erzeugung eines gepulsten Multisynchronsignals, und
- wenigstens eine Einrichtung zur Aussendung des gepulsten Multisynchronsignals.

31. Verfahren zur Lokalisierung (200) und Bestimmung der Eigenschaft eines mit einem gepulsten Multisynchron-Multiquellen-Relais (100) nach Anspruch 30 verbundenen Geräts (020), genannt Relaisgerät, das wohl oder nicht beweglich ist, mittels eines wohl oder nicht beweglichen entfernten Geräts, **dadurch gekennzeichnet, dass** das entfernte Gerät folgendes ausführt:
- einen Schritt des Empfangens (201) des vom Relaisgerät ausgesandten gepulsten Multisynchron-Multiquellensignals durch eine Empfangseinrichtung (C) des entfernten Geräts,
- einen Schritt der Erfassung und Datierung sogenannter elementarer Pulse (202) oder Pulszüge, die das gepulste Multisynchron-Multiquellensignal bilden,
- einen Schritt der Demultiplexierung und Demodulation (203) der elementaren Pulse oder Pulszüge in sogenannte Relaisobservablenkanäle, wobei die Relaisobservablenkanäle repräsentativ sind für höchstens eine der sogenannten übertragenen Quellen, die an der Erzeugung des gepulsten Multisynchron-Multiquellensignals teilgenommen haben,
- einen Schritt der Identifizierung und der Positionsbestimmung der übertragenen Quellen (204)
- für jeden Relaisobservablenkanal, einen Schritt der Herstellung von Relaisobservablen (205), und
- einen Schritt der Navigationsfilterung (206), der auf die Relaisobservablen wirkt und die Berechnung einer Abschätzung der Position und der Geschwindigkeit des Relaisgeräts realisiert, ab dem Zeitpunkt, an dem die Zahl der übertragenen Quellen die Zahl der Freiheitsgrade des Schwerpunkts des Relaisgeräts um wenigstens 1 übersteigt, und gegebenenfalls der Eigenschaft des Relais ab dem Zeitpunkt, an dem die Zahl der Empfangssensoren der Quellen im Bereich des Relais die Zahl der Rotationsfreiheitsgrade des Relaisgeräts um wenigstens 1 überstiegen hat.

32. Verfahren nach Anspruch 31, **dadurch gekennzeichnet, dass** der Schritt der Erfassung und Datierung (202) wenigstens eine der folgenden Techniken verwendet:
- Messung oder Berechnung der Energie des empfangenen Signals und Auslösen eines Triggers bei Übersteigen einer Schwelle, die dem Umgebungsrauschen zugeordnet ist,
- Korrelation mit einem Synchronisierungsmuster,
- Korrelation mit einem Identifikator des Relaisgeräts, und
- Korrelation mit einer Replik, die ausgehend von einer Verarbeitung zur Vorhersage der Ankunftszeitpunkte des elementaren Pulses oder Pulszüge erzeugt wurde.

33. Verfahren nach einem der Ansprüche 31 bis 32, **dadurch gekennzeichnet, dass** der Schritt der Erfassung und Datierung (202) eine Verarbeitung der Isolierung des direkten Wegs der elementaren Pulse oder Pulszüge umfasst.

34. Verfahren nach einem der Ansprüche 31 bis 33, **dadurch gekennzeichnet, dass** der Schritt der Demultiplexierung und Demodulation (203) die erfassten und datierten elementaren Pulse oder elementaren Pulszüge klassiert, wobei jede Klasse, genannt Relaisobservablenkanal, für eine einzige Quelle repräsentativ ist.

35. Verfahren nach einem der Ansprüche 31 bis 34, **dadurch gekennzeichnet, dass** der Schritt der Demultiplexierung und Demodulation (203) die erfassten und datierten elementaren Pulse oder elementaren Pulszüge klassiert, wobei jede Klasse, genannt Relaisobservablenkanal, für ein einziges Quelle-Sensor-Paar des Relais repräsentativ ist.

36. Verfahren nach einem der Ansprüche 31 bis 35, **dadurch gekennzeichnet, dass** der Schritt der Demultiplexierung und Demodulation (203) für seine Klassierung eine Verarbeitung zur Vorhersage von zeitlichen und/oder frequentiellen Abständen verwendet, die zwischen den elementaren Pulsen oder Pulszügen erwartet werden, gemäß einer a-priori-Kenntnis der Quellen und/oder des Relais und/oder einer vorbestimmten Wahl einer Einheit bei den Quellenuhren, sowie eine Verarbeitung zur geeigneten Korrelation und/oder Filterung zwischen dem Ergebnis der Vorhersage und dem Ergebnis des Schritts der Erfassung und Datierung.

37. Verfahren nach einem der Ansprüche 31 bis 36, **dadurch gekennzeichnet, dass** der Schritt der Demultiplexierung und Demodulation (203) eines der folgenden Mittel zur Realisierung seiner Klassierung verwendet:
- Hypothesen- und Wahrscheinlichkeitstests bei erschöpfenden Auswahlen von Quellen und Sensoren mittels eines Zeitfrequenzrechercherasters,
- Hypothesen- und Wahrscheinlichkeitstests bei beschränkten Auswahlen von Quellen und Sensoren mittels einer Liste von Zeitfrequenzzellen unter Verwendung einer ungefähren Kenntnis von Koordinaten, Verlagerungen und Eigenschaften der Quellen und des Relais,
- die Demodulation wenigstens eines der elementaren Pulszüge zur Identifizierung wenigstens einer der übertragenen Quellen,
- die Demodulation wenigstens eines der elementaren Pulszüge zur Identifizierung wenigstens eines der verwendeten Sensoren, und
- den Modulationstyp, der für die Pulszüge verwendet wurde.

38. Verfahren nach einem der Ansprüche 31 bis 37, **dadurch gekennzeichnet, dass** der Schritt der Demultiplexierung und der Demodulation (203) die Demodulation wenigstens eines der elementaren Pulszüge verwendet, um eine raumzeitliche Korrektur abzugeben und wenigstens eines der Ergebnisse des Schritts der Erfassung und Datierung zu korrigieren.

39. Verfahren nach einem der Ansprüche 31 bis 38, **dadurch gekennzeichnet, dass** der Schritt der Demultiplexierung und Demodulation (203) die Datierung auf der Zeitskala der Quelle wenigstens eines der Pulse wenigstens eines der Relaisobservablenkanäle abgibt.

40. Verfahren nach Anspruch 39, **dadurch gekennzeichnet, dass** der Schritt der Demultiplexierung und Demodulation (203) die Demodulation eines Zeitabschnittzählers verwendet, um eine Datierung auf der Zeitskala der Quelle abzugeben.

41. Verfahren nach einem der Ansprüche 31 bis 40, **dadurch gekennzeichnet, dass** der Schritt der Demultiplexierung und Demodulation (203) die Demodulation wenigstens eines der elementaren Pulszüge verwendet, um eine raumzeitliche Korrektur abzugeben, die repräsentativ ist für eine Ankunftszeitdifferenz eines Positionsbestimmungssignals, das von ein und derselben Quelle kommt, zwischen zwei Sensoren des Relais, wobei das Ergebnis des Schritts der Abgabe von Relaisobservablen von der raumzeitlichen Korrektur abhängt.

42. Verfahren nach einem der Ansprüche 31 bis 41, **dadurch gekennzeichnet, dass** der Schritt der Demultiplexierung und Demodulation (203) eine Filterung der Datierungen der elementaren Pulse verwendet, die als zugehörig zu ein und derselben sogenannten übertragenen Quelle erkannt wurden, wobei die Verarbeitung des Schritts der Erfassung und Datierung vom Ergebnis dieser Filterung abhängt.

43. Verfahren nach einem der Ansprüche 31 bis 42, **dadurch gekennzeichnet, dass** der Schritt der Demultiplexierung und Demodulation (203) Informationen einer virtuellen Verbunduhr ausnutzt, wobei gegebenenfalls der Schritt der Erfassung und Datierung spezifische Verarbeitungen verwendet, um das Ergebnis dieser Ausnutzung zu verwenden.

44. Verfahren nach einem der Ansprüche 31 bis 43, **dadurch gekennzeichnet, dass** der Schritt der Demultiplexierung und Demodulation (203) Informationen einer virtuellen Verbunduhr ausnutzt, wobei gegebenenfalls der Schritt der Navigationsfilterung spezifische Verarbeitungen ausführt, um das Ergebnis dieser Ausnutzung zu verwenden.

45. Verfahren nach einem der Ansprüche 31 bis 44, **dadurch gekennzeichnet, dass** für wenigstens einen sogenannten Relaisobservablenkanal der Schritt der Demultiplexierung und Demodulation (203) eine sogenannte rekurrente Relaisdatierungsintegritätskontrolle enthält, die zur Ungültigmachung der Datierung führt, welche den Rekursionen klassierter Pulse in dem observablen Kanal und/oder der Zuordnung eines Qualitätsfaktors beigefügt ist, genannt berechnete Datierung gemäß einem vorbestimmten Zuverlässigkeitsindex.

46. Verfahren nach Anspruch 45, **dadurch gekennzeichnet, dass** die Relaisdatierungsintegritätskontrolle wenigstens eine der folgenden Bedingungen erfasst:
- eine Anomalie in der Sequenz elementarer Pulse,
- die identifizierte und unkontrollierte Präsenz eines Vielfachwegs zwischen der übertragenen Quelle und dem Relaisgerät und/oder zwischen dem Relaisgerät und dem mobilen Gerät,
- eine anomal erhöhte Bitfehlerrate oder Anomalien bei Paritätskontrollen im Verlauf der Demodulationsverarbeitung,
- eine Interferenz zwischen Signalen, die von mehreren Relais stammen, zwischen übertragenem Signal und direkten Positionsbestimmungssignalen und/oder zwischen dem Relaissignal und einem anderen interferierenden Signal, insbesondere einem parasitären spektralen Strahl, und
- einen Alarm oder eine andere Information, die repräsentativ ist für die Nicht-Integrität der Informationen, die in dem gepulsten Multisynchron-Multiquellensignal getragen werden.

47. Verfahren nach einem der Ansprüche 31 bis 46, **dadurch gekennzeichnet, dass** der Schritt der Identifizierung und der Positionsbestimmung der übertragenen Quellen (204) einen Schritt der Erfassung und/oder eine Speicherung von Nachrichten (2041) realisiert, wobei die Nachrichten repräsentativ sind für Modelle von Trajektorien der übertragenen Quellen und/oder Modelle von Entwicklungen ihrer sogenannten Quellenuhren.

48. Verfahren nach Anspruch 47, **dadurch gekennzeichnet, dass** die zu erfassenden und/oder zu speichernden Nachrichten in dem Schritt der Erfassung und/oder der Speicherung von Nachrichten (2041) von wenigstens einem der folgenden Ergebnisse herrühren:
- Ergebnisse einer Initialisierung und/oder Speicherung einer Datenbank in dem entfernten Gerät,
- Ergebnisse des Schritts der Demultiplexierung und Demodulation der erfassten elementaren Pulse oder Pulszüge,
- Ergebnisse des Empfangs einer drahtgebundenen oder drahtlosen Telekommunikation eines Servers solcher Nachrichten, wobei diese Telekommunikation periodisch oder auf Anfrage erfolgen kann, und
- in dem Fall, in dem die übertragenen Quellen zur Klasse der globalen Satellitennavigationsysteme gehören, Ergebnisse der Demodulation der Signale selbst mittels eines geeigneten Empfängers.

49. Verfahren nach einem der Ansprüche 31 bis 48, **dadurch gekennzeichnet, dass** der Schritt der Abgabe von Relaisobservablen (205) für wenigstens einen übertragenen Sensor des Relais ausgehend von Daten wenigstens einer der Gruppen der Relaisobservablenkanäle, die repräsentativ sind für den Sensor und für eine ausreichende Zahl von übertragenen Quellen im Hinblick auf die Zahl von Freiheitsgraden des Schwerpunkts des Relaisgeräts, wenigstens eine der folgenden Observablen berechnet:
- für jede Quelle den Pseudoabstand Quelle - Relais, berechnet mittels der Ergebnisse der Datierung wenigstens eines der Pulse auf der lokalen Zeitskala und seiner Abgabe auf der Quellenzeitskala,
- für jede Quelle die Differenz der Datierung wenigstens eines der Pulse zu wenigstens einem der folgenden,
- ausgehend von einer Leitquelle und für jede andere Quelle die Differenz der Datierung wenigstens eines der Pulse zu jener der Leitquelle, die repräsentativ ist für ein und dieselbe Zeitmarke, und
- ausgehend von einer Leitquelle und für jede andere Quelle, die doppelten Differenzen der Datierung wenigstens eines der Pulse zu wenigstens einem der folgenden bei gleicher bewerteter Größe für die Leitquelle für Pulse, die repräsentativ sind für ein und dieselbe Zeitmarke.

50. Verfahren nach einem der Ansprüche 31 bis 49, **dadurch gekennzeichnet, dass** der Schritt der Abgabe von Relaisobservablen (205) für wenigstens eine der vom Relais übertragenen Quellen ausgehend von Daten wenigstens einer der Gruppen von Relaisobservablenkanälen, die repräsentativ sind für die Quelle und eine ausreichende Zahl von Sensoren im Hinblick auf die Zahl der Rotationsfreiheitsgrade des Relaisgeräts (110) um seinen Schwerpunkt, wenigstens eine der folgenden Observablen berechnet:
- für jeden Sensor und für jede Quelle, den Pseudoabstand Quelle - Sensor des Relais, berechnet mittels der Ergebnisse der Datierung wenigstens eines der Pulse des Sensor-Quelle-Paars auf der lokalen Zeitskala und seiner Abgabe auf der Quellenzeitskala,
- für jeden Sensor und für jede Quelle, die Differenz der Datierung wenigstens eines der Pulse zu wenigstens einem der folgenden,
- für jede Quelle, ausgehend von einem Leitsensor, und für jeden anderen Sensor, die Differenz der Datierung wenigstens eines Pulses, der mit der Quelle und mit dem Sensor verbunden ist, zu jenem, der mit der gleichen Quelle verbunden ist, mittels des Leitsensors, wobei die Pulse repräsentativ sind für ein und dieselbe Zeitmarke der Quellen, und
- ausgehend von einem Leitsensor und einer Leitquelle und für jedes andere Quelle-Sensor-Paar, die Differenzen einer Quelle zur Leitquelle der Differenzen der Datierung wenigstens eines der verbundenen Pulse für die Quelle zu dem Sensor, zu jenem, der mit der gleichen Quelle und dem Leitsensor verbunden ist, wobei die Pulse repräsentativ sind für ein und dieselbe Zeitmarke der Quelle.

51. Verfahren nach einem der Ansprüche 31 bis 50, **dadurch gekennzeichnet, dass** für wenigstens einen Relaisobservablenkanal der Schritt der Abgabe der Relaisobservablen (205) eine sogenannte Relaismessungenintegritätskontrolle enthält, die wohl oder nicht zur Ungültigmachung der berechneten Observablen und/oder zur Hinzufügung eines sogenannten Relaisobservablenqualitätsfaktors führt, der gemäß einem vorbestimmten Zuverlässigkeitsindex berechnet wird.

52. Verfahren nach Anspruch 51, **dadurch gekennzeichnet, dass** die Relaismessungsintegritätskontrolle wenigstens einen der folgenden Parameter bei der Bewertung des Relaisobservablenqualitätsfaktors und/oder seiner Observablenungültigmachung verwendet:
- den Datierungsqualitätsfaktor
- die Verfügbarkeit einer präzisen Positionsbestimmung der Quelle im Hinblick auf die erwartete Leistung,
- einen vom übertragenen Signal herrührenden Qualitäts- oder Quellenausschlussindex,
- das Vorhandensein oder Nicht-Vorhandensein von adäquaten raumzeitlichen Korrekturen, und
- gegebenenfalls eine anomal erhöhte Bitfehlerrate bei der Erfassung und/oder der Demodulation von Nachrichten.

53. Verfahren nach einem der Ansprüche 31 bis 52, **dadurch gekennzeichnet, dass** der Schritt der Navigationsfilterung (206) eine Gewichtung der Relaisobservablen verwendet, wobei das Ergebnis hinsichtlich Präzision und Integrität der Abschätzung der Position und Geschwindigkeit und gegebenenfalls der Eigenschaft des Relaisgeräts von dieser Gewichtung abhängt.

54. Verfahren nach Anspruch 53 und nach einem der Ansprüche 51 bis 52, **dadurch gekennzeichnet, dass** der Schritt der Navigationsfilterung (206) den Relaisobservablenqualitätsfaktor verwendet, der vom Schritt der Abgabe der Relaisobservablen berechnet wird, um die Observablen zu gewichten, und den Ausschluss der von der Relaismessungsintegritätskontrolle ungültig gemachten Relaisobservablen bei der Abschätzung der Position, Geschwindigkeit und gegebenenfalls der Eigenschaft des Relais.

55. Verfahren nach einem der Ansprüche 31 bis 52, **dadurch gekennzeichnet, dass** der Schritt der Navigationsfilterung (206) eine Bewertung der Präzision und der Integrität der Position und Geschwindigkeit realisiert, der darin besteht, ein Schutzvolumen der Positionsbestimmung gemäß einem vorbestimmten Zuverlässigkeitsindex zu berechnen.

56. Verfahren nach Anspruch 53, **dadurch gekennzeichnet, dass** die Bewertung der Präzision und der Integrität die Redundanz der Observablen verwendet, um eine Verarbeitung der Erfassung und Isolierung unerwünschter Observabler durchzuführen, wobei das Ergebnis des Schritts der Navigationsfilterung (206) und/oder das Ergebnis des Schritts der Demultiplexierung und Demodulation (203) vom Ergebnis dieser Verarbeitung abhängen.

57. Vorrichtung zur Lokalisierung und Bestimmung der Eigenschaft (210) eines Geräts (020), das mit einem gepulsten Multisynchron-Multiquellen-Relais (100) nach Anspruch 30 verbunden ist, genannt Relaisgerät, das wohl oder nicht beweglich ist, mittels eines wohl oder nicht beweglichen entfernten Geräts (021), **dadurch gekennzeichnet, dass** das entfernte Gerät folgendes verwendet:
- eine Einrichtung zum Empfangen eines von dem Relaisgerät ausgesandten gepulsten Multisynchron-Multiquellensignals,
- eine Einrichtung zur Erfassung und Datierung sogenannter elementarer Pulse oder Pulszüge, die das gepulste Multisynchron-Multiquellensignal bilden,
- eine Einrichtung zur Demultiplexierung und Demodulation der elementaren Pulse oder Pulszüge in sogenannte Relaisobservablenkanäle, wobei die Relaisobservablenkanäle repräsentativ sind für höchstens eine der sogenannten übertragenen Quellen, die an der Erzeugung des gepulsten Multisynchron-Multiquellensignals teilgenommen haben,
- eine Einrichtung zur Identifizierung und Positionsbestimmung der übertragenen Quellen,
- für jeden Relaisobservablenkanal eine Einrichtung zur Abgabe von Relaisobservablen, und
- eine Einrichtung zur Navigationsfilterung, die auf die Relaisobservablen wirkt und die Berechnung der Position und/oder der Geschwindigkeit des Relaisgeräts und gegebenenfalls der Eigenschaft des Relais realisiert.

58. System, umfassend wenigstens eine Relaisvorrichtung, die ein Verfahren nach einem der Ansprüche 1 bis 29 ausführt, die zu wenigstens einer entfernten Vorrichtung hin sendet, welche dazu ausgelegt ist, ein Verfahren nach einem der Ansprüche 31 bis 54 auszuführen und Zugriffe von Punkt zu Multipunkt und/oder von Multipunkt zu Punkt und/oder von Multipunkt zu Multipunkt erlaubt.

59. Verfahren zur hybriden Positionsbestimmung eines mobilen Geräts, unterstützt durch ein gepulstes Multisynchron-Multiquellen-Relais (100) nach Anspruch 30, **dadurch gekennzeichnet, dass** es die folgenden Schritte umfasst:
- einen Schritt des sogenannten Relaisempfangs (301) durch einen Empfangssensor (C), der mit dem mobilen Gerät verbunden ist, für den Empfang eines sogenannten gepulsten Multisynchron-Multiquellensignals (150), das von dem Relais (100) ausgesandt wird, für wenigstens eine sogenannte übertragene Quelle aus einer Mehrzahl von Positionsbestimmungssignalen,
- einen Schritt des sogenannten direkten Empfangs (302) durch einen Empfangssensor, der mit dem mobilen Gerät verbunden ist, für den Empfang von Positionsbestimmungssignalen (050), die von einer sogenannten direkten Quelle aus einer Mehrzahl von Quellen von Positionsbestimmungssignalen herrühren,
- einen Schritt der hybriden Multikanalverarbeitung (303) wenigstens eines Positionsbestimmungssignals auf wenigstens einem sogenannten direkten Empfangskanal und wenigstens eines gepulsten Multisynchron-Multiquellensignals auf wenigstens einem sogenannten Relaisobservablenkanal, wobei der direkte Empfangskanal und der Relaisobservablenkanal parallel arbeiten,
- einen Schritt der Identifizierung und Positionsbestimmung der direkten und übertragenen Quellen (304),
- einen Schritt der Abgabe von sogenannten Relaisobservablen und sogenannten direkten Observablen (305) in Abhängigkeit von den Ergebnissen der Verarbeitung der Relaisobservablenkanäle bzw. der Ergebnisse der Verarbeitung der direkten Empfangskanäle,
- einen Schritt der hybriden Navigationsfilterung (306), der gemeinsam die direkten Observablen und die Relaisobservablen verwendet und eine Abschätzung der Position, der Geschwindigkeit und der lokalen Zeit des mobilen Geräts realisiert.

60. Verfahren nach Anspruch 59, **dadurch gekennzeichnet, dass** in dem Schritt der hybriden Multikanalverarbeitung (303) die Verarbeitung der gepulsten Multisynchron-Multiquellensignale bei den Relaisobservablenkanälen und die Verarbeitung der Positionsbestimmungssignale bei den direkten Empfangskanälen ein und dieselbe lokale Zeitskala (3033) und/oder ein und denselben lokalen Oszillator als Zeitbasis verwenden.

61. Verfahren nach einem der Ansprüche 59 bis 60, **dadurch gekennzeichnet, dass** der Schritt der hybriden Multikanalverarbeitung (303) in der Verarbeitung der gepulsten Multisynchron-Multiquellensignale eine Verarbeitung der Erfassung und Datierung elementarer Pulse (3031) und/oder elementarer Pulszüge nach einem der Ansprüche 32 bis 33 umfasst, gefolgt von einer Verarbeitung der Demultipelxierung und Demodulation (3032) bei den Relaisobservablenkanälen nach einem der Ansprüche 34 bis 46.

62. Verfahren nach Anspruch 61, **dadurch gekennzeichnet, dass** die Verarbeitung der Erfassung und Datierung der elementaren Pulse (3031) oder elementaren Pulszüge, die in den gepulsten Multisynchron-Multiquellensignalen enthalten sind, eine lokale Zeitskala oder einen lokalen Oszillator verwendet, der abhängt von den Ergebnissen der Abschätzung der lokalen Zeit, die in dem Schritt der hybriden Navigationsfilterung realisiert wird.

63. Verfahren nach einem der Ansprüche 59 bis 62, **dadurch gekennzeichnet, dass** für jeden Verarbeitungskanal sowohl bei direktem Empfang als auch für Relaisobservable der Schritt der hybriden Multikanalverarbeitung (303) eine sogenannte Kanalintegritätskontrolle enthält, die zur Ungültigmachung der Ergebnisse der Verarbeitung bei dem Kanal und/oder zur Zuordnung eines sogenannten berechneten Kanalqualitätsfaktors gemäß einem vorbestimmten Zuverlässigkeitsindex führt und auf eine Datierung eines bekannten Ereignisses des verarbeiteten Signals auf der lokalen Zeitskala angewandt wird.

64. Verfahren nach Anspruch 63, **dadurch gekennzeichnet, dass** die Kanalintegritätskontrolle bei den direkten Empfangskanälen wenigstens eine der folgenden Bedingungen erfasst:
- einen oder mehrere Vielfachwege im Schritt der direkten Verarbeitung,
- eine Interferenz zwischen Positionsbestimmungssignalen und/oder zwischen dem direkten Positionsbestimmungssignal und dem gepulsten Multisynchron-Multiquellensignal und/oder zwischen dem direkten Positionsbestimmungssignal und einem anderen interferierenden Signal, insbesondere einem parasitären spektralen Strahl, und
- einen Alarm oder eine andere Information, die repräsentativ ist für die Nicht-Integrität der Informationen, die in wenigstens einem der Positionsbestimmungssignale getragen werden.

65. Verfahren nach einem der Ansprüche 63 bis 64, **dadurch gekennzeichnet, dass** die Kanalintegritätskontrolle bei den Relaisobservablenkanälen wenigstens eine der folgenden Bedingungen erfasst:
- einen oder mehrere Vielfachwege zwischen der übertragenen Quelle und dem Relaisgerät und/oder zwischen dem Relaisgerät und dem mobilen Gerät,
- eine anomal erhöhte Bitfehlerrate oder Anomalien bei Paritätskontrollen beim Ergebnis des Demodulationsschritts,
- eine Interferenz zwischen Signalen, die von mehreren Relais herrühren, zwischen übertragenem Signal und direkten Positionsbestimmungssignalen und/oder zwischen dem Relaissignal und einem anderen interferierenden Signal, insbesondere einem parasitären spektralen Strahl, und
- einen Alarm oder eine andere Information, die repräsentativ ist für die Nicht-Integrität der Informationen, die in dem gepulsten Multisynchron-Multiquellensignal getragen werden.

66. Verfahren nach einem der Ansprüche 59 bis 65, **dadurch gekennzeichnet, dass** der Schritt der Identifizierung und der Positionsbestimmung der Quellen (304) die Ergebnisse der Abschätzungen der Position, Geschwindigkeit und Zeit des Schritts der hybriden Navigationsfilterung verwendet und Vorhersagen der Positionsbestimmung der übertragenen Quellen (3043) und der direkten Quellen (3044) berechnet, wobei die Verarbeitungen des Schritts der hybriden Multikanalverarbeitung (303) vom Ergebnis der Vorhersagen abhängen.

67. Verfahren nach einem der Ansprüche 59 bis 66, **dadurch gekennzeichnet, dass** die Vorhersagen der Positionsbestimmung der direkten (3044) oder übertragenen (3043) Quellen raumzeitliche Korrekturen verwenden, die aus der Verarbeitung wenigstens eines gepulsten Multisynchron-Multiquellensignals bei wenigstens einem Relaisobservablenkanal resultieren.

68. Verfahren nach einem der Ansprüche 59 bis 67, **dadurch gekennzeichnet, dass** der Schritt der Abgabe der Observablen (305) für die direkten Empfangskanäle raumzeitliche Korrekturen verwendet, die aus der Verarbeitung wenigstens eines gepulsten Multisynchron-Multiquellensignals (150) bei wenigstens einem Relaisobservablenkanal resultieren.

69. Verfahren nach einem der Ansprüche 59 bis 68, **dadurch gekennzeichnet, dass** der Schritt der Identifizierung und der Positionsbestimmung der Quellen (304) die Identifizierung der sogenannten gemeinsamen Quellen (3045) zwischen den übertragenen Quellen und den direkten Quellen realisiert, ferner, wenn es existiert, eine Zuordnung der direkten Empfangskanäle und der entsprechenden Relaisobservablenkanäle realisiert, und für die zugeordneten Kanäle eine Steuerung und eine Kontrolle von Optimierungen (3046) der hybriden Multikanalverarbeitungen erstellt.

70. Verfahren nach Anspruch 69, **dadurch gekennzeichnet, dass** die Kontrolle der Optimierungen (3046) der hybriden Multikanalverarbeitungen vom Vergleich wenigstens eines der Kriterien aus der folgenden Liste bei jedem der zugeordneten Kanäle abhängt:
- das Signal-/Rauschverhältnis der Signalverarbeitung
- die Fehlerrate bei Kontrollen der Parität oder der Fehlerkorrekturcodes in den Demodulationsverarbeitungen,
- das Vorhandensein und die Qualität der Vorhersagen der Positionsbestimmung der Quellen,
- die Parameter eines statistischen Modells des Rauschens und des Fehlers, mit dem die Observablen des Kanals versehen sind,
- die Ergebnisse der Kanalintegritätskontrolle und insbesondere die Ungültigmachung, und
- die Ergebnisse einer Positionsintegritätskontrolle und insbesondere einen Observablenausschluss.

71. Verfahren nach einem der Ansprüche 69 bis 70, **dadurch gekennzeichnet, dass** für wenigstens ein Paar von zugeordneten Kanälen die Steuerung der Optimierungen (3046) der hybriden Multikanalverarbeitungen wenigstens eine der Abhängigkeiten der folgenden Liste zwischen den Verarbeitungen des gepulsten Multisychron-Multiquellensignals und den Verarbeitungen der Positionsbestimmungssignale erzeugt:
- die Verarbeitung des gepulsten Multisynchron-Multiquellensignals hängt ab von den Vorhersagen der Positionen der direkten Quellen für die Erfassung der elementaren Pulse oder elementaren Pulszüge,
- die Verarbeitung des gepulsten Multisynchron-Multiquellensignals hängt ab von den Vorhersagen der Positionen der direkten Quellen für die Demultiplexierung und die Demodulation,
- die Verarbeitung des Positionsbestimmungssignals hängt ab von den Vorhersagen der Positionen der übertragenen Quellen,
- die Verarbeitung des gepulsten Multisynchron-Multiquellensignals hängt ab von den Ergebnissen der Verarbeitung des Positionsbestimmungssignals, und
- die Verarbeitung des Positionsbestimmungssignals hängt ab von den Ergebnissen der Verarbeitung des gepulsten Multisynchron-Multiquellensignals.

72. Verfahren nach einem der Ansprüche 69 bis 71, **dadurch gekennzeichnet, dass** für wenigstens einen sogenannten direkten Empfangskanal, der einem Relaisobservablenkanal zugeordnet ist, der Schritt der hybriden Multikanalverarbeitung (303) eine zeitliche Korrelation mit einer Replik des Telemetriecodes für die Erfassung und/oder die Verfolgung des Positionsbestimmungssignals verwendet, und **dadurch gekennzeichnet, dass** die Ergebnisse des zugeordneten Relaisobservablenkanals direkt auf die Erzeugung der Replik wirken, wobei wenigstens eine der folgenden Maßnahmen verwendet wird:
- direkte Positionsbestimmung der Replik bei einer Position nahe jener, die auf dem zugeordneten Relaisobservablenkanal geortet wurde,
- Regelung der Abtastgeschwindigkeit der Replik als Funktion der zeitlichen Differenzen zwischen Pulsen, die auf dem zugeordneten Relaisobservablenkanal geortet wurden,
- Regelung der Dauern, Sequenzen und Synchronisierungen von Operationen kohärenter Integrationen und nicht-kohärenter Integrationen als Funktion der Replikabstände, die mit dem zugeordneten Relaisobservablenkanal geortet wurden,
- Regelung der Filterungsparameter und Reihenfolgen der Steuerungsschleife der Verarbeitungen der Verfolgung des Positionsbestimmungssignals als Funktion der Replikabstände, die auf dem zugeordneten Relaisobservablenkanal geortet wurden, und
- Regelung der Parameter, die verwendet werden bei den Berechnungen der Energien des Signals als Ergebnis der Entspreizungsoperation, und die die globale Steuerung der Moden der direkten Verarbeitungen als Funktion der auf dem zugeordneten Relaisobservablenkanal georteten Abstände erlauben.

73. Verfahren nach einem der Ansprüche 69 bis 71, **dadurch gekennzeichnet, dass** für wenigstens einen direkten Empfangskanal, der einem Relaisobservablenkanal zugeordnet ist, der Schritt der hybriden Multikanalverarbeitung (303) eine Frequenzkorrelation mit einer Replik des Telemetriecodes für die Erfassung und/oder die Verfolgung des Positionsbestimmungssignals verwendet, und **dadurch gekennzeichnet, dass** die Ergebnisse des zugeordneten Relaisobservablenkanals direkt auf die Erzeugung des Frequenzspektrums der Replik wirken, wobei ihre eigenen Ergebnisse bei der Suche nach Periodizitäten und Quellenseperationen verwendet werden.

74. Verfahren nach einem der Ansprüche 59 bis 73, **dadurch gekennzeichnet, dass** der Schritt der Identifizierung und der Positionsbestimmung der Quellen (304) einen Schritt der Erfassung und/oder eine Speicherung von Nachrichten realisiert, wobei die Nachrichten repräsentativ sind für Modelle von Trajektorien der übertragenen Quellen und /oder Modelle von Entwicklungen ihrer sogenannten Quellenuhren und in gleicher Weise von den Demodulationen der Relaisobservablenkanäle oder der direkten Empfangskanäle herrühren.

75. Verfahren nach einem der Ansprüche 59 bis 74, **dadurch gekennzeichnet, dass** der Schritt der Abgabe von Observablen (305) gleichzeitig die Ergebnisse der Schritte der Identifizierung und der Positionsbestimmung der Quellen (304) und der hybriden Multikanalverarbeitung (303) verwendet, um Pseudodistanzen und Pseudogeschwindigkeiten zwischen Quellen und mobilem Gerät zu berechnen, für die Relaisobservablenkanäle ebenso wie für die direkten Empfangskanäle.

76. Verfahren nach einem der Ansprüche 59 bis 75, **dadurch gekennzeichnet, dass** für jeden Relaisobservablenkanal und jeden direkten Empfangskanal der Schritt der Abgabe von Observablen (305) eine sogenannte Messungsintegritätskontrolle enthält, die wohl oder nicht zur Ungültigmachung der berechneten Observablen und/oder zur Hinzufügung eines sogenannten Messschutzbereichs gemäß einem vorbestimmten Zuverlässigkeitsindex führt.

77. Verfahren nach Anspruch 76, **dadurch gekennzeichnet, dass** die Messintegritätskontrolle wenigstens einen der folgenden Parameter bei ihrer Berechnung des Messschutzbereichs und/oder ihrer Observablenungültigmachung verwendet:
- den Kanalqualitätsfaktor,
- die Verfügbarkeit einer präzisen Positionsbestimmung der Quelle im Hinblick auf die erwartete Leistung,
- eine Qualitäts- oder Quellenauschlussinformation, die vom übertragenen Signal oder vom Positionsbestimmungssignal herrührt,
- das Vorhandensein von raumzeitlichen Korrekturen, und
- gegebenenfalls eine anomal erhöhte Bitfehlerrate bei der Erfassung und/oder der Demodulation der Nachrichten.

78. Verfahren nach einem der Ansprüche 76 bis 77, **dadurch gekennzeichnet, dass** der Schritt der hybriden Navigationsfilterung (306) die Ungültigmachung der Observablen wie einen Ausschluss derselben am Beginn der hybriden Navigationsfilterung und den Messschutzbereich wie eine Gewichtung der Observablen bei der hybriden Navigationsfilterung verwendet.

79. Verfahren nach einem der Ansprüche 59 bis 78, **dadurch gekennzeichnet, dass** der Schritt der hybriden Navigationsfilterung (306) eine Bewertung der Präzision und der Integrität der Abschätzung der Position, Geschwindigkeit und Zeit realisiert, die darin besteht, ein Schutzvolumen der Positionsbestimmung gemäß einem vorbestimmten Zuverlässigkeitsindex zu berechnen.

80. Verfahren nach Anspruch 79, **dadurch gekennzeichnet, dass** die Bewertung der Präzision und der Integrität die Redundanz der Observablen verwendet, um eine Verarbeitung der Erfassung und Isolierung unerwünschter Observabler durchzuführen, wobei das Ergebnis des Schritts der hybriden Navigationsfilterung (306) und/oder das Ergebnis des Schritts der hybriden Multikanalverarbeitung (303) vom Ergebnis dieser Verarbeitung abhängt.

81. Verfahren nach einem der Ansprüche 59 bis 80, **dadurch gekennzeichnet, dass** wenigstens eine der Quellen von Positionsbestimmungssignalen zu einem globalen Satellitennavigationssystem gehört.

82. Vorrichtung zur hybriden Positionsbestimmung (300) eines mobilen Geräts, unterstützt von einem gepulsten Multisychron-Multiquellen-Relais (100) nach Anspruch 30, **dadurch gekennzeichnet, dass** es umfasst:
- eine mit dem mobilen Gerät verbundene Empfangseinrichtung, die dazu ausgelegt ist, ein gepulstes Multisynchron-Multiquellensignal zu empfangen, das von dem Relaisgerät ausgesandt wird,
- eine mit dem mobilen Gerät verbundene Empfangseinrichtung, die dazu ausgelegt ist, Positionsbestimmungssignale zu empfangen, die von einer Quelle aus einer Mehrzahl von Quellen von Positionsbestimmungssignalen herrühren,
- eine Einrichtung zur hybriden Multikanalverarbeitung wenigstens eines Positionsbestimmungssignals auf wenigstens einem sogenannten direkten Empfangskanal und wenigstens eines gepulsten Multisynchron-Multiquellensignals auf wenigstens einem sogenannten Relaisobservablenkanal, wobei der direkte Empfangskanal und der Relaisobservablenkanal parallel arbeiten,
- eine Einrichtung zur Identifizierung und zur Positionsbestimmung der direkten und übertragenen Quellen,
- eine Einrichtung zur Abgabe von sogenannten Relais- und sogenannten direkten Observablen in Abhängigkeit von den Ergebnissen der Verarbeitung der Relaisobservablenkanäle bzw. den Ergebnissen der Verarbeitung der direkten Empfangskanäle, und
- eine Einrichtung zur hybriden Navigationsfilterung, die gemeinsam die direkten Observablen und die Relaisobservablen verwendet und eine Abschätzung der Position, der Geschwindigkeit und der lokalen Zeit des mobilen Geräts realisiert.
